# EUROPEAN PATENT APPLICATION

(11) **EP 4 574 561 A1**
(43) Date of publication of application: **25.06.2025**
(21) Application number: 23863592.4
(22) Date of filing: 08.09.2023
(51) Int. Cl.: B60N 2/28, A01K 1/02, A47D 13/02

(54) **CARRIER AND STRAP GUIDANCE MECHANISM THEREOF**

(30) Priority: 08.09.2022 CN 202211105958; 08.11.2022 CN 202211393615; 18.01.2023 CN 202310085067; 14.02.2023 CN 202310115845; 10.05.2023 CN 202310523976; 20.06.2023 CN 202310739208; 04.07.2023 CN 202310818408
(71) Applicant: Jani International Pte. Ltd., Singapore 569874 (SG)
(72) Inventor: GUO, Zhengwen, Hong Kong 999077 (CN); CHEN, Yingzhong, Hong Kong 999077 (CN); ZHU, Wanquan, Hong Kong 999077 (CN)
(74) Representative: Pfenning, Meinig & Partner mbB
(86) International application number: PCT/SG2023/050611
(87) International publication number: WO 2024/054160

(57) **Abstract**

The present disclosure provides a carrier. The carrier comprises a box body, which is provided with a bottom and a peripheral wall connected with the bottom, an accommodation space being defined by the bottom and the peripheral wall; a support device, which supports the box body and comprises a first shelf, the first shelf being combined with the box body and being arranged around the peripheral wall of the box body; and a strap assembly, which comprises a strap body, the strap body being separably connected to the first shelf. The present disclosure further provides a strap guidance mechanism.

## Description

### TECHNICAL FIELD

The present disclosure relates to carriers, in particular to carriers suitable for use on a vehicle seat.

### BACKGROUND

In recent years, more and more caregivers have been using carriers for children or pets to reduce their burden when going out. However, when the moving distance is long and a vehicle needs to be coordinated for transportation, the existing portable carrier may not able to be stably fixed in the vehicle, causing the carrier to tilt or even fall during the movement of the vehicle, thereby posing a safety risk in use. Therefore, how to stably fix the carrier to a vehicle or moving apparatus remains a problem that needs to be solved urgently.

### SUMMARY

The present disclosure provides a carrier. The carrier includes: a box body, provided with a bottom and a peripheral wall connected to the bottom, where the bottom and the peripheral wall define an Accommodation space; a bracket apparatus, supporting the box body, where the bracket apparatus includes a first bracket, where the first bracket is bonded to the box body and arranged around the peripheral wall of the box body; and a strap assembly, including a strap body with at least two ends, where the at least two ends are detachably connected to the first bracket.

In an embodiment, the carrier further includes: a first connector, provided on the first bracket, where the first connector is detachably connected to a second connector provided correspondingly on the strap body.

In an embodiment, the strap assembly includes a shoulder belt for a user to wear, a strap body of the shoulder belt has two ends, and the two ends are respectively provided with one second connector; and the first bracket is provided with two first connectors, which are symmetrically arranged on two opposite short sides of the first bracket and are detachably connected to the second connectors arranged on the two ends, respectively.

In an embodiment, the strap assembly includes a fixing rope for fitting with a vehicle seat, and two second connectors are provided on a strap body of the fixing rope; and the first bracket is provided with two first connectors, which are symmetrically provided on a long side of the first bracket and are detachably connected to the two second connectors of the fixing rope, respectively.

In an embodiment, the strap body of the fixing rope has two ends, and each end is provided with one second connector.

In an embodiment, the strap body of the fixing rope has two ends, and each end is provided with one second connector.

In an embodiment, the strap body of the fixing rope is in a Y-shape and has a first end and two second ends, the first end fits with the vehicle seat, and the two second ends are respectively provided with one second connector.

In an embodiment, one of the first connector and the second connector is a snap ring, and the other of the first connector and the second connector is a snap hook.

In an embodiment, the bracket apparatus further includes: at least two second brackets connected to the first bracket, where the at least two second brackets are separated from each other along a longitudinal axis direction of the box body, and the at least two second brackets are bonded to the box body and extend from one side of the peripheral wall of the box body along a transverse axis direction of the box body through the bottom of the box body to another side of the peripheral wall of the box body; and the first connector is provided at a position of the first bracket adjacent to the second bracket.

In an embodiment, a positioning groove is provided on an outer side of the peripheral wall of the box body for accommodating and positioning the first connector to avoid the first connector from moving excessively; and/or a positioning protrusion is provided on the first bracket for avoiding the first connector from moving excessively.

In an embodiment, at least two ends of the strap body are connected to the first bracket in a wrap-around manner.

The present disclosure further discloses a carrier. The carrier includes: a box body, defining an accommodation space; a bracket apparatus, including a first bracket, where the first bracket is bonded to the box body and arranged around a peripheral wall of the box body; and mating parts, symmetrically provided on two opposite sides of the carrier and arranged on the first bracket, for connecting with an adjusting strap assembly, where the adjusting strap assembly includes a connecting tether and a connecting member provided at one end of the connecting tether, the end of the connecting tether is connected to the mating part via the connecting member, and the other end of the connecting tether is connected to a vehicle seat.

In an embodiment, the mating parts are arranged on two short sides of the carrier, and at least one mating part is provided on each short side.

In an embodiment, the mating parts are arranged on two long sides of the carrier, and at least one mating part is provided on each long side.

In an embodiment, two mating parts are symmetrically provided on each of the long sides with respect to a center line of the long side.

In an embodiment, when the carrier is positioned with the short side against the vehicle seat, the adjusting strap assembly is connected between a mating part proximate the vehicle seat and the vehicle seat.

In an embodiment, when the carrier is positioned with the short side against the vehicle seat, one end of the adjusting strap assembly is connected to a mating part away from the vehicle seat, and the other end passes between a handle located at the center line and the box body and is connected to the vehicle seat.

In an embodiment, the carrier includes a handle, and the mating part is arranged below a pivot axis of the handle; and/or the mating part is arranged on a center line of the long side.

In an embodiment, the bracket apparatus further includes: at least two second brackets connected to the first bracket, where the at least two second brackets are separated from each other along a longitudinal axis direction of the box body, and the at least two second brackets are bonded to the box body and extend from one side of the peripheral wall of the box body along a transverse axis direction of the box body through the bottom of the box body to another side of the peripheral wall of the box body; and the mating part is provided at a position of the first bracket adjacent to the second bracket.

The present disclosure further provides a carrier. The carrier includes: a box body, defining an accommodation space; a bracket apparatus, at least partially surrounding and supporting the box body; a fixing strap assembly including a strap body, a first connecting end and a second connecting end, where the strap body is connected between the first connecting end and the second connecting end, when the carrier is placed on a vehicle seat, at least a portion of the strap body passes around a bottom of the box body from a side of the box body away from a backrest of the vehicle seat, and the first connecting end and the second connecting end are respectively connected to the vehicle seat to fix the carrier to the vehicle seat.

In an embodiment, the carrier further includes: at least one strap guiding mechanism, provided on the bracket apparatus and/or the box body, for the fixing strap assembly to pass through, so that at least one connecting point exists between the fixing strap assembly and the carrier.

In an embodiment, the bracket apparatus includes a first bracket and a second bracket, the first bracket is bonded to the box body and arranged around a peripheral wall of the box body, the second bracket is connected to the first bracket and bonded to the box body, and the second bracket extends from one side of the peripheral wall of the box body along a transverse axis direction of the box body through the bottom of the box body to another side of the peripheral wall of the box body. When the carrier is placed on the vehicle seat, the at least one strap guiding mechanism is provided on a side of the first bracket away from a backrest of the vehicle seat, and/or the at least one strap guiding mechanism is provided on a side of the second bracket away from the backrest of the vehicle seat.

In an embodiment, the at least one strap guiding mechanism includes a fixing buckle, the fixing buckle is a C-shaped structure, and the fixing strap assembly passing through the fixing buckle is constrained in a space formed by the C-shaped structure.

In an embodiment, the fixing strap assembly has one first connecting end and at least two second connecting ends, a number of the fixing buckles is proportional to a number of the second connecting ends, the first connecting end is connected to the top of the vehicle seat, the strap body passes through the corresponding fixing buckles and passes around the bottom of the box body, and is connected to the vehicle seat via the at least two second connecting ends.

In an embodiment, the strap body of the fixing strap assembly is in an inverted Y shape, and has one first connecting end and two second connecting ends.

In an embodiment, the carrier further includes a handle and/or a canopy, and the strap guiding mechanism is provided on the handle and/or the canopy.

In an embodiment, the bracket apparatus includes a third bracket, the third bracket is provided at the bottom of the box body and is spaced apart from the box body, and the at least one strap guiding mechanism is provided on the third bracket.

In an embodiment, the third bracket is provided with a plurality of symmetrically distributed fixing sheets, the carrier includes a plurality of the strap guiding mechanisms, and each strap guiding mechanism is correspondingly provided on one of the fixing sheets.

In an embodiment, the third bracket is provided with a plurality of symmetrically distributed fixing sheets, the carrier includes a plurality of the strap guiding mechanisms, and two ends of each strap guiding mechanism are respectively provided on two opposite fixing sheets.

In an embodiment, the third bracket is further provided with a locking seat, the bottom of the box body is provided with a locking groove, and the locking seat is inserted into the locking groove.

In an embodiment, the fixing strap assembly includes a restraining strap assembly and an extending component, the restraining strap assembly includes at least one restraining strap and the first connecting end located at an end of the restraining strap, the restraining strap passes through the strap guiding mechanism, and the first connecting end is detachably connected to an ISOFIX socket of the vehicle seat.

In an embodiment, a portion of the restraining strap is located on a side of the third bracket away from the box body, or a portion of the restraining strap is located between the third bracket and the box body.

In an embodiment, the bracket apparatus includes a third bracket, the third bracket is provided at the bottom of the box body, and the strap guiding mechanism is provided on the third bracket and/or the box body.

In an embodiment, the carrier includes two strap guiding mechanisms, where the two strap guiding mechanisms are respectively provided on two opposite sides of the third bracket, the third bracket is provided with two opposite fixing sheets, and each strap guiding mechanism is fixed to one fixing sheet.

In an embodiment, each of the strap guiding mechanisms includes a bottom shell and a top shell, the bottom shell and the top shell are fixedly connected, and the bottom shell is provided on the box body. The top shell has a receiving groove for receiving the fixing sheet, and the fixing sheet is inserted into the receiving groove of the top shell and fixed to the top shell.

In an embodiment, the bracket apparatus includes a canopy framecanopy frame and a guiding member, the canopy frame supports a canopy covered above the box body, and an end of the canopy frame is pivotally connected to the guiding member, and the at least one strap guiding mechanism includes a first strap guiding mechanism provided on the guiding member.

In an embodiment, the fixing strap assembly includes a shoulder strap and a waist strap connected to each other, and the first strap guiding mechanism and the guiding member jointly define at least one channel for the shoulder strap to pass through.

In an embodiment, a third convex rib and a fourth convex rib are respectively provided on side walls opposite to each other in the channel, and the third convex rib and the fourth convex rib are alternately provided in an extending direction of the shoulder strap.

In an embodiment, the bracket apparatus includes a first bracket and two second brackets, the first bracket is arranged around a peripheral wall of the box body, the two second brackets are connected to the first bracket and are provided separately from each other along a longitudinal axis direction of the box body, and the waist strap is wrapped around one side of the two second brackets.

In an embodiment, the strap guiding mechanism includes a first strap guiding mechanism and a second strap guiding mechanism provided on the bracket apparatus, the fixing strap assembly includes a shoulder strap and a waist strap connected to each other, and the shoulder strap passes through the first strap guiding mechanism, and/or the waist strap passes through the second strap guiding mechanism.

In an embodiment, the bracket apparatus includes a third bracket, the third bracket is provided at the bottom of the box body and is spaced apart from the box body, the at least one strap guiding mechanism includes a second strap guiding mechanism provided on the third bracket, and the fixing strap assembly includes a waist strap extended through the second strap guide mechanism.

The present disclosure further provides a carrier. The carrier includes: a box body, includes a body and a bottom supporting member, where the body is detachably covered on the bottom supporting member, the bottom supporting member is provided with at least one connecting portion that fits with a fixing strap assembly to secure the carrier to a vehicle seat, and the at least one connecting portion is provided at an outward circumference on two sides of the bottom supporting member.

In an embodiment, the carrier further includes: a bracket apparatus, provided below the bottom supporting member, where the box body is disposed on the bracket apparatus via the bottom supporting member, and the bracket apparatus is capable of engaging with an engaging portion of a fixing seat assembly mounted to a vehicle.

In an embodiment, the bottom supporting member has a recess portion at the at least one connecting portion, and the at least one connecting portion has an engaging rod, and the engaging rod is located in the recess portion.

In an embodiment, when the carrier is secured to the vehicle seat, one end of the fixing strap assembly is connected to the at least one connecting portion of the bottom supporting member from a side of the box body away from a backrest of the vehicle seat, and the other end of the fixing strap assembly passes through a handle provided on the top of the carrier and is connected to the vehicle seat.

In an embodiment, a bottom of the carrier is further provided with a fixing seat assembly, and the fixing seat assembly is secured to the vehicle seat; or the bottom of the carrier is further provided with a connecting assembly, one end of the connecting assembly is connected to the carrier, and the other end of the connecting assembly is connected to the vehicle seat.

The present disclosure further provides a carrier. The carrier includes: a box body, including a body and a bottom supporting member, where the body is detachably covered on the bottom supporting member; and at least one strap guiding mechanism, provided on at least one of the side, bottom and top of the carrier, for guiding a fixing strap assembly passing through the strap guiding mechanism, so that the fixing strap assembly is bonded to the carrier at at least one position.

In an embodiment, the at least one strap guiding mechanism includes a plurality of second strap guiding mechanisms symmetrically provided at the bottom of the carrier, each of the second strap guiding mechanisms includes a shell, the shell defines a channel for the fixing strap assembly to pass through, and the channel has a first port and a second port.

In an embodiment, the plurality of the second strap guiding mechanisms are symmetrically provided at a bottom edge of the carrier at a side away from a backrest of a vehicle seat; and/or the plurality of second strap guiding mechanisms include four second strap guiding mechanisms symmetrically arranged in pairs at the bottom of the carrier.

In an embodiment, the fixing strap assembly passes through the first port and the second port when the fixing strap assembly secures the carrier to the vehicle seat.

In an embodiment, the shell of the second strap guiding mechanism includes a bottom shell and a top shell connected to the bottom shell, and the bottom shell and the top shell define the channel.

In an embodiment, the channel further includes a side introduction port connected to the first port and the second port, and the side introduction port includes a guiding slope.

In an embodiment, a first convex rib and a second convex rib are respectively provided on side walls opposite to each other in the channel, and the first convex rib and the second convex rib are alternately provided in an extending direction of the fixing strap assembly.

In an embodiment, the second strap guiding mechanism further includes a cam provided in the channel, where the cam has a working position and a disabled position; in the working position, the cam presses the fixing strap assembly against the side wall of the channel; and in the disabled position, the cam releases pressing on the fixing strap assembly, and the fixing strap assembly is able to move freely relative to the strap guiding mechanism.

In an embodiment, the at least one strap guiding mechanism includes a first strap guiding mechanism provided on the side and/or the top of the carrier, and the first strap guiding mechanism is constructed as a C-shaped structure with an opening.

In an embodiment, the fixing strap assembly is engaged in an accommodation space of the C-shaped structure to limit a relative movement of the fixing strap assembly and the carrier in the left-right direction of the vehicle seat.

In an embodiment, one end of the fixing strap assembly is connected to the vehicle seat above the carrier, and the other end of the fixing strap assembly is connected to the vehicle seat below the carrier, and when the carrier is placed on the vehicle seat, the fixing strap assembly passes through a handle provided on the top of the carrier, wraps around to a side of the carrier away from a backrest of the vehicle seat, and passes through the first strap guiding mechanism and/or a second strap guiding mechanism symmetrically provided at the bottom of the carrier.

The present disclosure further provides a carrier. The carrier includes: a carrying portion defining a carrying surface; and a bracket apparatus, provided on a bottom surface of the carrying portion to support the carrying portion, where the bottom surface is a surface opposite to the carrying surface. The carrier is secured to the vehicle seat via a fixing strap assembly, and the fixing strap assembly is detachably connected to the bracket apparatus from a side of the carrier away from a backrest of a vehicle seat.

In an embodiment, the fixing strap assembly includes a first tether and a second tether, and one end of each of the first tether and the second tether is detachably connected to the bracket apparatus from the side of the carrier away from the backrest of the vehicle seat.

In an embodiment, the fixing strap assembly further includes a connecting tether and a length adjuster, the respective other ends of the first tether and the second tether are connected to a same side of the length adjuster, one end of the connecting tether extends through the other side of the length adjuster to form an adjusting end, and the other end of the connecting tether is fixedly connected to the vehicle seat.

In an embodiment, the fixing strap assembly further includes a length adjuster, the respective other ends of the first tether and the second tether are connected to respective sides of the length adjuster, and either or both of the first tether or the second tether extend through the length adjuster with the respective other ends to form an adjusting end.

In an embodiment, the carrier is mounted to a fixing seat assembly by the bracket apparatus for being secured to the vehicle seat.

In an embodiment, the fixing strap assembly further includes a supporting structure connected between the first tether and the second tether.

In an embodiment, the carrier further includes a connecting assembly passing between a bottom surface of the carrying portion and the vehicle seat, and the connecting assembly is connected between the fixing strap assembly and the vehicle seat.

In an embodiment, the fixing strap assembly and the connecting assembly are arranged separately from each other.

In an embodiment, the connecting assembly includes two connecting webbing straps, each of the two connecting webbing straps is provided with a first connecting member at one end as a connecting end, and each of the two connecting webbing straps is provided with a second connecting member at the other end as a fixing end. The fixing ends of the two connecting webbing straps are connected to the vehicle seat via their respective second connecting members, the two connecting webbing straps extend in a transverse direction underneath the bracket apparatus, and are connected to corresponding connecting portions of the bracket apparatus via their respective first connecting members at the connecting ends. The first tether and the second tether of the fixing strap assembly are respectively connected to the corresponding connecting portions.

In an embodiment, the fixing strap assembly and the connecting assembly form an integral structure.

In an embodiment, the connecting assembly includes two connecting webbing straps, each of the two connecting webbing straps is provided with a second connecting member at one end as a fixing end, and the other end of each of the two connecting webbing straps is fixedly connected to the first tether and the second tether of the fixing strap assembly, respectively. The fixing ends of the two connecting webbing straps are connected to the vehicle seat via their respective second connecting members, and the two connecting webbing straps extend in a transverse direction away from the seat backrest direction underneath the bracket apparatus and ends of the two connecting webbing straps connecting the first tether and the second tether extend through corresponding connecting portions. The first tether and the second tether of the fixing strap assembly are respectively connected to the corresponding connecting portions.

In an embodiment, the bracket apparatus includes: a first bracket, bonded to the carrying portion and is arranged around the periphery of the carrying portion; and a second bracket, connected to the first bracket and bonded to the bottom surface of the carrying portion, where the second bracket extends from one side of the periphery of the carrying portion through the bottom surface to the other side of the periphery of the carrying portion. The connecting portions are arranged on the second bracket.

In an embodiment, the bracket apparatus includes: a first bracket, bonded to the carrying portion and is arranged around the periphery of the carrying portion; a second bracket, connected to the first bracket and bonded to the bottom surface of the carrying portion, where the second bracket extends from one side of the periphery of the carrying portion through the bottom surface to the other side of the periphery of the carrying portion; and a third bracket, with a shape corresponding to the first bracket and is connected to the second bracket.

In an embodiment, the fixing strap assembly includes a vehicle safety strap, where the carrier cooperates with the vehicle safety strap to be secured to the vehicle seat. The vehicle safety strap includes a shoulder strap and an abdomen strap, where a portion of the shoulder strap extends underneath the first bracket and the second bracket, and the abdomen strap extends between the second bracket and the third bracket and forms a plurality of supporting points.

In an embodiment, the carrier further includes a webbing supporting assembly that is detachably connected to the carrier and the vehicle safety strap.

In an embodiment, the webbing supporting assembly includes a connecting webbing strap and a guiding clamp, two ends of the connecting webbing strap are connected to the bracket apparatus, extend through the guiding clamp and are turned by the guiding clamp, and the guiding clamp is clamped on the shoulder strap of the vehicle safety strap to adjust the tension of the connecting webbing strap.

The present disclosure further provides a carrier. The carrier includes: a carrying portion; a bracket apparatus, bonded to and supporting the carrying portion; and at least one strap guiding mechanism, provided on the bracket apparatus and used to fit with a fixing strap assembly to secure the bracket apparatus to a vehicle seat.

In an embodiment, the bracket apparatus includes: a first bracket in an annular structure; a second bracket, with two ends connected to the first bracket respectively; and a third bracket, provided substantially parallel to the first bracket and connected to the bottom of the second bracket, where the strap guiding mechanism is provided on at least one of the first bracket, the second bracket and the third bracket.

In an embodiment, the first bracket is provided with a plurality of symmetrically distributed fixing sheets, the carrier includes a plurality of the strap guiding mechanisms, and each strap guiding mechanism is correspondingly provided on one of the fixing sheets.

In an embodiment, the first bracket is provided with a plurality of symmetrically distributed fixing sheets, the carrier includes a plurality of the strap guiding mechanisms, and the two ends of each strap guiding mechanism are respectively provided on two opposite fixing sheets.

In an embodiment, each of the fixing sheets is inclined toward a direction close to the third bracket.

In an embodiment, the fixing strap assembly passes through the strap guiding mechanism, and is detachably connected to the bracket apparatus and the vehicle seat.

In an embodiment, the fixing strap assembly includes a restraining strap assembly and an extending component, the restraining strap assembly includes at least one restraining strap and a first connecting end located at an end of the restraining strap, and the first connecting end is detachably connected to an ISOFIX socket of the vehicle seat.

In an embodiment, the restraining strap assembly includes two restraining straps and a shielding net located between the two restraining straps, where the fixing strap assembly includes a second connecting end connected to the shielding net, the bracket apparatus is provided with a fixing ring, and the second connecting end is detachably connected to the fixing ring.

In an embodiment, the shielding net is rectangular or trapezoidal.

In an embodiment, the restraining strap assembly includes two restraining straps, a shielding net located between the two restraining straps, and a supporting strip located between the two restraining straps, where the supporting strip is located on one side of the shielding net.

In an embodiment, two ends of the supporting strip are respectively provided with a frame buckle with a middle cross bar for the restraining strap to pass through.

In an embodiment, he shielding net includes a storage portion located at an edge thereof, and the restraining strap and/or the supporting strip are movably extended through the storage portion.

In an embodiment, the restraining strap assembly further includes a first buckle connected to the both of the restraining straps, the extending component includes an extending strap, a second buckle, and a third connecting end, two ends of the extending strap are respectively connected to the second buckle and the third connecting end, the second buckle is detachably connected to the first buckle, and the third connecting end is detachably connected to the vehicle seat.

In an embodiment, the bracket apparatus further includes a supporting plate provided between the first bracket and the third bracket, and the supporting plate constitutes the carrying portion.

In an embodiment, the third bracket includes a blocking portion corresponding to the strap guiding mechanism, for preventing the portion of the fixing strap assembly from passing through the outer side of the second bracket.

In an embodiment, a portion of the fixing strap assembly is located on a side of the third bracket away from the supporting plate.

In an embodiment, the bracket apparatus includes: a first bracket in an annular structure; a third bracket arranged substantially parallel to the first bracket; and a supporting plate provided between the first bracket and the third bracket, where the strap guiding mechanism is arranged on the third bracket and/or the supporting plate.

In an embodiment, the strap guiding mechanism includes a bottom shell and a top shell connected to the bottom shell, the bottom shell and the top shell jointly define a channel, and the channel has a first port and a second port for the fixing strap assembly to pass through.

In an embodiment, the channel further has a side introduction port connected to the first port and the second port, and the side introduction port has a guiding slope.

In an embodiment, a first convex rib and a second convex rib are respectively provided on side walls opposite to each other in the channel, and the first convex rib and the second convex rib are alternately provided in the extending direction of the fixing strap assembly.

In an embodiment, the bottom shell is fixed to the supporting plate, and the top shell is fixed to the third bracket.

In an embodiment, the third bracket is provided with two opposite fixing sheets, the carrier includes two strap guiding mechanisms, and the top shell of each of the strap guiding mechanisms is fixed to one fixing sheet.

In an embodiment, the strap guiding mechanism further includes a positioning seat penetrating through the supporting plate, and the bottom shell is fixed to the positioning seat.

In an embodiment, the fixing strap assembly passes through the strap guiding mechanism, the fixing strap assembly includes a restraining strap assembly and an extending component, the restraining strap assembly includes at least one restraining strap and a first connecting end located at an end of the restraining strap, and the first connecting end is detachably connected to an ISOFIX socket of the vehicle seat.

In an embodiment, the restraining strap assembly includes two restraining straps and a shielding net located between the two restraining straps, the fixing strap assembly includes a reinforcing strap located on the shielding net and a second connecting end connected to the reinforcing strap, the bracket apparatus is provided with a fixing ring, and the second connecting end is detachably connected to the fixing ring.

The present disclosure further provides a strap guiding mechanism, where the strap guiding mechanism is provided on a carrier and is used to fit with a fixing strap assembly to secure the carrier to a vehicle seat.

In an embodiment, the strap guiding mechanism is provided on at least one of the bottom, side and top of the carrier and is constructed into a C-shaped structure with an opening, so that the fixing strap assembly is able to be engaged in a space formed by the C-shaped structure.

In an embodiment, a shell of the strap guiding mechanism includes a bottom shell and a top shell connected to the bottom shell, the bottom shell and the top shell jointly define a channel, and the channel has a first port and a second port for the fixing strap assembly to pass through.

In an embodiment, the channel further has a side introduction port connected to the first port and the second port, and the side introduction port has a guiding slope.

In an embodiment, a first convex rib and a second convex rib are respectively provided on side walls opposite to each other in the channel, and the first convex rib and the second convex rib are alternately provided in the extending direction of the fixing strap assembly.

In an embodiment, the strap guiding mechanism is provided on a bracket apparatus of the carrier, the bracket apparatus is provided with a plurality of symmetrically distributed fixing sheets, and the bottom shell or the top shell of the strap guiding mechanism is fixedly connected to one of the fixing sheets.

In an embodiment, the strap guiding mechanism is provided on a bracket apparatus of the carrier, the bracket apparatus is provided with a plurality of symmetrically distributed fixing sheets, and two ends of the strap guiding mechanism are respectively provided on two opposite fixing sheets.

In an embodiment, the strap guiding mechanism is provided on a bracket apparatus of the carrier, and the bracket apparatus includes a first bracket, a third bracket, and a supporting plate located between the first bracket and the third bracket, and the strap guiding mechanism is provided on the third bracket and/or the supporting plate.

In an embodiment, the bottom shell is fixed to the supporting plate, and the top shell is fixed to the third bracket.

In an embodiment, the carrier includes a box body, the box body is provided on a bracket apparatus of the carrier, the bracket apparatus includes a canopy frame and a guiding member, an end of the canopy frame is pivotally connected to the guiding member, and the strap guiding mechanism is arranged on the guiding member and defines, in conjunction with the guiding member, at least one channel for the fixing strap assembly to pass through.

In an embodiment, a third convex rib and a fourth convex rib are respectively provided on side walls opposite to each other in the channel, and the third convex rib and the fourth convex rib are alternately provided in the extending direction of the fixing strap assembly.

In an embodiment, the strap guiding mechanism has a channel for the fixing strap assembly to pass through. The strap guiding mechanism further includes a cam provided in the channel, the cam has a working position and a disabled position. In the working position, the cam presses the fixing strap assembly against a side wall of the channel; and in the disabled position, the cam releases pressing on the fixing strap assembly, and the fixing strap assembly is able to move freely relative to the strap guiding mechanism.

In an embodiment, the strap guiding mechanism further includes an adjusting button, where the adjusting button is connected to the cam to push the cam to rotate between the working position and the disabled position.

In an embodiment, a shell of the strap guiding mechanism defines a mounting cavity adjacent to the channel, and the adjusting button is mounted in the mounting cavity.

In an embodiment, a reinforcing member is provided on the side wall of the channel, and when the cam is in the working position, the fixing strap assembly is adapted to be clamped between the reinforcing member and the cam.

### BRIEF DESCRIPTION OF THE DRAWINGS

The accompanying drawings, which are included herein to provide a further understanding of the present disclosure and are incorporated herein to constitute a part of the present specification. The accompanying drawings illustrate embodiments of the present disclosure and are used in conjunction with the following description to illustrate the concepts of the present disclosure.
FIG. 1A and FIG. 1B are a perspective view and a partially exploded view of a carrier according to an embodiment of a first aspect of the present disclosure.
FIG. 1C is a schematic diagram of the appearance of a carrier according to a first embodiment of the first aspect of the present disclosure.
FIG. 1D is a schematic diagram of a partial structure of the carrier according to the first embodiment of the first aspect of the present disclosure with the canopy and the seat cloth removed.
FIG. 2A is a schematic diagram of the appearance of a carrier according to a second embodiment of the first aspect of the present disclosure.
FIG. 2B is a schematic diagram of a partial structure of the carrier according to the second embodiment of the first aspect of the present disclosure with the canopy and the seat cloth removed.
FIG. 3 is a schematic diagram of the appearance of a carrier according to a third embodiment of the first aspect of the present disclosure.
FIG. 4 shows an adjusting strap assembly according to a second aspect of the present disclosure.
FIGS. 5A to 5C show a carrier according to a first embodiment of the second aspect of the present disclosure and a connection through which it is connected to the adjusting strap assembly.
FIGS. 6A to 6C show the carrier according to the embodiment shown in FIGS. 5A to 5C of the present disclosure and another connection through which it is connected to the adjusting strap assembly.
FIGS. 7A to 7C show a carrier according to a second embodiment of the second aspect of the present disclosure and a connection through which it is connected to the adjusting strap assembly.
FIGS. 8A to 8C show a carrier according to a third embodiment of the second aspect of the present disclosure and a connection through which it is connected to the adjusting strap assembly.
FIG. 9 shows a carrier according to a first embodiment of the third aspect of the present disclosure and a connection through which it is connected to a fixing strap assembly.
FIGS. 10A to 10C show a carrier and another fixing strap assembly according to a second embodiment of the third aspect of the present disclosure.
FIG. 11 is an exploded view of a carrier according to a first embodiment of the fourth aspect of the present disclosure.
FIG. 12 is a perspective view of the carrier of FIG. 11.
FIG. 13 is a perspective view of a modified embodiment of the carrier according to the first embodiment of the fourth aspect of the present disclosure.
FIG. 14A is a perspective view of a modified embodiment of the carrier according to the first embodiment of the fourth aspect of the present disclosure.
FIG. 14B is a perspective view of a fixing strap assembly according to the first embodiment of the fourth aspect of the present disclosure.
FIG. 15 shows a perspective view of a carrier according to a second embodiment of the fourth aspect of the present disclosure when secured to a vehicle seat.
FIG. 16 is a perspective view of the carrier shown in FIG. 15 from another angle.
FIG. 17 is a perspective view of the bracket apparatus in FIG. 15.
FIG. 18 is a side view of the carrier in FIG. 15.
FIG. 19 is a front view of the carrier in FIG. 15.
FIG. 20 is a perspective view of the fixing strap assembly in FIG. 15.
FIG. 21 shows a perspective view of a carrier according to a third embodiment of the fourth aspect of the present disclosure when secured to a vehicle seat.
FIG. 22 is a perspective view of the carrier shown in FIG. 21 from another angle.
FIG. 23 is a perspective view of a bracket apparatus and a box body in FIG. 21.
FIG. 24 is a bottom view of the bracket apparatus and the box body shown in FIG. 23.
FIG. 25 is a cross-sectional view along a line D-D in FIG. 22.
FIG. 26A is a cross-sectional view of the bracket apparatus and the box body shown in FIG. 22.
FIG. 26B is a partial enlarged view of position B in FIG. 26A.
FIG. 27 is a perspective view of a carrier according to a fourth embodiment of the fourth aspect of the present disclosure when secured to a vehicle seat.
FIG. 28 is a perspective view of the carrier shown in FIG. 27 with the box body omitted.
FIG. 29 is a partial enlarged view of the canopy frame in FIG. 27.
FIG. 30 is a perspective view of the carrier shown in FIG. 27 from another angle.
FIG. 31 is a partial cross-sectional view along a line E-E in FIG. 30.
FIG. 32 is a perspective view of a carrier according to a fifth embodiment of the fourth aspect of the present disclosure when secured to a vehicle seat.
FIG. 33 is a perspective view of the carrier shown in FIG. 32 with the box body omitted.
FIGS. 34A to 34D are perspective views of a carrier connected to a vehicle seat according to an embodiment of the present disclosure.
FIGS. 35A to 35B are perspective views of a carrier connected to a vehicle seat according to another embodiment of the present disclosure.
FIGS. 35C to 35G are perspective and exploded views of a second strap guiding mechanism shown in FIG. 35B.
FIGS. 36A to 36C are perspective views of a carrier connected to a vehicle seat according to yet another embodiment of the present disclosure.
FIGS. 37A to 37C are perspective views of a carrier according to a first embodiment of a fifth aspect of the present disclosure.
FIG. 38 is a perspective view of a fixing seat assembly that fits with the carrier shown in FIG. 37A.
FIG. 39 is a perspective view of the carrier being mounted to a vehicle via the fixing seat assembly.
FIG. 40 is a perspective view of the fixing strap assembly shown in FIG. 39.
FIG. 41A is a perspective view of a carrier according to a second embodiment of the fifth aspect of the present disclosure.
FIG. 41B is a bottom view of the carrier of FIG. 41A.
FIG. 41C is a perspective view of the carrier in FIG. 41A secured to a vehicle seat.
FIG. 42 is a perspective view of a fixing strap assembly in FIG. 41C.
FIG. 43A is a perspective view of a top shell of a strap guiding mechanism in FIG. 41B in one direction.
FIG. 43B is a perspective view of the top shell in FIG. 43A in another direction.
FIG. 44 is a bottom view of the carrier in FIG. 41A, and shows the structure of a bottom shell of the strap guiding mechanism.
FIG. 45 is a partial cross-sectional view of FIG. 41B along C4-C4.
FIG. 46 is a partial cross-sectional view of FIG. 41B along C5-C5.
FIG. 47 shows a perspective view of a carrier secured to a vehicle seat according to a third embodiment of the fifth aspect of the present disclosure.
FIG. 48 is a bottom view of the carrier in FIG. 47.
FIG. 49 is an exploded view of the strap guiding mechanism in FIG. 48.
FIG. 50 is a partial cross-sectional view of FIG. 48 along C6-C6.
FIG. 51 is a partial cross-sectional view of FIG. 48 along C7-C7, where the cam presses a webbing strap against the top shell.
FIG. 52 is a partial cross-sectional view of FIG. 48 along C7-C7, where the cam releases pressing on the webbing strap.
FIG. 53 is a perspective view of a carrier being mounted to a vehicle seat via a fixing seat assembly according to a first embodiment of a sixth aspect of the present disclosure.
FIG. 54A and FIG. 54B are schematic diagrams of the appearance of a carrier at different viewing angles according to a second embodiment of the sixth aspect of the present disclosure.
FIG. 54C and FIG. 54D are schematic structural diagrams of a carrier according to a third embodiment of the sixth aspect of the present disclosure.
FIG. 55 is a schematic structural diagram of a carrier according to a fourth embodiment of the sixth aspect of the present disclosure.
FIG. 56A and FIG. 56B are schematic structural diagrams of a carrier according to a fifth embodiment of the sixth aspect of the present disclosure.
FIGS. 57A to 57C are schematic structural diagrams of a carrier according to a sixth embodiment of the sixth aspect of the present disclosure.
FIGS. 58A to 58C are schematic structural diagrams of a carrier according to a seventh embodiment of the sixth aspect of the present disclosure.
FIG. 59 is a perspective view of a carrier according to a first embodiment of a seventh aspect of the present disclosure installed on a vehicle seat.
FIG. 60 is a perspective view of a carrier according to a second embodiment of the seventh aspect of the present disclosure installed on a vehicle seat.
FIG. 61 is a side view of the carrier shown in FIG. 60.
FIG. 62A is a front view of the carrier shown in FIG. 60.
FIG. 62B is a partial enlarged view of a position A in FIG. 62A.
FIG. 63 is a bottom view of the carrier shown in FIG. 60.
FIG. 64 is a bottom view of a bracket apparatus according to an embodiment.
FIG. 65 is a perspective view of the bracket apparatus shown in FIG. 64.
FIG. 66A is a perspective view of a top shell of the strap guiding mechanism in one direction.
FIG. 66B is a perspective view of the top shell of the strap guiding mechanism in another direction.
FIG. 66C is a perspective view of a bottom shell of the strap guiding mechanism
FIG. 67 is a cross-sectional view along a line A-A in FIG. 63.
FIG. 68 is a perspective view of a carrier according to a third embodiment of the seventh aspect of the present disclosure installed on a vehicle seat.
FIG. 69 is a side view of the carrier shown in FIG. 68.
FIG. 70 is a bottom view of the carrier shown in FIG. 68.
FIG. 71 is a bottom view of the bracket apparatus shown in FIG. 69.
FIG. 72 is a partially enlarged perspective view of the bracket apparatus shown in FIG. 71.
FIG. 73 is a cross-sectional view along a line B-B in FIG. 70.
FIG. 74 is a perspective view of a carrier according to a fourth embodiment of the seventh aspect of the present disclosure installed on a vehicle seat.
FIG. 75 is a front view of the carrier shown in FIG. 74.
FIG. 76 is a bottom view of the carrier shown in FIG. 74.
FIG. 77 is a bottom view of the bracket apparatus according to an embodiment.
FIG. 78 is a cross-sectional view along a line C-C in FIG. 77.
FIG. 79 is a partial enlarged view of the strap guiding mechanism shown in FIG. 76 with the top shell omitted.
FIG. 80 is a partial enlarged view of the strap guiding mechanism shown in FIG. 76 from another angle.
FIG. 81A and FIG. 81B are schematic structural diagrams of a carrier according to a first embodiment of an eighth aspect of the present disclosure.
FIG. 81C and FIG. 81D are schematic structural diagrams of a carrier according to a second embodiment of an eighth aspect of the present disclosure.

**Description of reference numerals:**

| | |
|---|---|
| Baby carrier | 1200, 1200 A |
| Box body | 122, 122A |
| Accommodation space | 1210, 1210 A |
| Locking groove | 1222, 1222 A |
| Frame structure | 123, 123 A |
| First frame (also referred to as "first bracket") | 1231, 1231A |
| Second frame (also referred to as "second bracket") | 1232, 1232A |
| Guiding member | 1233, 1233 A |
| Third convex rib | 12331, 12331A |
| Handle | 124, 124 A |
| Canopy frame | 125, 125 A |
| Bracket apparatus | 1300, 1300A |
| First shelf (also referred to as "first bracket") | 132 |
| First shelf (also referred to as "third bracket") | 132 A |
| Long side | 1321 |
| Supporting rod (also referred to as "second bracket") | 1322 |
| Supporting rod | 1322 A |
| Short side | 1323 |
| Fixing seat (also referred to as "fixing assembly") | 1324 |
| Fixing block | 1325, 1325 A |
| Fixing sheet | 1326, 1326 A |
| Locking seat | 1328, 1328 A |
| Strap guiding mechanism | 133, 133A |
| Channel | 1330, 1330 A |
| First Port | 13301, 13301A |
| Second Port | 13302, 13302A |
| Side introduction port | 13303 |
| Guiding slope (also referred to as "sloped wall") | 13304 |
| Bottom shell | 1331, 1331A |
| First convex rib | 13311, 13311A |
| Second convex rib | 13312, 13312A |
| Top shell | 1332, 1332A |
| Receiving groove | 13322, 13322A |
| Positioning seat | 1333, 1333 A |
| Screw | 1334, 1334 A |
| Second shelf (also referred to as "third bracket") | 134 |
| Long side | 1341 |
| Fixing ring | 1342 |
| Short side | 1343 |
| Blocking portion | 1345 |
| Supporting plate | 136 |
| First strap guiding mechanism | 1400, 1400 A |
| Channel | 1430, 1430 A |
| First Port | 14301, 14301A |
| Second Port | 14302, 14302A |
| Side introduction port | 14303, 14303 A |
| Fourth convex rib | 1432, 1432A |
| Second strap guiding mechanism | 1450, 1450 A |
| Fixing strap assembly | 1500, 1500A |
| Restraining strap assembly | 151, 151A |
| First buckle | 1511, 1511A |
| First connecting end | 1512, 1512A |
| Restraining strap | 1513, 1513A |
| Shielding net | 1514 |
| Second connecting end | 1515 |
| Supporting strip | 1516 |
| Reinforcing strap | 1518 |
| Extending component | 152, 152A |
| Extending strap | 1521, 1521A |
| Adjusting portion | 1522, 1522 A |
| Second buckle | 1523, 1523A |
| Third connecting end | 1524, 1524A |
| Shoulder strap | 154, 154A |
| Waist strap | 156, 156A |
| Vehicle seat | 1600, 1600 A |
| Carrier | 1700,1800,1900 |
| Box body | 1722, 1822, 1922 |
| Bracket apparatus | 1723, 1823 , 1923 |
| First bracket | 17231, 19231 |
| Second bracket | 17232 , 18232 |
| Third bracket | 17233 , 18233 |
| Fixing assembly | 17234 |
| Strap guiding mechanism | 1850 |
| Fixing sheet | 1851 |
| First fixing hole | 18511 |
| Bottom shell | 1852 |
| First convex rib | 18521 |
| Second fixing hole | 18522 |
| Top shell | 1853 |
| Second convex rib | 18531 |
| Canopy frame | 1925 |
| Strap guiding mechanism | 1940 |
| Carrier | 2300 |
| Body | 2301 |
| Bottom | 2302 |
| Handle | 2303 |
| Observation window | 2304a |
| Ventilation opening | 2304b |
| Bottom supporting member | 2308 |
| Engaging member | 2311 |
| Strap guiding mechanism | 233 |
| Channel | 2330 |
| First Port | 23301 |
| Second Port | 23302 |
| Side introduction port | 23303 |
| Sloped wall (also referred to as "guiding slope") | 23304 |
| Shell | 233A |
| Bottom shell | 2331 |
| First convex rib | 23311 |
| Top end | 233111 |
| Second convex rib | 23312 |
| Top end | 233121 |
| Top shell | 2332 |
| Operating port | 23320 |
| Reinforcing member | 23321 |
| Cam | 2333 |
| Hole | 23330 |
| Teeth | 23331 |
| Hole | 23332 |
| Fastener | 23335 |
| Adjusting button | 2334 |
| Recessed portion | 23340 |
| Connecting shaft | 23341 |
| Hole | 23342 |
| Mounting cavity | 2335 |
| Strap guiding mechanism | 234 |
| Opening | 2340 |
| Fixing strap assembly | 2500 |
| Restraining strap assembly | 251 |
| First connecting end | 2511 |
| Hole | 25110 |
| Second connecting end | 2512 |
| Restraining strap | 2513 |
| Extending component | 252 |
| Extending strap | 2521 |
| Adjusting portion | 2522 |
| Third connecting end | 2523 |
| Fourth connecting end | 2524 |
| Vehicle seat | 2600 |
| Carrier | 3300 |
| Second bracket | 3320 |
| Third bracket | 3323 |
| Fixing strap assembly | 3350 |
| First tether (also referred to as "restraining strap") | 33510 |
| Hook member | 33511 |
| Second tether (also referred to as "restraining strap") | 33520 |
| Hook member | 33521 |
| Length adjuster (also called "adjusting portion") | 33530 |
| Connecting tether (also called "extending strap") | 33540 |
| Fixing hook member | 33550 |
| Supporting structure | 33560 |
| Carrier | 3400 |
| Fixing strap assembly | 3450 |
| First tether | 34510 |
| First end | 34510A |
| Second end | 34510B |
| Second tether | 34520 |
| First end | 34520A |
| Second end | 34520B |
| Length adjuster | 34530 |
| Supporting structure | 34560 |
| Carrier | 3500 |
| Fixing strap assembly | 3550 |
| Longitudinal rod | 35222 |
| First tether | 35510 |
| Second tether | 35520 |
| Length adjuster | 35530 |
| Connecting tether | 35540 |
| Fixing hook member | 35550 |
| Supporting structure | 35560 |
| Connecting assembly | 3560 |
| Carrier | 3600 |
| Bracket apparatus | 3620 |
| Long side | 36211 |
| Short side | 36212 |
| Short side | 36214 |
| Longitudinal rod | 36222 |
| Third bracket | 3623 |
| Fixing strap assembly | 3650 |
| First tether | 36510 |
| Hook member | 36511 |
| Second tether | 36520 |
| Hook member | 36521 |
| Length adjuster | 36530 |
| Connecting tether | 36540 |
| Fixing hook | 36550 |
| Supporting structure | 36560 |
| Connecting assembly | 3660 |
| Connecting webbing strap | 36610 |
| First connecting member | 36611 |
| Second connecting member | 36612 |
| Connecting webbing strap | 36620 |
| First connecting member | 36621 |
| Second connecting member | 36622 |
| Carrier | 3700 |
| Bracket apparatus | 3720 |
| Long side | 37211 |
| Long side | 37213 |
| Third bracket | 3723 |
| Fixing strap assembly | 3750 |
| First tether | 37510 |
| Hook member | 37511 |
| Second tether | 37520 |
| Hook member | 37521 |
| Length adjuster | 37530 |
| Connecting tether | 37540 |
| Fixing hook member | 37550 |
| Connecting assembly | 3760 |
| Connecting webbing strap | 37610 |
| End | 37610A |
| Connecting member | 37612 |
| Connecting webbing strap | 37620 |
| End | 37620A |
| Connecting member | 37622 |
| Carrier | 3800, 3800' |
| Bracket apparatus | 3820 |
| First bracket | 3821 |
| Long side | 38211 |
| Long side | 38213 |
| Second bracket | 3822 |
| Third bracket | 3823 |
| Long side | 38231 |
| Short side | 38232 |
| Short side | 38234 |
| First fixing assembly | 38241 |
| First fixing assembly | 38242 |
| First fixing assembly | 38243 |
| First fixing assembly | 38244 |
| Second fixing component | 38251 |
| Second fixing component | 38252 |
| Vehicle safety belt | 3870 |
| Shoulder strap | 3871 |
| Abdomen strap | 3872 |
| Webbing supporting assembly | 3880 |
| Connecting member | 38811 |
| Connecting member | 38812 |
| Connecting webbing strap | 3881 |
| Guiding clamp | 3882 |
| Carrier | 4100, 4500, 4600, 4700 |
| Box body | 4110, 4510, 4610 |
| Bottom | 4111 |
| Peripheral wall | 4112 |
| Accommodation space | 4113 |
| First positioning groove | 4515 |
| Second positioning groove | 4616 |
| Bracket apparatus | 4120 |
| First bracket | 4121, 4521, 4621 |
| Second bracket | 4122, 4622 |
| Vertical section (also called "vertical portion") | 41234, 46221 |
| Horizontal section (also called "transverse portion") | 41222 |
| Third bracket | 4123 |
| Engaging member | 41231 |
| First structural reinforcement member | 41232, 41233 |
| Second structural reinforcement member | 41234 |
| Fixing assembly | 4124 |
| First connecting bracket | 41241 |
| Second connecting bracket | 41245 |
| Seat cloth | 4580, 4680 |
| Shoulder strap (as an example of a "strap assembly") | 4590 |
| Strap body | 4591 |
| Second shoulder belt connector (as an example of a "second connector") | 4592 |
| First shoulder belt connector (as an example of a "first connector") | 45A0 |
| Fixing rope (as an example of the "strap assembly") | 46B0, 47B0 |
| Rope body (i.e., strap body ) | 46B1, 47B1 |
| Second fixing rope connector (as an example of the "second connector") | 46B2 |
| First fixing rope connector (as an example of a "first | 46C0 |
| connector") | |
| Longitudinal axis direction | D41 |
| Transverse axis direction | D42 |
| Vehicle seat | 52 |
| Carrier | 540, 550, 560, 570, 570' |
| First bracket | 5411, 5511, 5611, 5711' |
| Fixing buckle | 5711'a |
| Second bracket | 5412, 5512 |
| Buckle ring | 5420, 5520, 5620 |
| Handle | 5430, 5530 |
| Box body | 5440 |
| Adjusting strap assembly | 580 |
| Adjuster | 5810 |
| Connecting tether | 5820 |
| Connecting member | 5830 |
| Closing member | 5830a |
| Fixing strap assembly | 590, 590' |
| Restraining strap | 5910, 5910' |
| First adjusting portion | 5920 |
| First connecting end | 5930, 5930' |
| Second connecting end | 5940, 5940' |
| Extending component | 590'a |
| Third connecting end | 5950' |
| Fourth connecting end | 5960' |
| Second adjusting portion | 5970' |
| Extending strap | 5980' |
| Center line of the long side of the carrier | C56, C57 |
| Lateral direction of the restraining strap | D54 |
| Carrier | 6100 |
| Box body | 6110 |
| Body | 6111 |
| Handle (i.e. carrying handle) | 61115 |
| First connecting member | 61116 |
| Second connecting member | 61117 |
| Bottom supporting member | 6112 |
| Connecting portion | 61122 |
| Bracket apparatus (also called "bracket assembly") | 6120 |
| Engaging member | 6121 |
| First connecting bracket | 6122 |
| Second connecting bracket | 6123 |
| Structural reinforcement member | 6124 |
| Fixing seat assembly | 6200 |
| Engaging portion | 6210 |
| Connecting apparatus | 6220 |
| Fixing strap assembly | 6300 |
| First strap | 6310 |
| Second strap | 6320 |
| Connecting apparatus | 6330 |
| Connecting apparatus | 6340 |
| Adjuster | 6350 |
| Longitudinal axis direction | D61 |
| Transverse axis direction | D62 |
| Carrier | 7300 |
| Handle | 7306 |
| Canopy (also called "ceiling") | 7307 |
| Zipper structure | 7309 |
| Box body | 73 A |
| Accommodation space | 7310 |
| Outer wall | 73101 |
| Bracket apparatus | 73B |
| First bracket | 73111 |
| Second bracket | 73112 |
| Vertical section | 731121 |
| Horizontal section | 731122 |
| Third bracket | 73113 |
| Strap guiding mechanism | 733, 734 |
| Bottom shell | 7331 |
| Top shell | 7332 |
| Fixing strap assembly | 7500 |
| Restraining strap assembly | 751 |
| First connecting end | 7511 |
| Hole | 75110 |
| Second connecting end | 7512 |
| Restraining strap | 7513 |
| Extending component | 752 |
| Extending strap | 7521 |
| Adjusting portion | 7522 |
| Third connecting end | 7523 |
| Fourth connecting end | 7524 |
| Carrier | 8300, 9300 |
| Strap | 8305, 9305 |
| Supporting surface | 83110, 93110 |
| Bracket apparatus | 83B, 93B |
| First bracket | 83111, 93111 |
| Second bracket | 83112, 93112 |
| Third bracket | 83113, 93113 |
| Engaging member | 8311, 9311 |
| Strap guiding mechanism | 933 |
| Fixing strap assembly | 8500, 9500 |
| Restraining strap | 9513 |
| Fourth connecting end | 9524 |
| Vehicle seat | 8600, 9600 |
| Fixing seat assembly | 8700 |

### DETAILED DESCRIPTION

In order to facilitate understanding of the present disclosure, the present disclosure will be described more fully below with reference to the relevant accompanying drawings. The preferred embodiments of the present disclosure are shown in the accompanying drawings. However, the present disclosure may be implemented in many different forms and is not limited to the embodiments described herein. On the contrary, these embodiments are provided to make the disclosure of the present disclosure more thorough and comprehensive.

The present disclosure will be described in detail below with reference to the accompanying drawings.

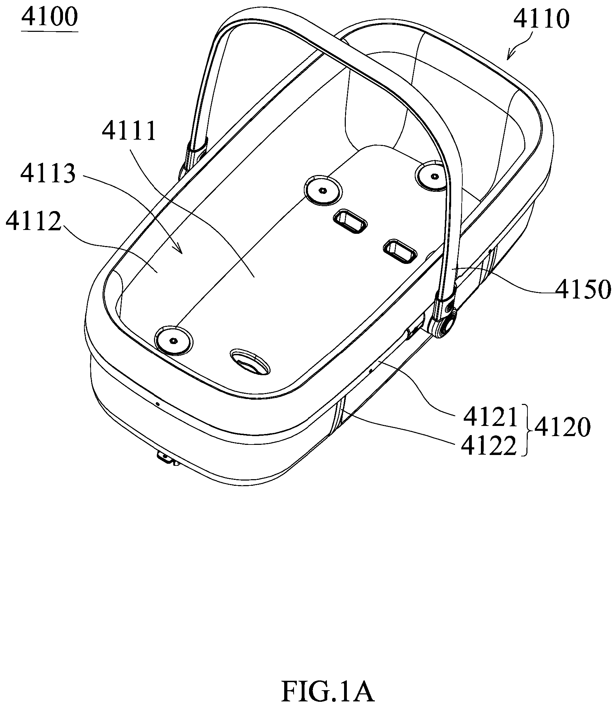

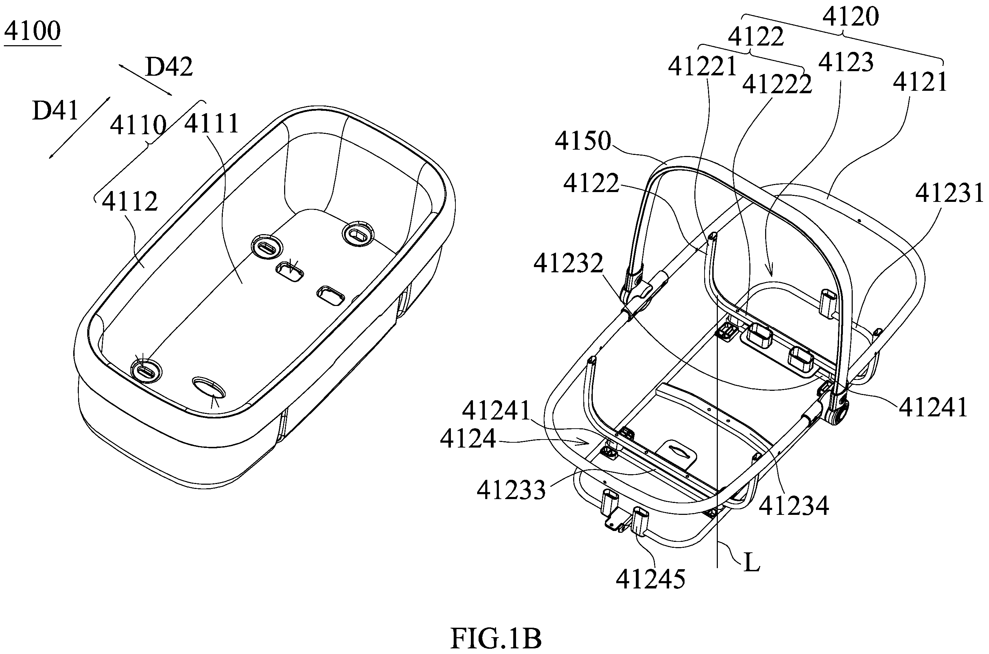

A first aspect of the present disclosure provides a carrier, such as a baby basket, a pet basket, etc. For example, FIG. 1A and FIG. 1B are a perspective view and a partially exploded view of the carrier according to the first aspect of the present disclosure. The carrier 4100 includes a box body 4110 (i.e., a supporting portion) and a bracket apparatus 4120. The box body 4110 includes a bottom 4111 (i.e., a base of the box body) and a peripheral wall 4112 connected to the bottom 4111. The bottom 4111 and the peripheral wall 4112 surround and define an accommodation space 4113. The carrier 4100 may be a children's carrier, but the present disclosure is not limited thereto and may also be a pet carrier. In addition, in this embodiment, the box body 4110 may be made of foam materials such as expanded polypropylene (EPP), expanded polyethylene (EPE), and expanded ethylene (EPO), and the bracket apparatus may be made of metal or other materials with high rigidity, but the present disclosure is not limited to this embodiment.

As shown in FIG. 1B , the bracket apparatus 4120 includes a first bracket 4121, two second brackets 4122, a third bracket 4123, and a fixing assembly 4124 connecting the box body 4110 to the third bracket 4123. The first bracket 4121 is bonded to the box body 4110 and arranged around the peripheral wall 4112 of the box body 4110. The two second brackets 4122 are connected to the first bracket 4121 and are separated from each other along a longitudinal axis direction D41 of the box body 4110 (respectively located on both sides of a center line of a long side of the box body 4110). Each second bracket 4122 is bonded to the box body 4110 and extends from one side of the peripheral wall 4112 of the box body 4110 along a transverse axis direction D42 of the box body 4110 through the bottom 4111 of the box body 4110 to another side of the peripheral wall 4112 of the box body 4110. In this way, by having the two second brackets 4122 spaced apart along the peripheral wall 4112, a steady support can be provided for the box body 4110, thereby improving the impact resistance of the box body 4110. The third bracket 4123 is located at one side of the bottom 4111 of the box body 4110 and is spaced apart from the bottom 4111 of the box body 4110 via the fixing assembly 4124. The first bracket 4121 and the third bracket 4123 are disposed substantially horizontally, and the first bracket 4121 and the third bracket 4123 are disposed in a vertical direction at upper and lower sides of the bottom 4111 of the box body 4110, e.g., the first bracket 4121 may be disposed on the upper side of the second bracket 4122 and close to the opening of the box body 4110, and the third bracket 4123 is disposed at the bottom 4111 of the box body 4110 and the lower side of the second bracket 4122. In this embodiment, the third bracket 4123 and the bottom 4111 of the box body 4110 may not contact each other at all, but the present disclosure is not limited to this embodiment. In one example, the first bracket 4121 may be rectangular or square-ring shaped.

The third bracket 4123 includes an engaging member 41231, which may be an annular structural member. The third bracket 4123 may also include two first structural reinforcement members 41232, 41233 and a second structural reinforcement member 41234. The two first structural reinforcement members 41232 and 41233 are separated from each other along the longitudinal axis direction D41 of the box body 4110. The two first structural reinforcement members 41232 and 41233 respectively extend substantially along the transverse axis direction D42 of the box body 4110 and are connected to the engaging member 41231. The two first structural reinforcement members 41232 and 41233 are respectively disposed on both sides of the engaging member 41231. The second bracket 4122 may be a U-shaped structural member. The second bracket 4122 includes two vertical sections (also referred to as "vertical portion") 41221 and a horizontal section (also referred to as "transverse portion") 41222. The two vertical sections 41221 are substantially vertically connected to the first bracket 4121, and the transverse portion 41222 is substantially vertically connected to the fixing assembly 4124.

In addition, a central portion of the second structural reinforcement member 41234 faces the bottom 4111 of the box body 4110, and the height of the central portion is higher than those of the ends on both sides, thereby presenting a curved shape. In another embodiment, the central portion may also optionally abut against the bottom 4111 of the box body 4110. The second structural reinforcement member 41234 is located between the two first structural reinforcement members 41232 and 41233. The distance between the second structural reinforcement member 41234 and the first structural reinforcement member 41232 is substantially equal to the distance between the second structural reinforcement member 41234 and the first structural reinforcement member 41233, and the cross-sectional area of the tube of the second structural reinforcement member 41234 may be equal to or greater than the cross-sectional area of the tube of the two first structural reinforcement members 41232 and 41233. Through the above structural configurations, when the carrier 4100 carries a baby or places other items, the middle portion of the bottom 4111 of the box body 4110 may have a force-bearing support portion supported by the second structural reinforcement member 41234. Furthermore, when the third bracket 4123 is subjected to an external force, it can stably resist a large impact force, so that the bracket apparatus 4120 has a higher impact resistance and is not easy to be deformed by force. However, the structure of the bracket apparatus disclosed in the present disclosure is not limited to this embodiment, and it depends on actual design requirements. For example, in another embodiment, if the carrier 4100 is not in an elongated box structure, but is in a box structure with four sides of approximately equal length, the second structural reinforcement member may be omitted, or, if the carrier 4100 is in an elongate box structure along the longitudinal axis direction D41, a plurality of the second structural reinforcement members may be further provided to provide the box body 4110 with a higher impact resistance. Alternatively, in another embodiment, the third bracket may only include one first structural reinforcement member located on one side of the engaging member. In another embodiment, the carrier 4100 is further provided with at least one second bracket along the transverse axis direction D42, but in this embodiment, the at least one second bracket has a long vertical section, and the at least one second bracket extends from one side of the peripheral wall 4112 along the longitudinal axis direction D41 through the bottom 4111 to the other side of the peripheral wall 4112, thus further strengthening the supporting force of the box body 4110, thereby improving the impact resistance of the box body 4110. In another embodiment, the carrier 4100 may not be provided with the first structural reinforcement members 41232, 41233 and the second structural reinforcement member 41234, but a plurality of second brackets 4122 may further be provided and directly connected to the third bracket 4123, and the positions of the plurality of second brackets 4122 may correspond to different cross-sectional areas of the box body 4110 along the longitudinal axis direction D41, for improving the impact resistance of the box body 4110.

In addition, as shown in FIG. 1B, in an embodiment, the first bracket 4121 may also be an annular structural member, the first bracket 4121 surrounds and defines a first plane, and the engaging member 41231 surrounds and defines a second plane. The area of the second plane may not be greater than the area of the first plane, and the area of the second plane is substantially proximate to the area of the bottom 4111 of the box body 4110. In addition, the first plane and the second plane correspond to the same central axis L (i.e., the central axis L passes through the centers of the first plane and the second plane), and the second structural reinforcement member 41234 may be disposed substantially through or close to the central axis. As shown in FIG. 1B, the fixing assembly 4124 includes four first connecting brackets 41241, each of which connects a corresponding second bracket 4122 with a corresponding third bracket 4123. Specifically, each first connecting bracket 41241 connects the corresponding second bracket 4122 and the corresponding first structural reinforcement member 41232, 41233. In an example, the fixing assembly 4124 further includes a plurality of second connecting brackets 41245 connected to the third bracket 4123. The plurality of second connecting brackets 41245 may be installed on opposite sides of the engaging member 41231 along the longitudinal axis direction D41, so that the bonding of the box body 4110 to the bracket apparatus 4120 can be more firmly secured. In addition, the carrier 4100 further includes a handle 4150, and the handle 4150 is pivotally connected to the first bracket 4121.

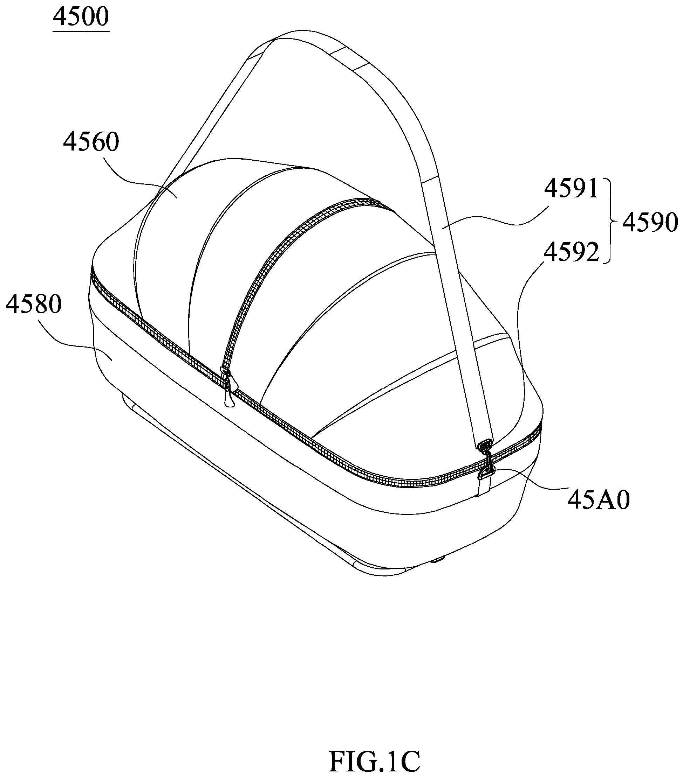

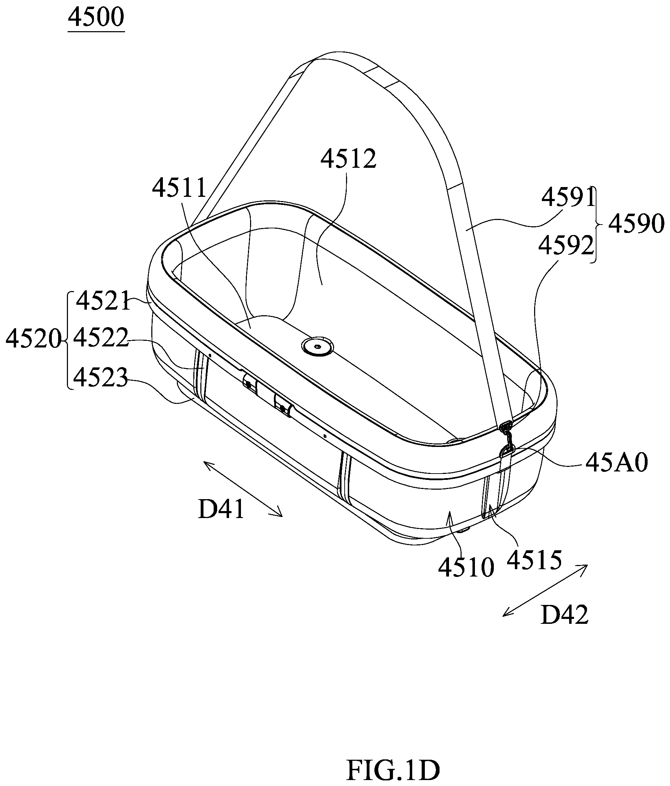

Referring to FIG. 1C and FIG. 1D, a first embodiment of the first aspect of the present disclosure provides a carrier 4500. FIG. 1C is a schematic diagram of the appearance of the carrier 4500 according to the first embodiment of the first aspect of the present disclosure, and FIG. 1D shows a schematic diagram of a partial structure of the carrier 4500 according to the embodiment of the present disclosure with the canopy and the seat cloth removed.

With reference to FIG. 1C and FIG. 1D, the carrier 4500 of the first embodiment of the first aspect of the present disclosure may have a structure similar to that of the carrier 4100 shown in FIGS. 1A and 1B above, and the similar structures thereof will not be repeated herein. The carrier 4500 of this embodiment is different from the carrier 4100 in that the carrier 4500 further includes a canopy 4560 and a seat cloth 4580 that at least partially covers the box body 4510 and the bracket apparatus 4520.

Furthermore, as shown in FIG. 1C and FIG. 1D, the difference from the carrier 4100 shown in FIG. 1A and FIG. 1B is that the carrier 4500 includes a shoulder belt 4590 (as an example of a "strap assembly") to be worn by a user and two first shoulder belt connectors 45A0 (which may also be considered as an example of a "first connector"), but does not include a handle. Two first shoulder belt connectors 45A0 are disposed on the first bracket 4521 of the carrier 4500, and the shoulder belt 4590 (as an example of a "strap assembly") includes a strap body 4591 and two second shoulder belt connectors 4592 (also considered as an example of a "second connector") disposed on the strap body 4591 and respectively used to detachably connect the first shoulder belt connector 45A0. In one example, two second shoulder belt connectors 4592 may be respectively disposed at two end portions of the strap body 4591. It should be noted that "end portion" does not necessarily refer to the end of the shoulder belt 4590, but the portion of the shoulder belt 4590 on which the second shoulder belt connector 4592 is provided may be considered as the end portion thereof. In other embodiments where the second shoulder belt connectors 4592 are not provided or the second shoulder belt connectors 4592 are not used for connection, the end portion of the shoulder belt 4590 may also be considered as the portion which is connected to the bracket apparatus (such as the first bracket 4521) of the carrier 4500. Specifically, the two first shoulder belt connectors 45A0 may be two snap rings disposed on two opposite short sides of the first bracket 4521 and exposed from the seat cloth 4580, and the two second shoulder belt connectors 4592 may be two snap hooks disposed at both ends of the strap body 4591. Furthermore, in this embodiment, a first positioning groove 4515 for accommodating and positioning the first shoulder belt connector 45A0 is formed on an outer side of the short side of the peripheral wall 4512 of the box body 4510 to prevent the first shoulder belt connector 45A0 from moving arbitrarily or excessively. In another embodiment, a positioning protrusion for positioning the first shoulder belt connector and preventing the first shoulder belt connector from excessively moving may also be provided on the short side of the first bracket. It may be understood that in another embodiment, the first shoulder belt connector and the second shoulder belt connector may be omitted, and the shoulder belt may be connected to the first bracket in a wrap-around manner (detachable), for example, the end of the shoulder belt may be wrapped around the first bracket to fix the carrier. In addition, the structures of the first shoulder belt connector and the second shoulder belt connector may be interchangeable. For example, the first shoulder belt connector may be a snap hook and the second shoulder belt connector may be a snap ring. Other structures may also be provided, and the present disclosure is not limited thereto.

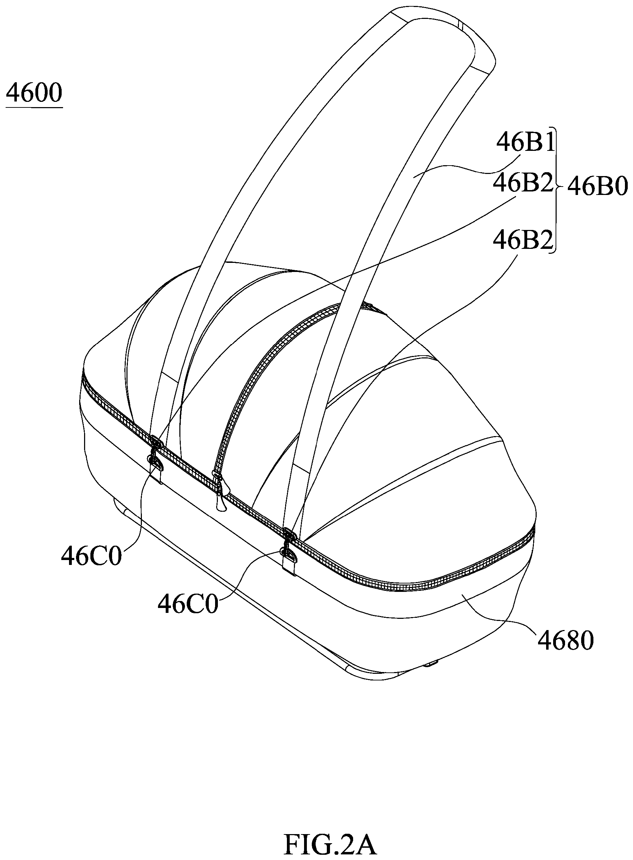

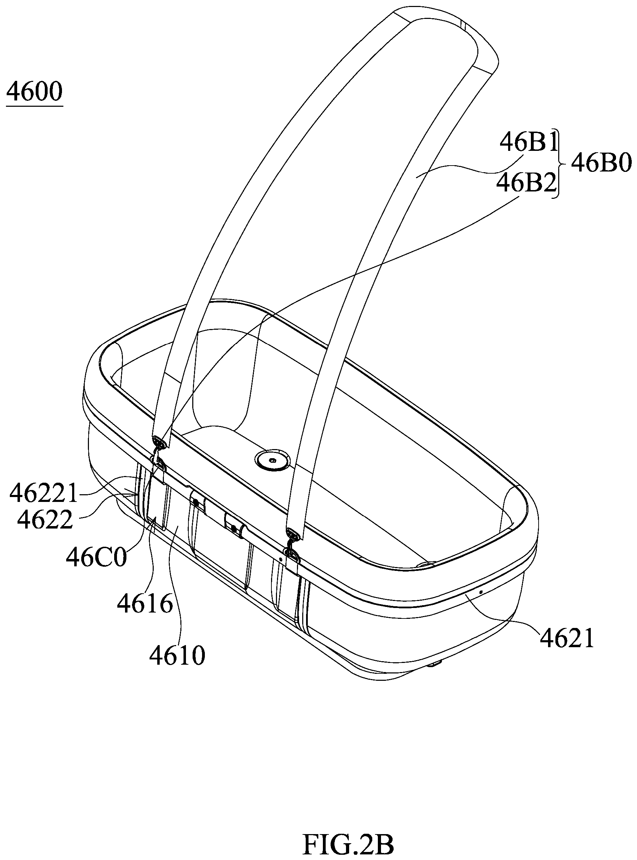

With reference further to FIG. 2A and FIG. 2B, FIG. 2A is a schematic diagram of the appearance of a carrier 4600 according to a second embodiment of the first aspect of the present disclosure, and FIG. 2B shows a schematic diagram of a partial structure of the carrier 4600 as shown in FIG. 2A with the canopy and the seat cloth removed. As shown in FIG. 2A and FIG. 2B, the difference from the first embodiment in this aspect is that the carrier 4600 includes a fixing rope 46B0 (as an example of a "strap assembly") for fitting with a vehicle seat and two first fixing rope connectors 46C0 (also considered as an example of a "first connector"), but does not include a shoulder belt. Two first fixing rope connectors 46C0 are arranged on the first bracket 4621 of the box body 4600. The fixing rope 46B0 includes a rope body 46B1 (also referred to as a "strap body") and two second fixing rope connectors 46B2 arranged at both ends (i.e., two end portions) of the rope body 46B1. That is, one second fixing rope connector 46B2 (also considered as an example of a "second connector") is provided at each end of the rope body 46B1. The fit between the fixing rope 46B0 and the vehicle seat is achieved by wrapping the rope body 46B1 around a headrest support rod of the vehicle seat, and the two second fixing rope connectors 46B2 are respectively used to detachably connect the two first fixing rope connectors 46C0. It should be noted that "end portion" of the rope body 46B1 does not necessarily refer to the end thereof, but the portion of the rope body 46B1 on which the second fixing rope connectors 46B2 is provided may be considered as the end portion thereof. In other embodiments where the second fixing rope connectors 46B2 are not provided or the second fixing rope connectors 46B2 are not used for connection, the end portion of the rope body 46B1 may also be considered as the portion which is connected to the bracket apparatus (such as the first bracket 4621) of the carrier 4600. Specifically, the two first fixing rope connectors 46C0 may be two snap rings arranged on the long side of the first bracket 4621 and exposed from the seat cloth 4680, and the two second fixing rope connectors 46B2 may be two snap hooks arranged at both ends of the rope body 46B1. Further, the two first fixing rope connectors 46C0 may be located at positions of the first bracket 4621 adjacent to the two second brackets 4622, for example, adjacent to the end of the vertical section (also referred to as the "vertical portion") 46221 of the second bracket 4622. Compared with other setting positions on the first bracket, the first bracket 4621 is less likely to be deformed when subjected to the tensile force of the rope body 46B1, thereby providing the carrier 4600 with a higher impact resistance. Furthermore, in this embodiment, second positioning grooves 4616 for accommodating and positioning the first fixing rope connectors 46C0 are formed on an outer side of the long side of the peripheral wall of the box body 4610 to prevent the first fixing rope connectors 46C0 from moving excessively. In another embodiment, positioning protrusions for positioning the first fixing rope connectors and preventing the first fixing rope connectors from moving excessively may also be provided on the long side of the first bracket. It may be understood that in another embodiment, the first fixing rope connectors and the second fixing rope connectors may be omitted, and the fixing rope may be connected to the first bracket in a wrap-around manner (detachable), for example, the end of the rope body 46B1 may be wrapped around the first bracket to fix the carrier. In yet another embodiment, the carrier 4600 may also include the first positioning slot and two first shoulder belt connectors to fit with the shoulder belt to enable multiple application modes. The other structures of this embodiment are similar to those of the aforementioned embodiment and also have similar various changes, so they will not be repeated herein for the sake of brevity. In addition, the structures of the first fixing rope connector and the second fixing rope connector may be interchangeable, for example, the first fixing rope connector may be a snap hook and the second fixing rope connector may be a snap ring, or they may have other structures, and the present disclosure is not limited thereto.

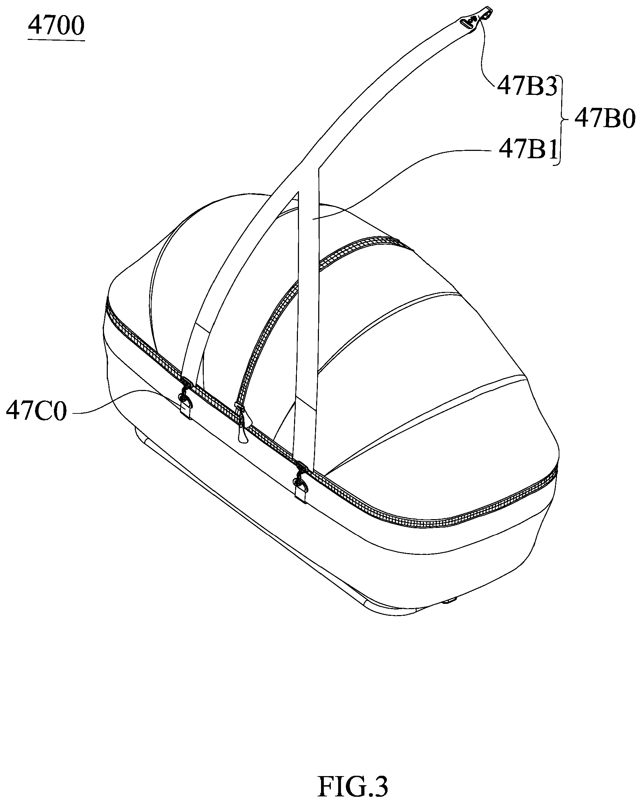

With reference further to FIG. 3, FIG. 3 is a schematic diagram of the appearance of a carrier 4700 according to a third embodiment of the first aspect of the present disclosure. As shown in FIG. 3, the difference from the aforementioned second embodiment is that the rope body 47B1 (i.e., the strap body) of the fixing rope 47B0 (as an example of a "strap assembly") is in a Y-shape. The fixing rope 47B0 has a first connecting end (i.e., a first end) and two second connecting ends (i.e., two second ends), where the fit of the fixing rope 47B0 to the vehicle seat is achieved by buckling the snap hook 47B3 (i.e., the first connecting end), which is provided at an end of the rope body 47B1 away from the first bracket, to the headrest support rod or the backrest engaging rod of the vehicle seat (e.g., a car seat). The two second connecting ends of the fixing rope 47B0 are respectively connected to two first fixing rope connectors 47C0 provided on the box body 4700 or the bracket apparatus (e.g., the first bracket). It should be noted that the first end and the second end of the fixing rope 47B0 (specifically, the rope body 47B1) do not necessarily refer to the ends thereof, where the "first end" may be considered as a portion that is provided with a connection apparatus such as a snap hook 47B3, or a portion that is connected to the vehicle seat. The "second end" may be considered as a portion connected to the first fixing rope connector 47C0 (for example, a position where a second connector that fits with the first fixing rope connector 47C0 is provided), or a portion connected to the box body 4700 and/or the bracket apparatus (in the absence of the first fixing rope connector 47C0 and the second connector that fits with it).

It should be noted that, with reference to the above description, the "shoulder belt 4590", "fixing rope 46B0" and "fixing rope 47B0" of the first aspect of the present disclosure may be collectively referred to as the "strap assembly", the "first shoulder belt connector 45A0", "first fixing rope connector 46C0" and "first fixing rope connector 47C0" may be collectively referred to as the "first connector", and the "second shoulder belt connector 4592" and "second fixing rope connector 46B2" may be collectively referred to as the "second connector".

A second aspect of the present disclosure provides an adjusting strap assembly and a carrier that uses the adjusting strap assembly.

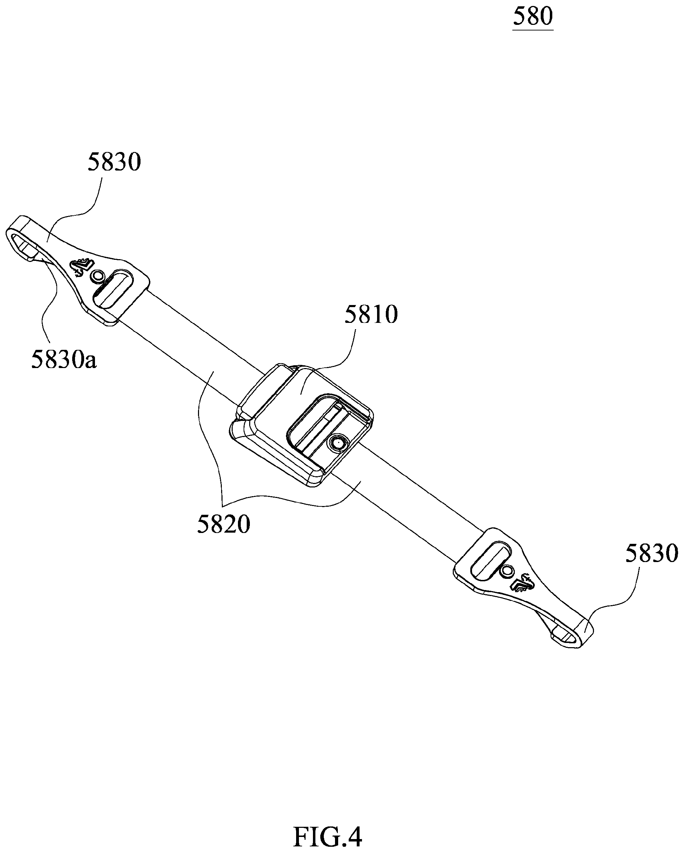

Referring to FIG. 4, an adjusting strap assembly 580 according to the present disclosure is schematically illustrated.

As shown in FIG. 4, the adjusting strap assembly 580 includes an adjuster 5810, a connecting tether 5820 and a connecting member 5830. The adjuster 5810 may adjust the overall length of the adjusting strap assembly 580. For example, the connecting member 5830 is a hook-shaped member and is provided with a closing member 5830a, one end of the closing member 5830a is pivotally connected to the hook-shaped member and forms a ring with the hook-shaped member to prevent the hook-shaped member from being disengaged after hooking or buckling the target object.

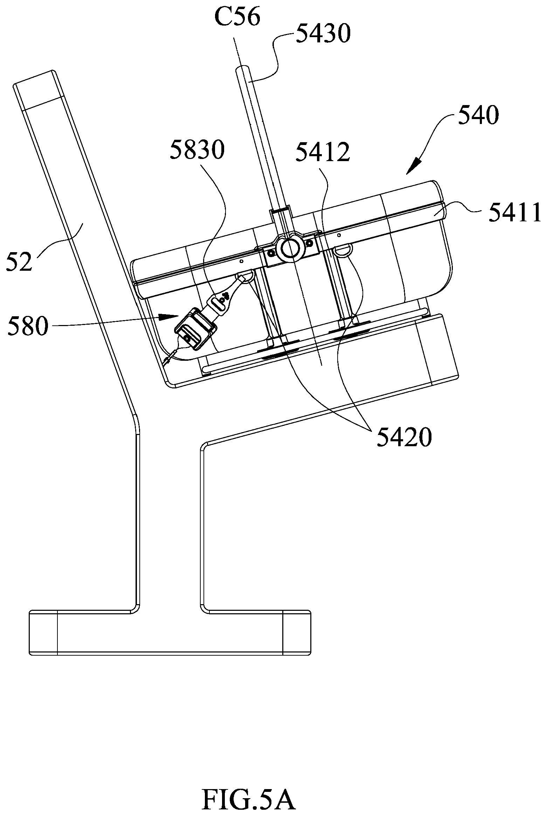

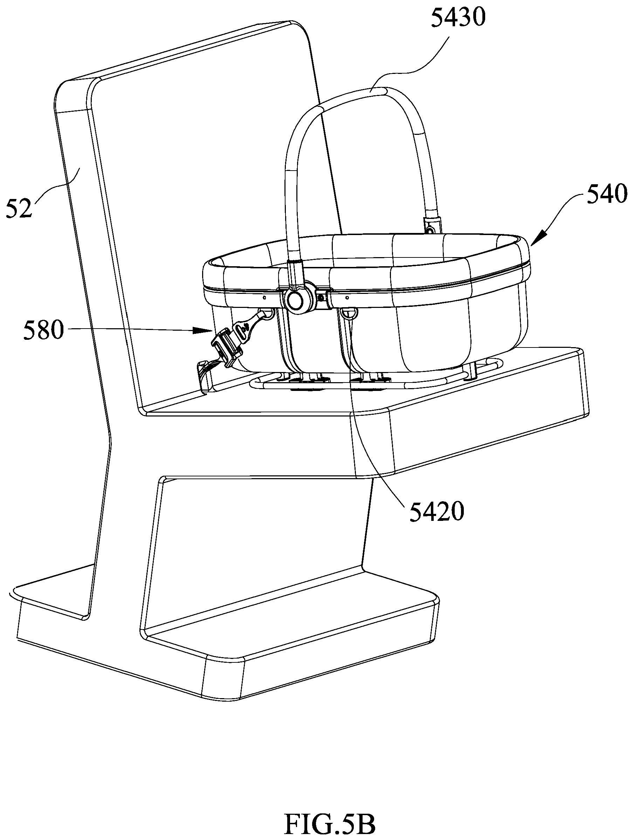

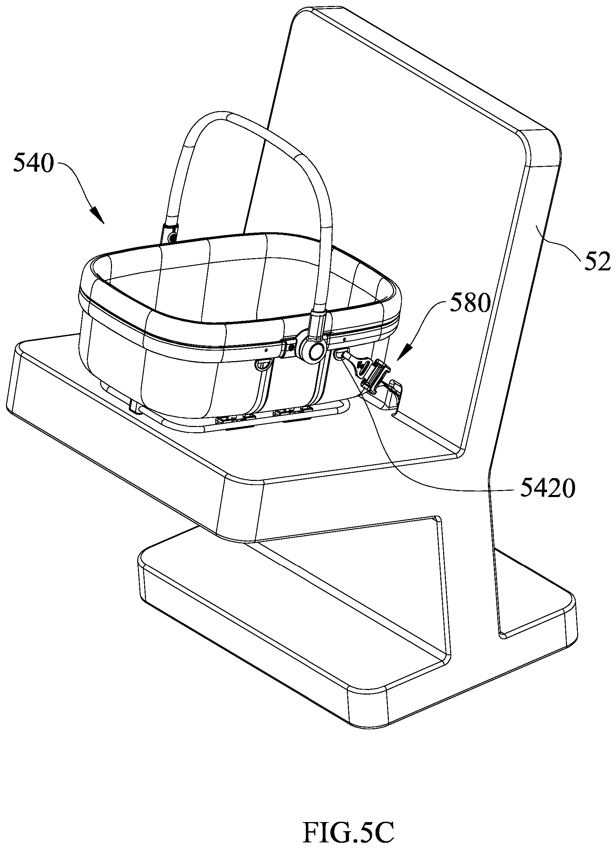

Referring to FIGS. 5A to 5C, which schematically illustrate a carrier 540 according to a first embodiment of the second aspect of the present disclosure and a connection through which it is connected to the adjusting strap assembly 580. FIG. 5A is a side view of a carrier 540 connected to a vehicle seat 52, and FIGS. 5B and 5C are perspective views viewed from different angles. The carrier according to the second aspect of the present disclosure may have a structure similar to that of the carrier according to the first aspect, for example, a box body, a bracket apparatus and/or a canopy assembly, etc., which will not be described in detail herein. In addition, the carrier 540 in this embodiment may further include a handle 5430 for lifting the carrier 540, where the first bracket 5411 is of a substantially rectangular structure, which is generally horizontally arranged at an upper end of the bracket apparatus and is configured as an upper frame of the bracket apparatus, and is used to connect the handle 5430.

The adjusting strap assembly 580 is used to secure the carrier 540 to the vehicle seat 52.

As shown in FIG. 5A, the two long sides (i.e., the longer sides) of the carrier 540 are respectively provided with buckles 5420 (i.e., mating parts connected to the connecting member 5830) for connecting with the adjusting strap assembly 580. The buckles 5420 on both sides are symmetrically arranged, and at least one buckle 5420 is arranged on each side (two buckles are used as an exemplary illustration in this embodiment). The two buckles 5420 on the same side are symmetrically arranged relative to a center line C56 of the long side of the carrier 540, where a pivot axis of the handle 5430 of the carrier 540 and the center line C56 are in the same vertical plane. The two buckles 5420 on the same side may be respectively located on the first bracket 5411 of the carrier 540, for example, near the position where the second bracket 5412 (vertical) is connected to the first bracket 5411, i.e., at the end of the vertical section of the second bracket of the carrier 540. Compared with other setting positions on the first bracket, this position is less likely to be deformed when subjected to tension, thereby providing the carrier 540 with a greater impact resistance.

In an embodiment, as shown in FIGS. 5B to 5C, when the carrier 540 is placed with its short sides against the vehicle seat 52, the two sides (long sides) of the carrier 540 are respectively connected to the vehicle seat 52 via the adjusting strap assemblies 580, such as connection ports on the vehicle seat. In this embodiment, the adjusting strap assembly 580 on each side (FIGS. 5B and 5C each show the adjusting belt assembly 580 on one side) is connected between the buckle 5420 close to the vehicle seat 52 and the vehicle seat 52.

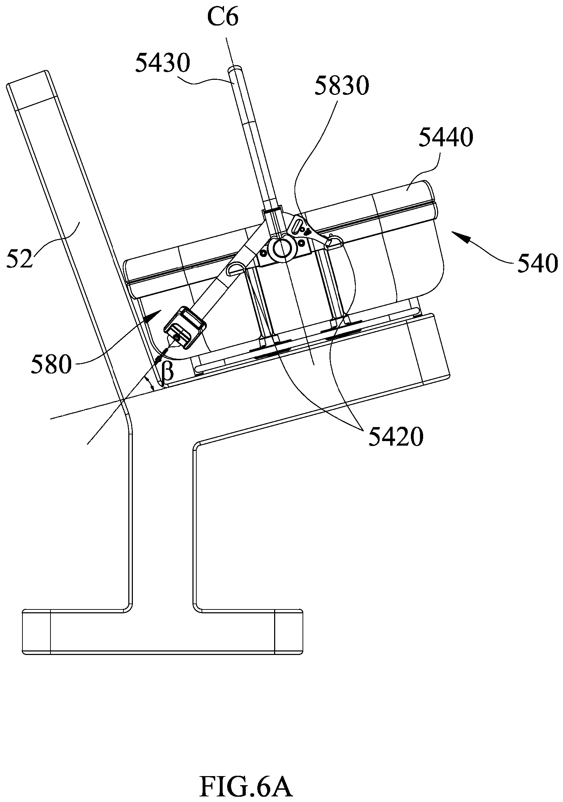

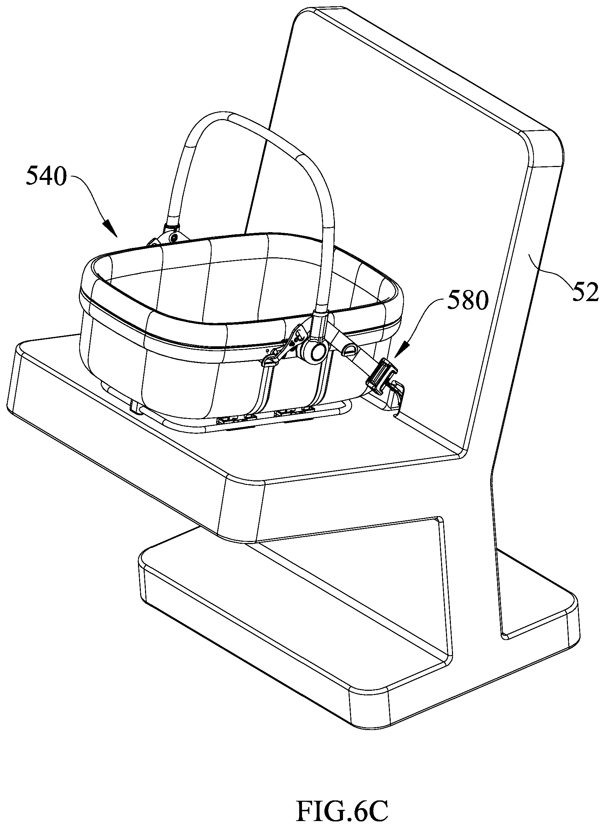

Referring to FIGS. 6A to 6C, another connection between the carrier 540 and the vehicle seat 52 is schematically illustrated.

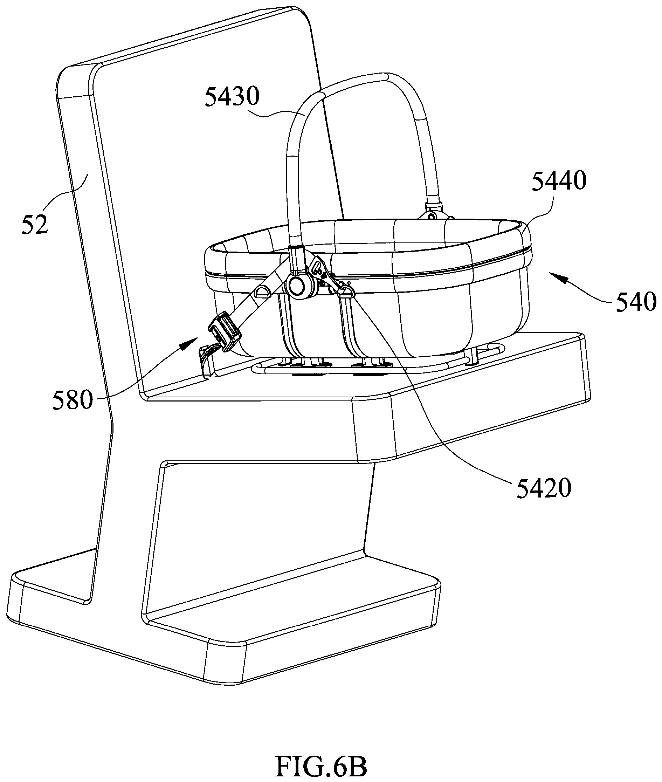

In another embodiment, when the carrier 540 is placed with its short sides against the vehicle seat 52, the adjusting strap assemblies 580 located on both sides of the carrier 540 may be connected to the connection ports of the vehicle seat 52 through the buckles 5420 away from the vehicle seat 52. Specifically, one end of the adjusting strap assembly 580 is connected to the buckle 5420 away from the vehicle seat 52, and the other end passes between the handle 5430 and the box body 5440 of the carrier 540 (as shown in FIG. 6B, similar to hanging at a position where the handle 5430 and the box 5440 are connected) and is connected to the vehicle seat 52, so that the carrier 540 can be placed on the vehicle seat 52 more stably.

By such a connection, an angle β (as shown in FIG. 6A ) between the adjusting strap assembly 580 from the handle 5430 to the connection port of the vehicle seat 52 and the seat surface of the vehicle seat 52 is an angle of approximately 45°, thereby making the connection more secure to withstand greater impact forces. Of course, the present disclosure is not limited thereto, and the angle between the adjusting strap assembly 580 and the seat surface may also be greater than or less than 45°.

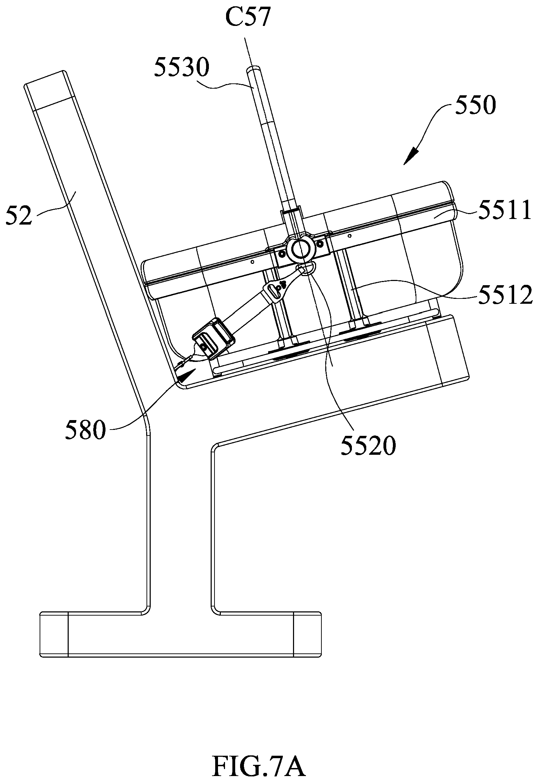

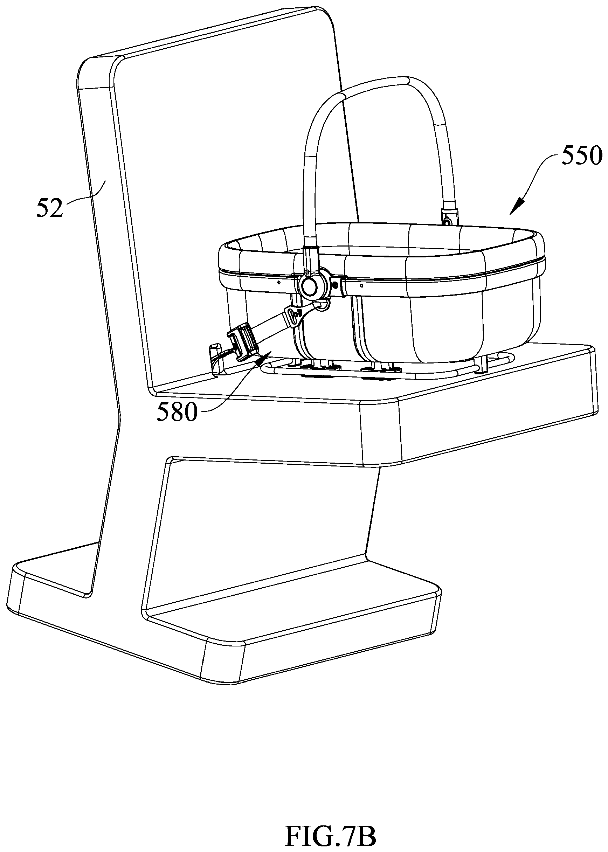

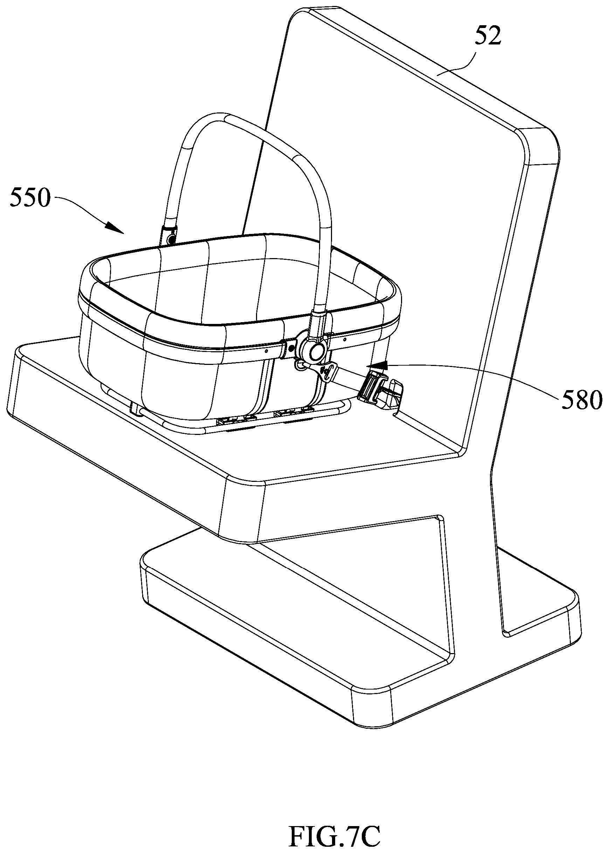

Referring to FIG. 7A to FIG. 7C, a connection manner between a carrier 50 and the vehicle seat 52 according to a second embodiment of the second aspect of the present disclosure is schematically illustrated.

In one embodiment, buckles 5520 (i.e., mating parts) for connecting with the adjusting belt assembly 580 are respectively provided on the two long sides of the carrier 550, and one buckle 5520 is provided on each side. As shown in FIG. 7A, the buckle 5520 is provided below a pivot axis of the handle 5530 and is located on a center line C57 of the long side of the carrier 550. In other embodiments, the buckle 5520 may also be provided in the middle of a first bracket 5511 (e.g., located at the center line C57), or may also be provided at the end of the first bracket 5511 close to a second bracket 5512 to better withstand the tensile force.

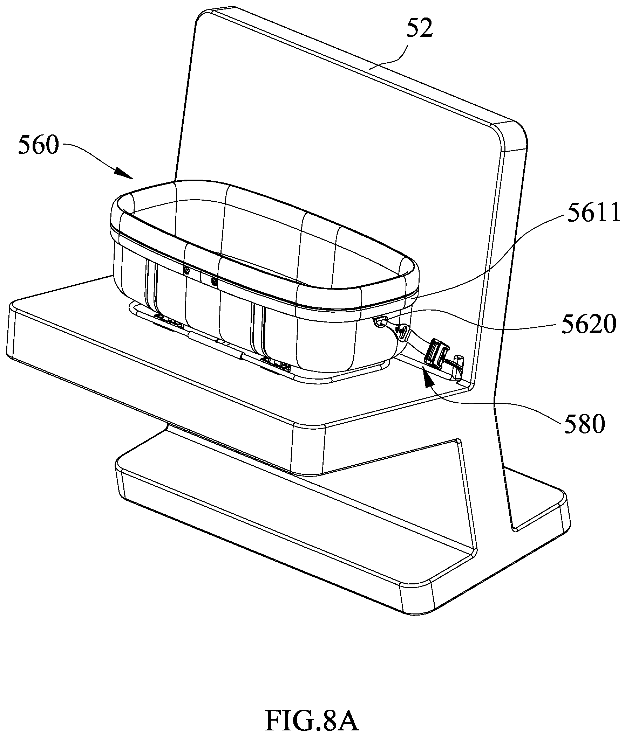

Referring to FIG. 8A to FIG. 8C, a connection manner between a carrier 560 and the vehicle seat 52 according to a third embodiment of the second aspect of the present disclosure is schematically illustrated.

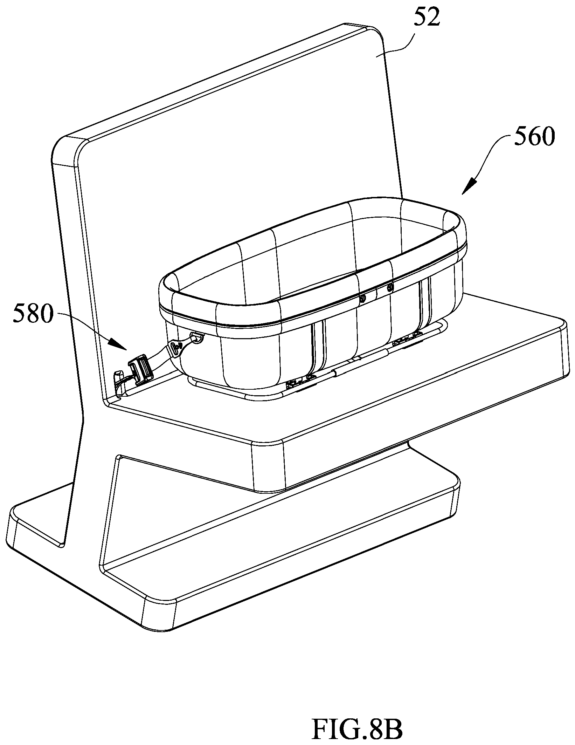

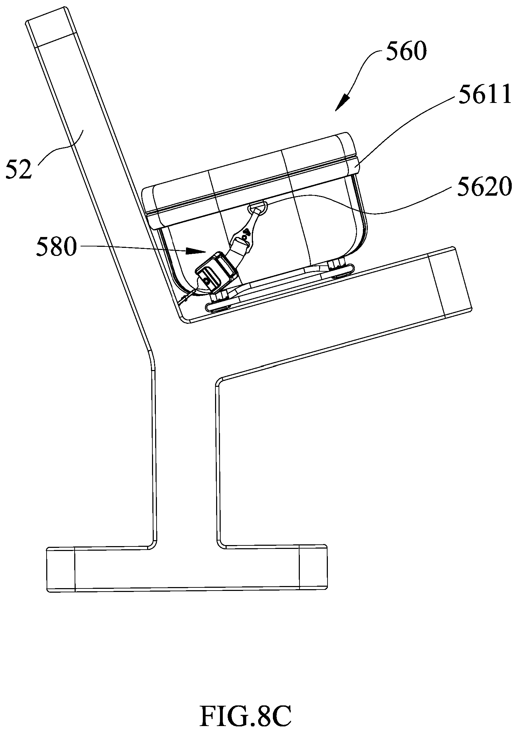

As shown in FIG. 8A and FIG. 8B, the carrier 560 in this embodiment is arranged with a long side against the vehicle seat 52, and each of the two short sides of the carrier 560 is provided with a buckle 5620 (i.e., mating part) for connecting with the adjusting belt assembly 580. As shown in FIG. 8C, the buckle 5620 is disposed below the first bracket 5611 of the carrier 560, and optionally, at a midpoint of the first bracket 5611 on the short side. By placing the long side against the vehicle seat, the overall center of gravity of the carrier 560 is closer to the seat back, so that the possibility of inertia forward leaning when the vehicle brakes or starts is reduced, and the carrier 560 is more stably placed on the vehicle seat 52, thereby improving safety and impact resistance.

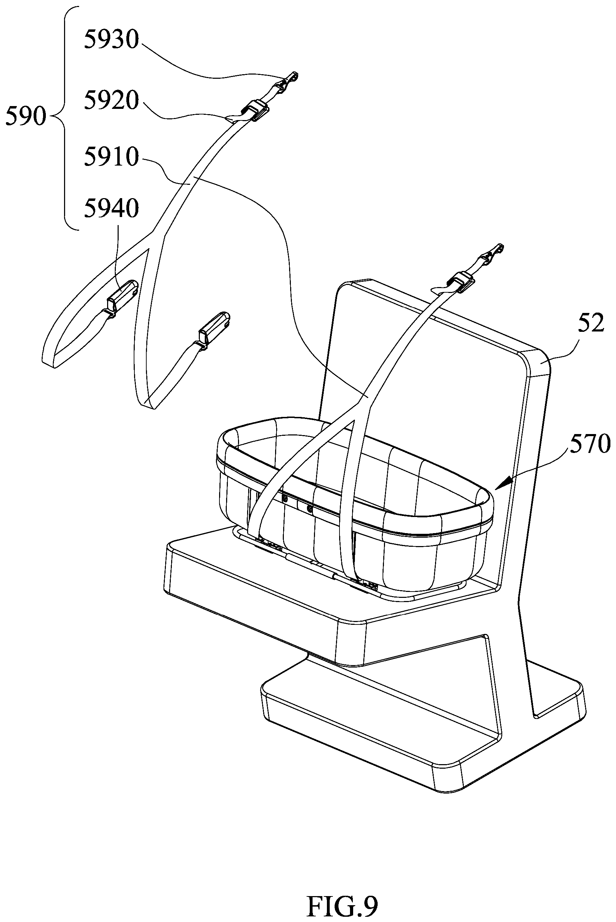

Referring to FIG. 9, a third aspect of the present disclosure further provides a fixing strap assembly and a carrier that uses the fixing strap assembly. Specifically, FIG. 9 schematically shows a carrier 570 and a fixing strap assembly 590 for fixing the carrier 570 to the vehicle seat 52 according to a first embodiment of the third aspect of the present disclosure. The carrier according to the third aspect of the present disclosure may have a structure similar to that of the carrier of the first aspect and/or the second aspect, for example, a box body, a bracket apparatus and/or a canopy assembly, etc., which will not be described in detail herein.

As shown in FIG. 9, the fixing strap assembly 590 includes a restraining strap 5910, a first adjusting portion 5920, a first connecting end 5930 and second connecting ends 5940 (i.e., fixing ends). The fixing strap assembly 590 is used to fix the carrier 570 to the vehicle seat 52.

The restraining strap 5910 may be in the shape of an inverted "Y". The first connecting end 5930 may correspond to a lower end of the "Y" shape of the restraining strap 5910, and the second connecting ends 5940 correspond to upper ends of the "Y" shape of the restraining strap 5910, that is, there are two second connecting ends 5940. In other embodiments, the restraining strap 5910 may also have other shapes. The first adjusting portion 5920 is provided on the restraining strap 5910 and is used to adjust the length of the restraining strap 5910 to adapt to the shape of the carrier 570 and fix it on the vehicle seat 52.

In an embodiment, the first connecting end 5930 is connected to an upper portion of the vehicle seat 52, or passes around the upper portion of the vehicle seat 52 to fit with a connecting structure on a rear side thereof. The second connecting end 5940 extends along the bottom of the carrier 570 and is connected to the vehicle seat 52, for example, connected to a connecting apparatus on a lower side of the backrest of the vehicle seat 52, or the second connecting end 5940 passes underneath the backrest of the vehicle seat 52, so that the first connecting end 5930 and the second connecting end 5940 may be connected to each other on the rear side of the vehicle seat 52, thereby securing the carrier 570 to the vehicle seat 52. That is, the restraining strap 5910 passes around a side of the box body of the carrier 570 away from the backrest of the vehicle seat 52, and the first connecting end 5930 and the second connecting end 5940 are respectively connected to the vehicle seat 52 or connected to each other. Of course, the present disclosure is not limited thereto, and the first connecting end and the second connecting end may be used in other ways to secure the carrier 570 to the vehicle seat 52. For example, the first connecting end 5930 may be hook-shaped and used to connect to other apparatuses in the vehicle. For example, the first connecting end 5930 may be a hook-shaped structure that is directly engaged with the connecting rod between the backrest and the headrest, or engaged with the connecting rod on the rear side of the backrest, etc.; the second connecting end 5940 may have a connector that is connected to the connection port of the vehicle seat 52.

In addition, when the second connecting end 5940 of the restraining strap 5910 extends along the bottom of the carrier 570, the restraining strap 5910 is able to be at least partially secured to the bottom of the carrier 570 via a fixing apparatus (e.g., a notch, a clamp, a screw, etc.), so that the restraining strap 5910 would not slide with respect to the carrier 570, thereby better fixing the carrier 570 to the vehicle seat 52.

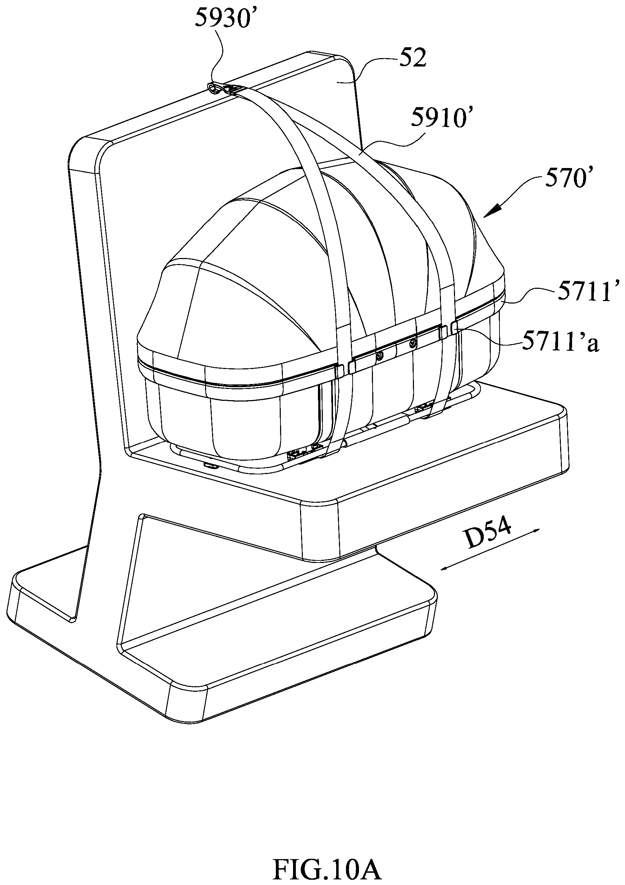

Referring to FIGS. 10A to 10C, a carrier 570' and another fixing strap assembly 590' that secures the carrier 570' to the vehicle seat 52 according to a second embodiment of the third aspect of the present disclosure are schematically illustrated.

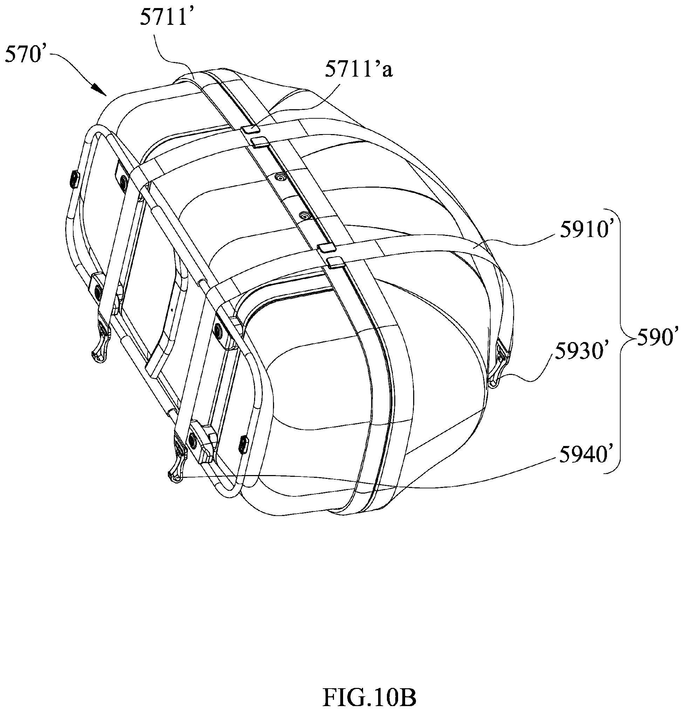

As shown in FIGS. 10A and 10B, the fixing strap assembly 590' is used to fix the carrier 570' to the vehicle seat 52, and fixing strap assembly 590' includes a restraining strap 5910', a first connecting end 5930', and second connecting ends 5940'. The restraining strap 5910' is connected between the first connecting end 5930' and the second connection end 5940'. In an embodiment, the fixing strap assembly 590' may include a plurality of restraining straps 5910' (two restraining straps 5910' are taken as an example in this embodiment), one first connecting end 5930' and a plurality of second connecting ends 5940' (two second connecting ends 5940' are taken as an example in this embodiment). Each of the plurality of restraining straps 5910' is respectively connected between the first connecting end 5930' and a corresponding second connecting end of the plurality of second connecting ends 5940'. In another example, the restraining strap 5910' may be composed of one strap, the two ends of the strap constitute two second connecting ends 5940' respectively, and a middle portion thereof has a turning point to constitute the first connecting end 5930', but the present disclosure is not limited thereto.

In an embodiment, the restraining strap 5910' has a certain elasticity so that when the carrier 570' is placed between the restraining strap 5910' and the vehicle seat 52, and the first connecting end 5930' and the second connecting end 5940' are both connected to corresponding positions of the vehicle seat 52 (at this time, the restraining strap 5910' is stretched), pressure is exerted on the carrier 570' due to its elastic effect, thereby better pressing the carrier 570' against the vehicle seat 52. Optionally, the fixing strap assembly 590' may also include a first adjusting portion (not shown in the drawing), which is provided on the restraining strap 5910' and is used to adjust the length of the restraining strap 5910' to adapt to the shape of the carrier 570' and fix it to the vehicle seat 52.

In addition, the first connecting end 5930' and the second connecting end 5940' may be hook-shaped and used to connect to other apparatuses in the vehicle. For example, the first connecting end 5930' is in a hook-shaped structure and engaged with the connecting rod between the backrest and the headrest, or engaged with the connecting rod on the rear side of the backrest, etc.; the second connecting end 5940' may be a connector in another form, which is connected to the corresponding connection port of the vehicle seat 52.

Accordingly, in an embodiment, as shown in FIGS. 10A and 10B, a fixing buckle 5711'a may further be provided on the first bracket 5711' of the carrier 570'. The fixing buckle 5711'a may be fixedly connected, e.g., by rivets, screws, etc., to the first bracket 5711' for accommodating the restraining strap 5910' of the strap assembly 590' to prevent it from sliding laterally. As shown in FIG. 10B, the fixing buckle 5711'a is a C-shaped structure, and the restraining strap 5910' of the fixing strap assembly 590' is engaged in an accommodation space formed by the C-shaped structure, thereby limiting the movement of the restraining strap 5910' in a lateral direction D54 as shown in FIG. 10A, thus enabling the carrier 570' to be more stably fixed on the vehicle seat 52. In an example, when the carrier 570' is placed on the vehicle seat, the fixing buckle 5711'a is provided on a side of the first bracket 5711' away from the vehicle seat. However, the present disclosure is not limited thereto, and the restraining strap 5910' may also be fixed to the bottom or other portions of the carrier 570' in other ways. It should be noted that the "fixing buckle" in this embodiment may also be considered as a strap guiding mechanism. In this embodiment, the number of the fixing buckles may be proportional to the number of the second connecting ends, e.g., be the same as the number of the second connecting ends, or twice the number of the second connecting ends, etc. In other embodiments, the number of fixing buckles may also be less than the number of second connecting ends, but the present disclosure is not limited thereto.

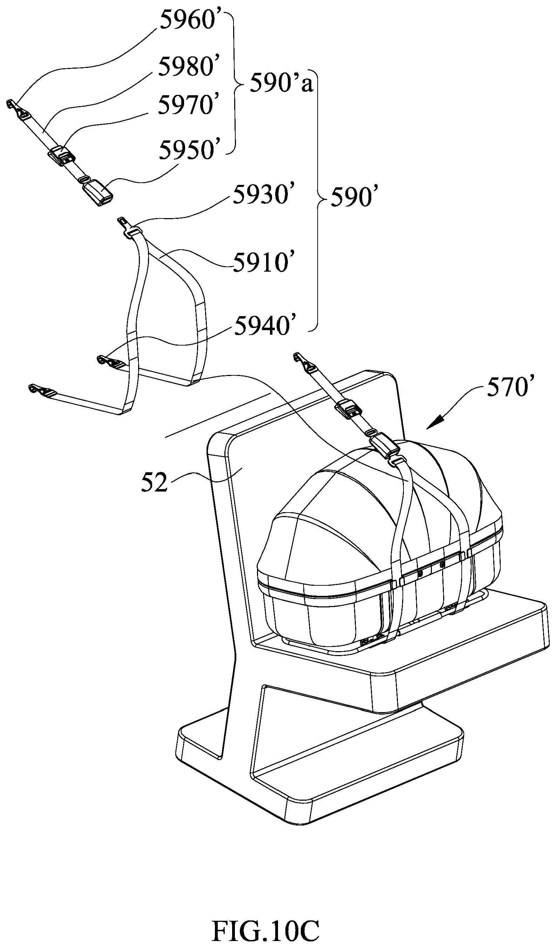

In addition, as shown in FIG. 10C, the fixing strap assembly 590' may further include an extending component 590'a, and the extending component 590'a includes an extending strap 5980', a third connecting end 5950', a fourth connecting end 5960' and a second adjusting portion 5970'. The first connecting end 5930' of the fixing strap assembly 590' may be connected to the third connecting end 5950' of the extending component 590'a, and the fourth connecting end 5960' of the extending component 590'a is then connected to the vehicle seat 52. The second adjusting portion 5970' is provided on the extending strap 5980' between the third connecting end 5950' and the fourth connecting end 5960' and may be adjusted to increase or shorten the available length of the extending strap 5980', so that the overall length of the fixing strap assembly 590' is increased or shorten, thereby adapting to different types of vehicles and carriers of different sizes. In addition, providing the extending component 590'a makes it easier to install, remove and store the fixing strap assembly 590', and it is also more helpful to conveniently and quickly secure the fixing strap assembly 590' to the vehicle seat 52.

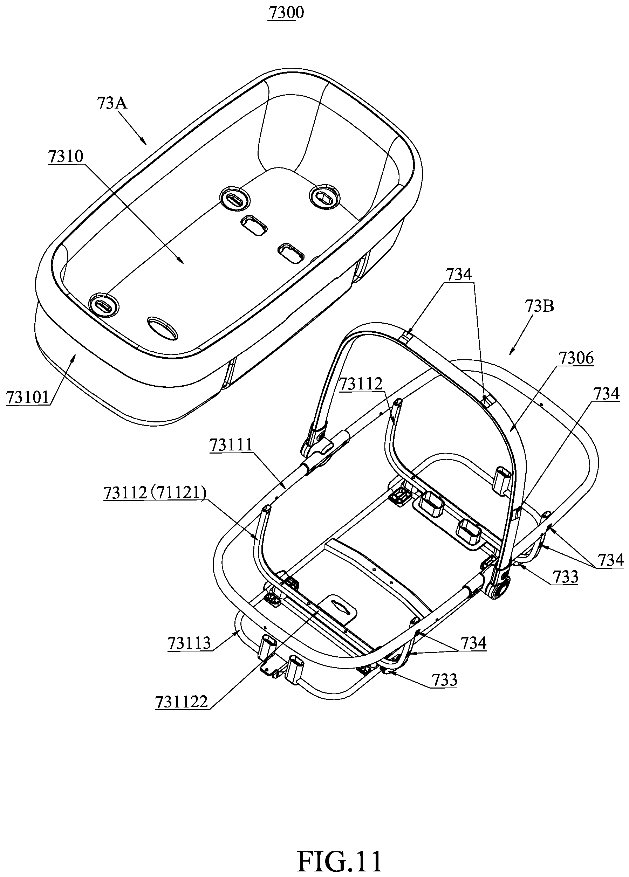

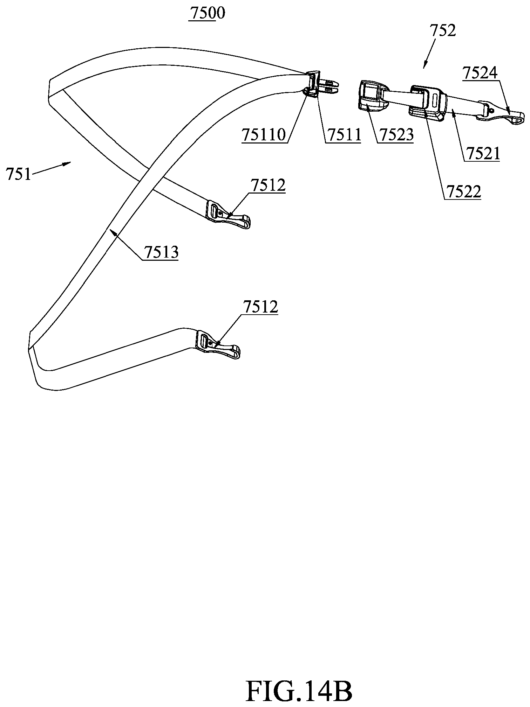

FIGS. 11 to 14A illustrate a carrier 7300 according to a first embodiment of a fourth aspect of the present disclosure, and FIG. 14B illustrates a fixing strap assembly 7500 used in conjunction with the carrier 7300.

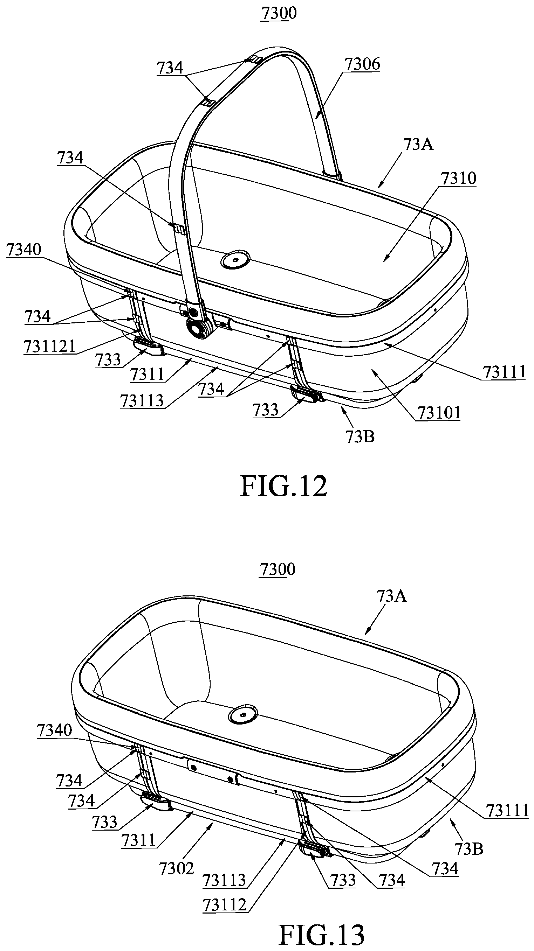

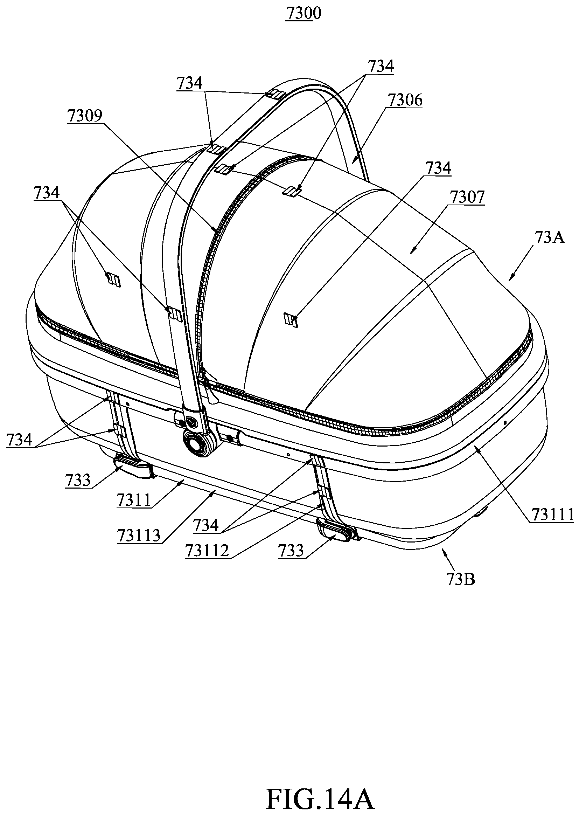

In some examples, the carrier 7300 may be an open box structure with a rigid handle 7306 (e.g., a baby carrier, see FIGS. 11 and 12), or an open box structure without a handle 7306 (see FIG. 13), or a box structure with a canopy 7307 but without a carrying handle, or a closable box structure with both a canopy 7307 and a handle 7306 (see FIG. 14A). The carrier 7300 may be configured with a plurality of strap guiding mechanisms so that there is a plurality of connecting points between the fixing strap assembly 7500 and the carrier 7300, so that the carrier 7300 is better secured to the vehicle seat and is not easy to slide left and right.

The following description is made by taking the carrier 7300 shown in FIGS. 11 and 12 as an example. The carrier 7300 includes a box body 73A and a bracket apparatus 73B. The box body 73A defines an accommodation space 7310. The accommodation space 7310 is used to accommodate children or animals, for example. The box body 73A may be made of, for example, but not limited to, a foam material. The bracket apparatus 73B, for example, includes a first bracket 73111, two second brackets 73112, and a third bracket 73113. The first bracket 73111 and the third bracket 73113 are arranged substantially in parallel and in annular structures. Each second bracket 73112 is in a U-shaped structure and has a vertical section 731121 and a horizontal section 731122, and the first bracket 73111 and the third bracket 73113 are connected via two second brackets 73112. The box body 73A is supported by the bracket apparatus 73B, the vertical sections 731121 of the first bracket 73111 and the second bracket 73112 are bonded to an outer peripheral wall 73101 of the box body 73A, and the horizontal section 731122 of the second bracket 73112 and the second bracket 73112 are located, for example, underneath the box body 73A. The engaging member 7311 is formed on the third bracket 73113.

As can be seen from FIGS. 11 and 12, the sides and bottom of the main structure of the carrier 7300 (including the box body 73A and the bracket apparatus 73B) may be provided with strap guiding mechanisms, and the top and sides of the handle 7306 of the carrier 7300 may also be provided with strap guiding mechanisms. More specifically, the strap guiding mechanisms on the main structure of the carrier 7300 may, for example, be provided at the positions of the third bracket 73113 corresponding to the vertical section 731121 of each second bracket, on the vertical section 731121 of each second bracket 73112, and at the positions of the first bracket 73111 corresponding to the vertical section 731121 of each second bracket. In some embodiments, the strap guiding mechanism 733 on the third bracket 73113 may include a bottom shell 7331 and a top shell 7332, where the bottom shell 7331 and the top shell 7332 define a channel for a webbing strap of the fixing strap assembly to pass through so that the webbing strap will not easily slip relative to the bracket apparatus 73B. The specific structure of the strap guiding mechanism 733 will be described below by way of example. The strap guiding mechanisms 734 on the second bracket 73112 and the first bracket 73111 (e.g., on a side away from the vehicle seat) may be, for example, in a C-shaped structure with an opening 7340. The strap guiding mechanisms 734 on the top and sides of the handle 7306 may also be in a C-shaped structure. The restraining straps of the fixing strap assembly 7500 (see FIG. 14B) pass through these strap guiding mechanisms either separately or in parallel and are connected to the carrier 7300, so that the carrier 7300 is stably secured to the vehicle seat.

In an example, as shown in FIG. 14B, a fixing strap assembly 7500 is further provided in this embodiment. The fixing strap assembly 7500 includes, for example, a restraining strap assembly 751 and an extending component 752.

The restraining strap assembly 751 includes, for example, a first connecting end 7511 and at least one second connecting end 7512. The first connecting end 7511 and each second connecting end 7512 may be connected by a plurality of restraining straps, and the restraining straps may be elastic webbing straps. In the embodiment, the restraining strap assembly 751 has two second connecting ends 7512, and the two second connecting ends 7512 are connected by a single restraining strap 7513. In some embodiments, the first connecting end 7511 may have a hole 75110 for the restraining strap to pass through, and the hole 75110 slidably fits with the restraining strap 7513, so that the position of the first connecting end 7511 on the restraining strap 7513 is adjustable. In some embodiments, the second connecting end 7512 is, for example, an ISOFIX insert to be detachably connected to an ISOFIX socket of a vehicle seat, that is, the second connecting end 7512 is connected to the vehicle seat underneath the carrier 7300. Of course, the type of the second connecting end 7512 is not limited to the ISOFIX insert, and it may be any suitable type such as a hook, a buckle, etc.

The extending component 752 includes, for example, an extending strap 7521, an adjusting portion 7522, a third connecting end 7523, and a fourth connecting end 7524. The extending strap 7521 is, for example, webbing strap, and the third connecting end 7523 and the fourth connecting end 7524 are respectively connected to the extending strap 7521. The third connecting end 7523 is used to be detachably connected to the first connecting end 7511 of the restraining strap assembly 751. The third connecting end 7523 and the first connecting end 7511 may be any suitable structure such as a buckle or hook that fits with each other. The fourth connection end 7524 is used to be detachably connected to a suitable structure in the vehicle (e.g., a connection structure on the top of a vehicle seat, or a connection structure on the back of the backrest of a vehicle seat). That is, the fourth connecting end 7524 is connected to the vehicle seat above the carrier 7300 to secure the carrier 7300 to the vehicle seat. The fourth connecting end 7524 may be any suitable type, such as a hook, a buckle, etc. The adjusting portion 7522 is provided on the extending strap 7521 to adjust the available length of the extending strap 7521 between the third connecting end 7523 and the fourth connecting end 7524.

In practice, the fourth connecting end 7524 of the extending component 752 may remain connection to a suitable structure in the vehicle, and the connection position of the first connecting end 7511 and the third connecting end 7523 is located in a place that is easily accessible to the user, such as the top or front side of the vehicle seat backrest. This allows the user to easily secure the carrier 7300 to or remove it from the vehicle seat by conveniently manipulating the attachment or detachment of the first connecting end 7511 and the third connecting end 7523.

By way of example, in this embodiment, referring to FIGS. 11 , 12 and 14B, after the two second connecting ends 7512 are connected to the ISOFIX sockets of the vehicle seat, the restraining strap 7513 extends forward along the horizontal sections 731122 of the two second brackets 73112 shown in FIGS. 11 and 12 and is fixed to two sides of a bottom outer side wall edge of the carrier 7300 (i.e., the left and right sides of an edge of a front side wall of the carrier 7300 mounted on the vehicle seat) via, for example, two strap guiding mechanisms 733 on the third bracket 73113. The restraining strap 7513 then extends upward along the vertical sections 731121 of the two second brackets 73112 and is fixed to the outer side wall of the carrier 7300 via the strap guiding mechanism 734 thereon, and then extends backward along the handle 7306 and is fixed to the handle via at least one strap guiding mechanism 734 thereon, and finally is connected to a suitable structure in the vehicle by the fourth connecting end 7524 to secure the carrier 7300 to the vehicle seat. It should be noted that the "bottom outer side wall edge " in this embodiment may be considered as an outer side of the intersection of a side wall and a bottom of the carrier 7300, or a bottom edge of the carrier 7300 away from the backrest of the vehicle seat when it is placed on the vehicle seat. That is to say, two strap guiding mechanisms 733 may be symmetrically provided at the bottom edge on a side of the carrier 7300 away from the backrest of the vehicle seat.

The carrier 7300 shown in FIG. 13 differs from the carrier 7300 shown in FIG. 12 mainly in that there is no handle 7306 as shown in FIG. 12. The carrier 7300 shown in FIG. 13 may be referred to the description of the carrier 7300 as shown in FIG. 12. By way of example, as shown in FIG. 14B, after the two second connecting ends 7512 are connected to the ISOFIX sockets of the vehicle seat, the restraining strap 7513 extends forward along the horizontal sections of the two second brackets 73112 shown in FIG. 13 and is fixed to two sides of the edge of the bottom outer side wall of the carrier 7300 through, for example, two strap guiding mechanisms 733 on the third bracket 73113. The restraining strap 7513 then extends upward along the vertical sections of the two second brackets 73112 and is fixed to the outer side wall of the carrier 7300 via the strap guiding mechanisms 734 thereon, and then is connected to a suitable structure in the vehicle by the fourth connecting end 7524 to secure the carrier 7300 to the vehicle seat.

The carrier 7300 shown in FIG. 14A is provided with a canopy 7307 compared to the carrier 7300 shown in FIG. 12. Sides and a top of the canopy 7307 may be provided with strap guiding mechanisms 734. The restraining strap 7513 of the fixing strap assembly 7500 (see FIG. 14B) may pass through the strap guiding mechanisms 734 on the canopy 7307 or through the strap guiding mechanisms 734 on the handle 7306. By way of example, as shown in FIG. 14B, after the two second connecting ends 7512 are connected to the ISOFIX sockets of the vehicle seat, the restraining strap 7513 extends forward along the horizontal sections of the two second brackets 73112 shown in FIG. 14A and is fixed to the two sides of the bottom outer side wall edge of the carrier 7300 via, for example, two strap guiding mechanisms 733 on the third bracket 73113. The restraining strap 7513 then extends upward along the vertical sections of the two second brackets 73112 and is fixed to the outer side wall of the carrier 7300 via the strap guiding mechanisms 734 thereon, and then extends backward along the two sides of the canopy 7307 (specifically, for example, along two sides of a zipper structure 7309 of the canopy 7307) and is fixed to the canopy 7307 via at least one strap guiding mechanism 734 corresponding to the two sides of the canopy 7307, and finally is connected to a suitable structure in the vehicle by the fourth connecting end 7524 to secure the carrier 7300 to the vehicle seat.

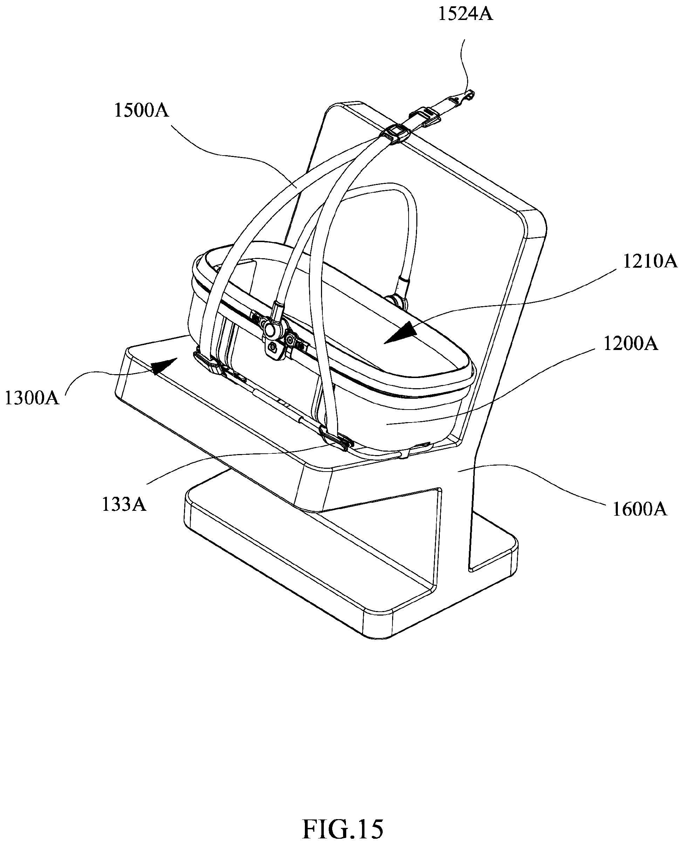

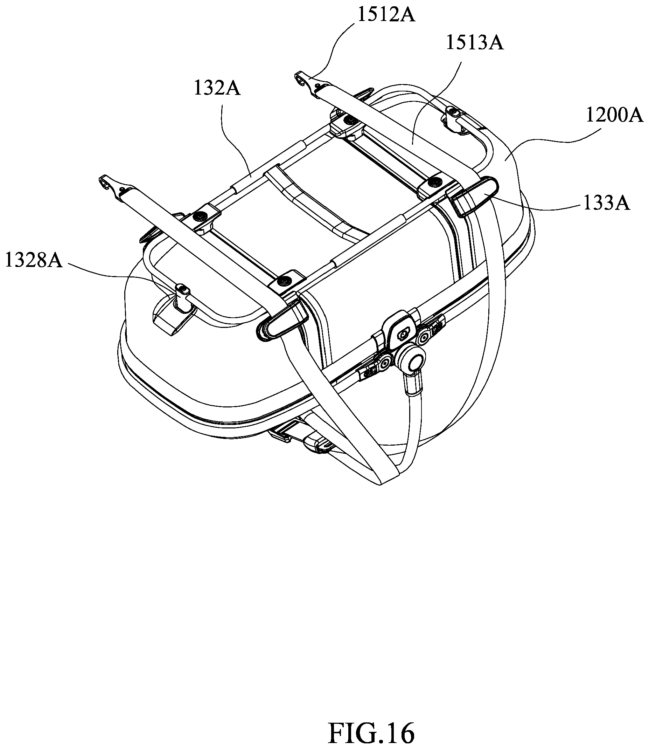

Referring to FIG. 15 and FIG. 16, a second embodiment of the fourth aspect of the present disclosure provides a carrier, which includes a bracket apparatus 1300A, a plurality of strap guiding mechanisms 133A, and a fixing strap assembly 1500A. The carrier (such as a sleeping basket, etc.) of this embodiment further includes a box body 122A provided on the bracket apparatus 1300A. Specifically, the bracket apparatus 1300A at least partially surrounds the box body 122A and supports the box body 122A. The fixing strap assembly 1500A passes through a plurality of strap guiding mechanisms 133A to form a plurality of connecting points between the fixing strap assembly 1500A and the bracket apparatus 1300A, thereby better securing the box body 122A to the vehicle seat 1600A without easily slipping forward, backward, left, and right.

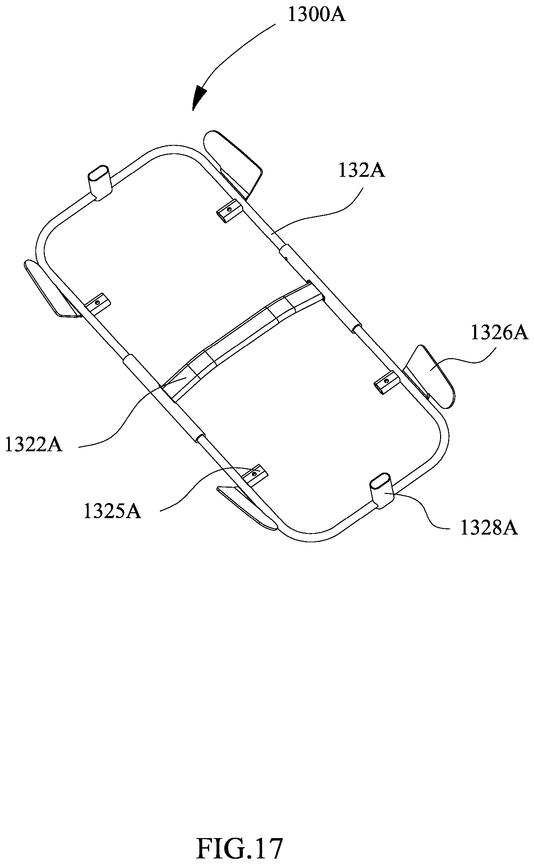

Referring to FIG. 17, the bracket apparatus 1300A in this embodiment includes a first shelf 132A (also referred to as a "third bracket", but its structure is similar to the third bracket in the aforementioned embodiments). The first shelf 132A is a substantially annular square frame. A supporting rod 1322A is provided between the two long sides of the first shelf 132A. Four symmetrically distributed fixing sheets 1326A are provided on the two long sides of the firs support 132A. The four fixing sheets 1326A are arranged in pairs facing each other and are inclined in a direction away from each other. Each strap guiding mechanism 133A may be secured to a fixing sheet 1326A through a fastener such as a screw. Specifically, each fixing sheet 1326A includes an inner side close to the box body 122A and an outer side away from the box body 122A, and each belt guiding mechanism 133A is fixed to an outer side of the fixing sheet 1326A. It may be understood that in other embodiments, each strap guiding mechanism 133A may also be fixed on the inner side of the fixing sheet 1326A. Four fixing blocks 1325A are also provided on the two long sides of the first shelf 132A. Each fixing block 1325A is close to a fixing sheet 1326A, and the two fixing blocks 1325A located on the two long sides are arranged opposite to each other. The bottom of the box body 122A may be fixedly connected to the fixing blocks 1325A by screws, etc. A locking seat 1328A protruding upward is also provided on each of the two short sides of the first shelf 132A.

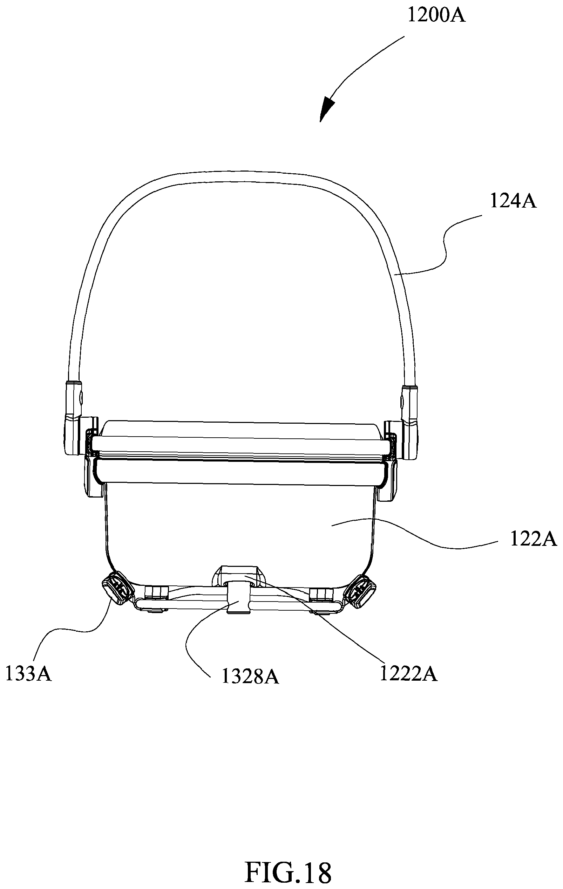

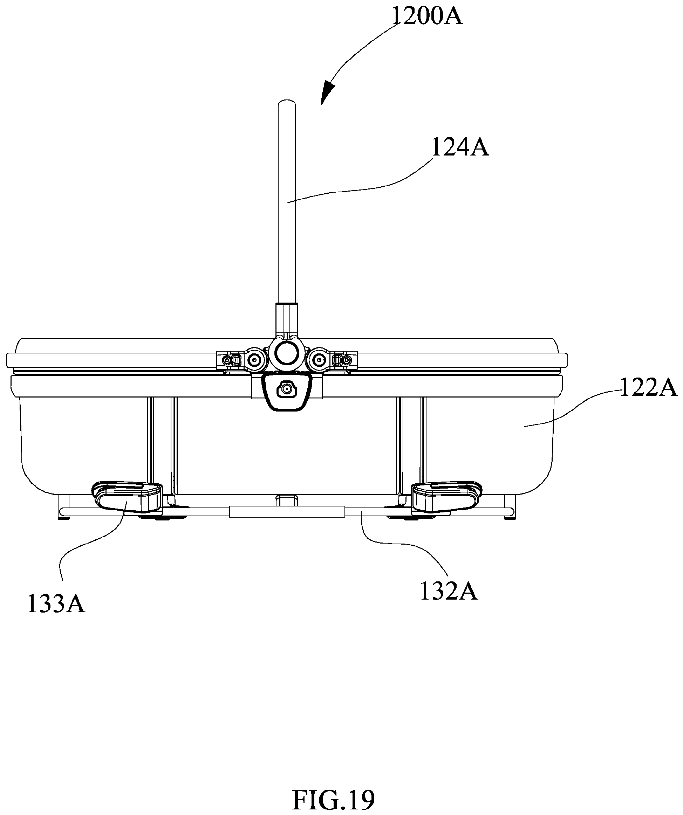

Referring to FIG. 15, FIG. 16, FIG. 18, and FIG. 19, the box body 122A and the handle 124A together constitute the baby carrier 1200A (i.e., the carrier of this embodiment may include the box body 122A and the handle 124A). The box body 122A defines an accommodation space 1210A, and the accommodation space 1210A may be used to accommodate children or pets. The box body 122A may be made of a foam material such as expanded polypropylene (EPP), expanded polyethylene (EPE), or expanded ethylene (EPO). The handle 124A is pivotally connected to two sides of the box body 122A. A locking groove 1222A is provided at a position of the bottom of the box body 122A corresponding to the locking seat 1328A. When the box body 122A is mounted to the bracket apparatus 1300A, the locking seat 1328A is inserted into the corresponding locking groove 1222A to further secure the box body 122A to the bracket apparatus 1300A to prevent wobbling between the two. In this case, four strap guiding mechanisms 133A are located at the bottom of the box body 122A.

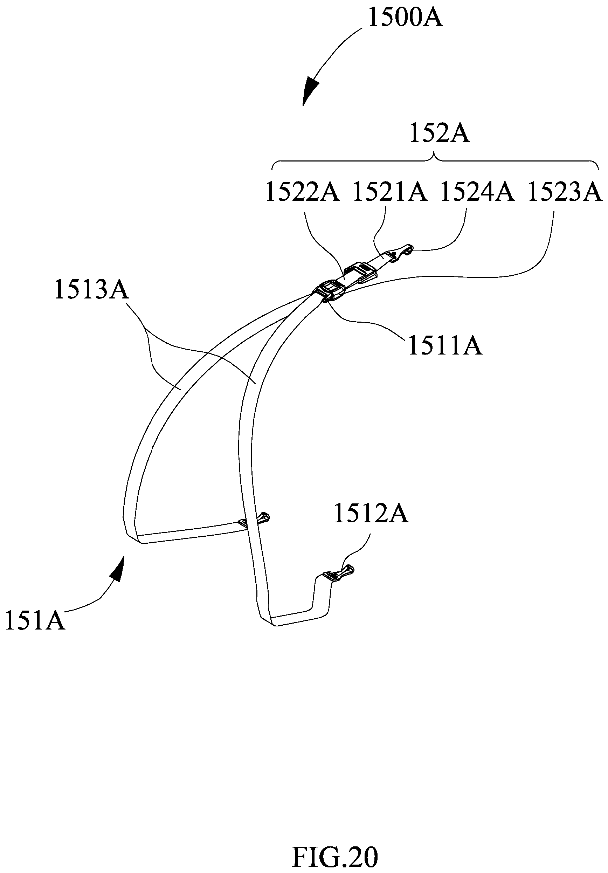

Referring to FIG. 20, the fixing strap assembly 1500 of this embodiment includes a restraining strap assembly 151 and an extending component 152. The restraining strap assembly 151A includes two restraining straps 1513A, and the restraining straps 1513A may be elastic webbing straps. The restraining strap assembly 151A further includes a first connecting end 1512A (also referred to as a fixing end) located at one end of each restraining strap 1513A, and a first buckle 1511A connected to the other ends of the two restraint belts 1513A. In this embodiment, the first connecting end 1512A is an ISOFIX insert. The extending component 152A includes an extending strap 1521A, an adjusting portion 1522A, a second buckle 1523A, and a third connecting end 1524A. The extending strap 1521A is, for example, a webbing strap, one end of which is connected to the second buckle 1523A. The second buckle 1523A is detachably connected to the first buckle 1511A. The adjusting portion 1522A is provided on the extending strap 1521A and is used to adjust the available length of the extending strap 1521A. The third connecting end 1524A at the other end of the extending strap 1521A is generally a hook, which may be detachably engaged with a suitable structure of the vehicle seat (such as a connecting rod at a rear side of the top or backrest of the vehicle seat 1600A), thereby securing the bracket apparatus 1300A to the vehicle seat 1600A. It may be understood that in some embodiments, the adjusting portion 1522A may also be omitted.

Referring to FIGS. 15 and 16, when using the above-mentioned carrier, the box body 122Ais firstly secured to the bracket apparatus 1300A, and then the box body 122A and the bracket apparatus 1300A are placed on the vehicle seat 1600A, and then the two second connecting ends 1512A are connected to the ISOFIX sockets of the vehicle seat. Then, the two restraining straps 1513A are respectively extended through the two strap guiding mechanisms 133A located on two sides of the first shelf 132A, and pass around the underneath of the box body 122A from an outer side of the first shelf 132A away from the box body 122A. Next, the third connecting end 1524A of the extending component 152A is engaged with the connecting rod at rear side of the top or the backrest of the vehicle seat 1600A, and finally the tops of the two restraining straps 1513A are engaged with the second buckle 1523A of the extending component 152A, thereby securing the box body 122A to the vehicle seat 1600A. It will be appreciated that in other embodiments, the two restraining straps 1513A may also pass around the underneath of the box body 122A between the first shelf 132A and the box body 122A.

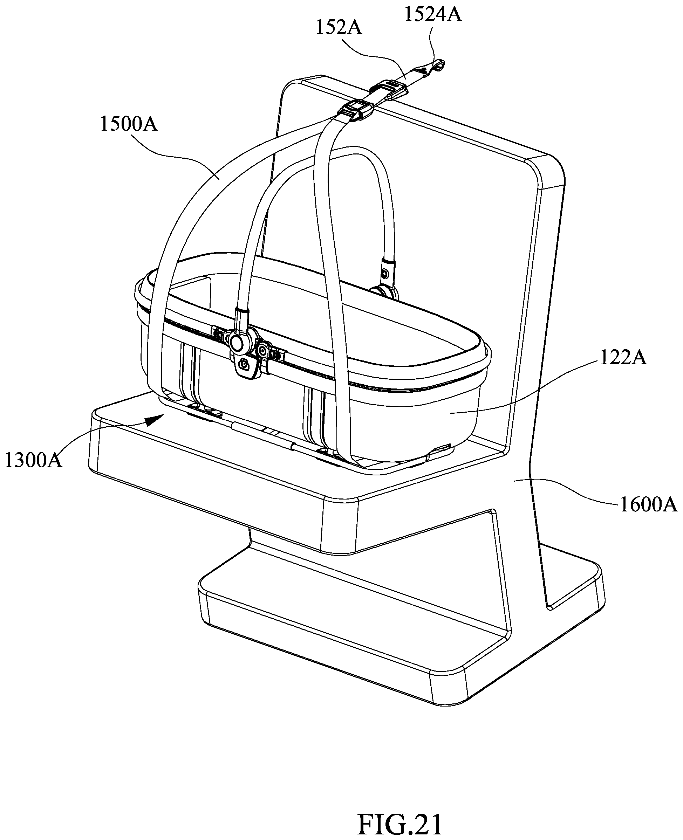

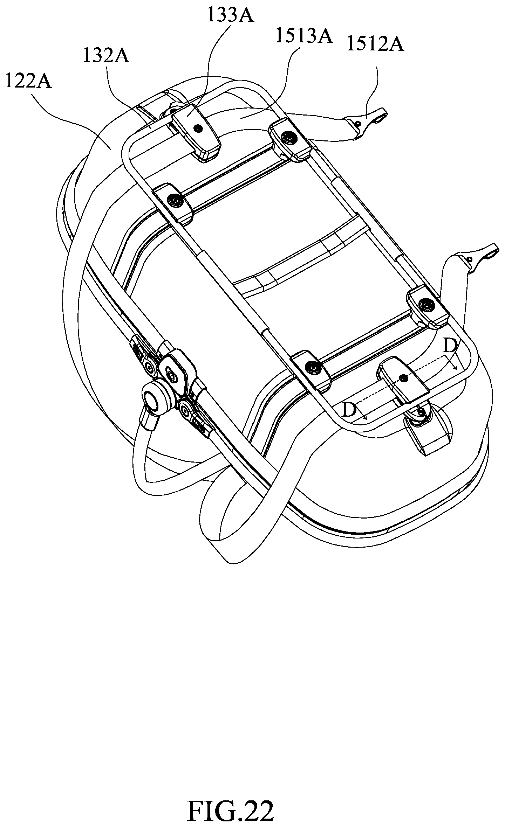

Referring to FIGS. 21 and 22, a carrier according to a third embodiment of the fourth aspect of the present application is similar in structure to the carrier of the second embodiment of the present aspect, where the carrier includes a bracket apparatus 1300A, a box body 122A disposed on the bracket apparatus 1300A, a plurality of strap guiding mechanisms 133A, and a fixing strap assembly 1500A. The fixing strap assembly 1500A passes through a plurality of strap guiding mechanisms 133A to form a plurality of connecting points between the fixing strap assembly 1500A and the bracket apparatus 1300A, thereby better securing the box body 122A to the vehicle seat 1600A without easily slipping forward, backward, left, and right.

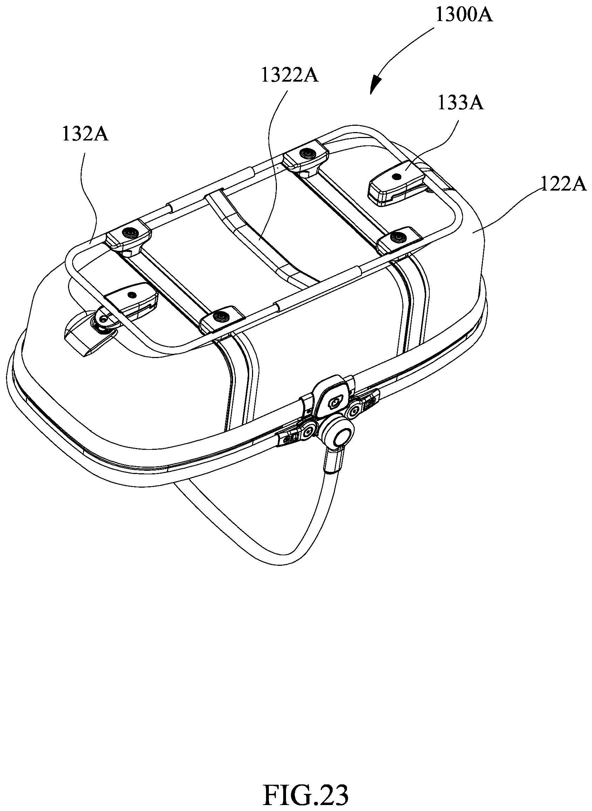

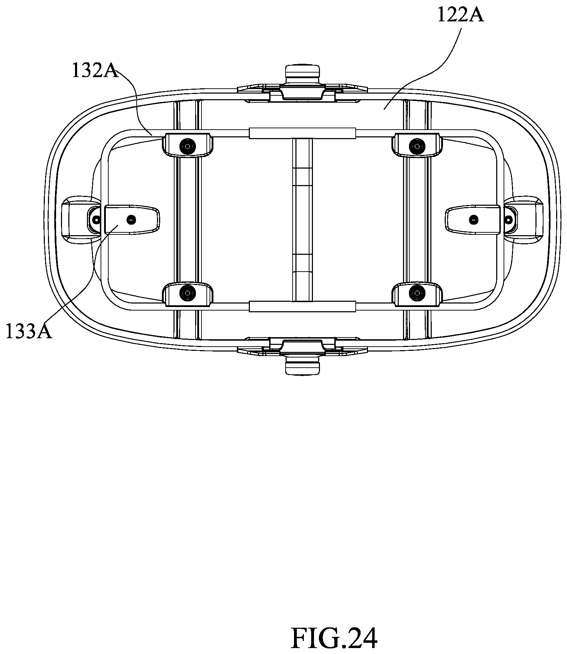

Referring to FIGS. 23 to 25, the bracket apparatus 1300A of the third embodiment in this aspect includes a first shelf 132A (also referred to as a "third bracket", but its structure is similar to the third bracket in the aforementioned embodiments). The first shelf 132A is a substantially annular square frame. A supporting rod 1322A is provided between the two long sides of the first shelf 132A. Two opposite fixing sheets 1326A are provided on the first shelf 132A. Specifically, the two fixing sheets 1326A may be respectively secured to the two short sides of the first shelf 132A by welding or the like, and the two fixing sheets 1326A are arranged opposite to each other. Each strap guiding mechanism 133A is secured to a fixing sheet 1326A.

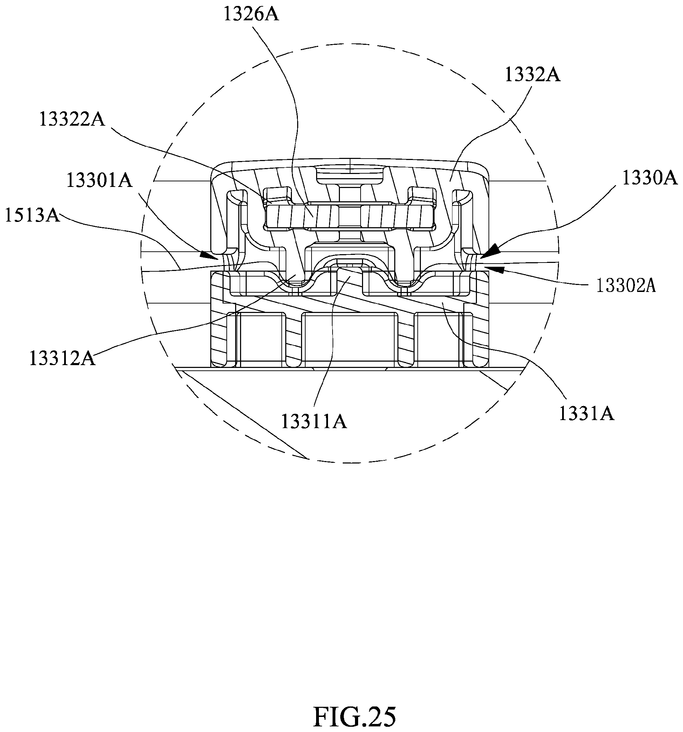

As shown in FIG. 25, the strap guiding mechanism 133A includes a bottom shell 1331A and a top shell 1332A. The top shell 1332A has a receiving groove 13322A for receiving the fixing sheet 1326A. The fixing sheet 1326A is inserted into the receiving groove 13322A of the top shell 1332A and fixed to the top shell 1332A by a plurality of screws. The bottom shell 1331A and the top shell 1332A are also fixedly connected by a plurality of screws.

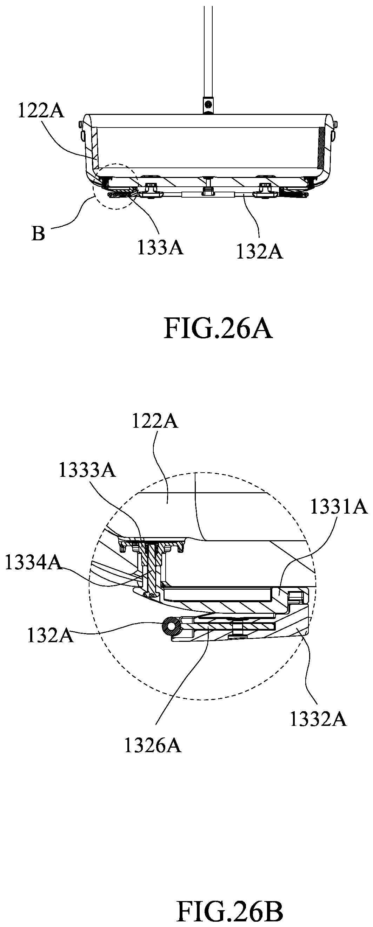

As shown in FIG. 25, FIG. 26A and FIG. 26B, the strap guiding mechanism 133A further includes a positioning seat 1333A. The positioning seat 1333A is embedded in the box body 122A. The bottom shell 1331A may be fixed to the positioning seat 1333A by a screw 1334A, etc. It may be understood that in other embodiments, the strap guiding mechanism 133A may also be directly provided on the box body 122A only by the positioning seat 1333A, and in this case, the fixing sheet 1326A may also be omitted. Similarly, in other embodiments, the strap guiding mechanism 133A may also be fixed to the first shelf 132A only by the fixing sheet 1326A, and in this case, the positioning seat 1333A may also be omitted. The bottom shell 1331A and the top shell 1332A jointly define a channel 1330A for the restraining strap 1513A of the fixing strap assembly 1500A to pass through. The bottom shell 1331A is provided with at least one first convex rib 13311A protruding toward the top shell 1332A. The top shell 1332A is provided with at least one second convex rib 13312A protruding toward the bottom shell 1331A, and the first convex rib 13311A and the second convex rib 13312A are alternately arranged in an extending direction of the restraining strap 1513A. That is, the first convex rib 13311A and the second convex rib 13312A are provided on side walls opposite to each other in the channel 1330A. By reasonably setting the height of the first convex rib 13311A and the second convex rib 13312A, the restraining strap 1513A located between the first port 13301A and the second port 13302A is bent in the channel 1330A to pass around the top of the first convex rib 13311A and the top of the second convex rib 13312A, so that the restraining strap 1513A will be subject to movement resistance from the first convex rib 13311A and the second convex rib 13312A. In this way, when the fixing strap assembly 1500A is tightened, the restraining strap 1513A will not easily slide relative to the bracket apparatus 1300A.

Referring to FIGS. 21 and 22, when using the above-mentioned carrier, the box body 122A is firstly secured to the bracket apparatus 1300A, and then the box body 122A and the bracket apparatus 1300A are placed on the vehicle seat 1600A, and then the two second connecting ends 1512A are connected to the ISOFIX sockets of the vehicle seat. Then, the two restraining straps 1513A are respectively extended through the two strap guiding mechanisms 133A located on the two short sides of the first shelf 132A, and pass around the underneath of the box body 122A between the first shelf 132A and the box body 122A. Next, the third connecting end 1524A of the extending component 152A is engaged with the connecting rod at the rear side of the top or the backrest of the vehicle seat 1600A, and finally the tops of the two restraining straps 1513A are engaged with the second buckle 1523A of the extending component 152A, thereby securing the box body 122A to the vehicle seat 1600A.

Optionally, as shown in FIG. 16 and FIG. 22, the distance between the second connecting ends 1512A (i.e., the fixing ends) of the two restraining straps 1513A is smaller than the distance between the two strap guiding mechanisms 133A (through which the two restraining straps 1513A pass), and the openings of the strap guiding mechanisms 133A face outwardly so that the restraining strap 1513A is less likely to be disengaged from the strap guiding mechanism 133A while being secured. It should be noted that this setting is not limited to the above mentioned embodiment, but is also applicable to various embodiments of the fourth aspect of the present disclosure.

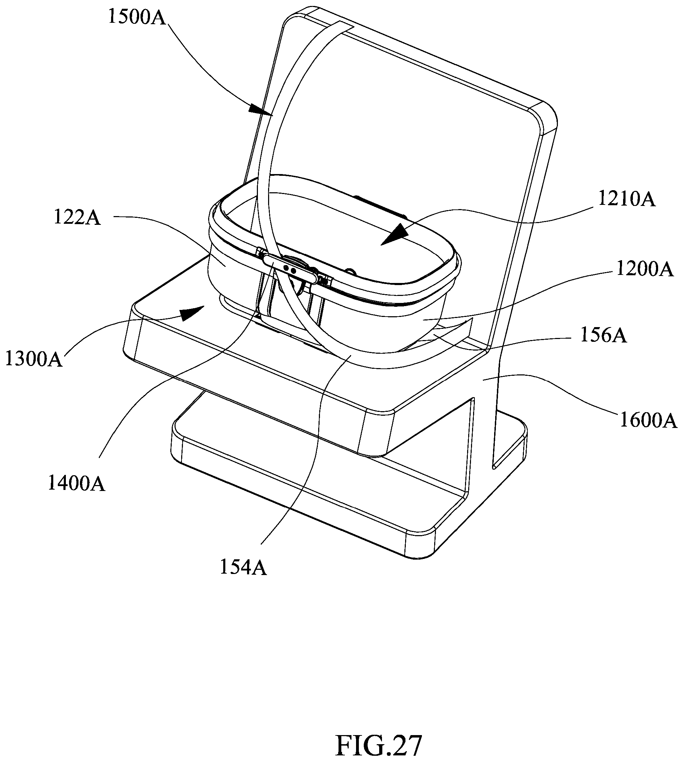

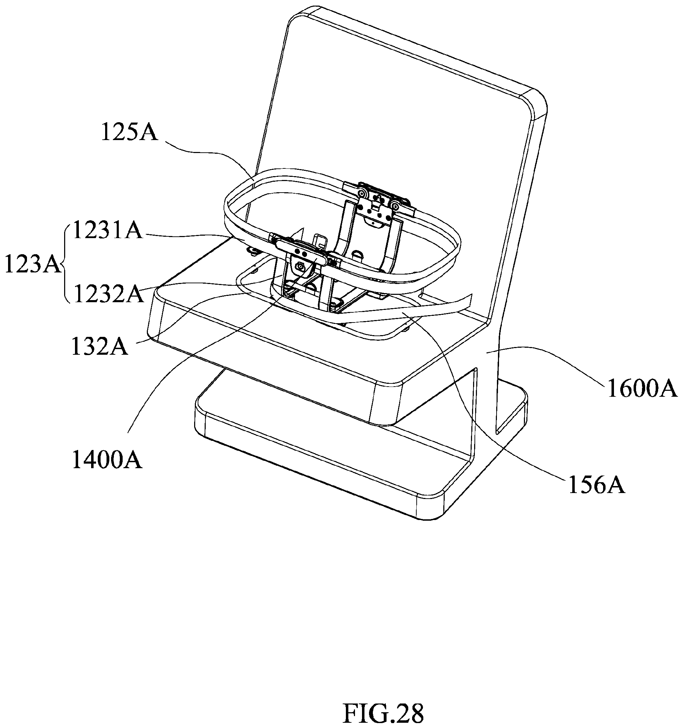

Referring to FIGS. 27 and 28, a carrier according to a fourth embodiment of the fourth aspect of the present application is similar in structure to the carrier of the second embodiment of the present aspect, where the carrier includes a baby carrier 1200A, a bracket apparatus 1300A and a strap guiding mechanism. The fixing strap assembly 1500A passes through the strap guiding mechanism, thereby fixing the infant carrier 1200A to the vehicle seat 1600A without easily slipping forward, backward, left, and right.

The baby carrier 1200A includes a box body 122A, that is, the carrier in this embodiment may include a box body 122A. The box body 122A defines an accommodation space 1210A, and the accommodation space 1210A may be used to accommodate a child or a pet. The box body 122A may be made of a foam material such as expanded polypropylene (EPP), expanded polyethylene (EPE), or expanded ethylene (EPO).

The bracket apparatus 1300A includes a first shelf 132A (also referred to as a "third bracket", but its structure is similar to the third bracket in the aforementioned embodiments), a frame structure 123A and a canopy frame 125A. The frame structure 123A includes a first shelf 1231A and two second frames 1232A. The first frame 1231A is substantially annular, and is bonded to the box body 122A and arranged around the peripheral wall of the box body 122A. Two ends of the two second frames 1232A are connected to the first frame 1231A and are disposed separately from each other along the longitudinal axis direction (also referred to as the longitudinal direction) of the box body 122A. Each second frame 1232A is bonded to the bottom wall and the side wall of the box body 122A, and the bottom of the second frame 1232A is fixedly connected to the first shelf 132A through a fixing seat (i.e., a fixing assembly). In this way, the frame structure 123A can provide a steady support for the box body 122A, thereby improving the impact resistance of the box body 122A. It should be noted that the "first frame" in embodiments of this aspect may also be referred to as the "first bracket", the "second frame" may also be referred to as the "second bracket", and the "first shelf" may also be referred to as the "third bracket", which may be similar to the arrangement of the "first bracket", "second bracket" and "third bracket" in other aspects below. It may therefore be considered that the bracket apparatus 1300A of the carrier of this embodiment may include a first bracket (i.e., 1231A), a second bracket (i.e., 1232A), and a third bracket (i.e., 132A).

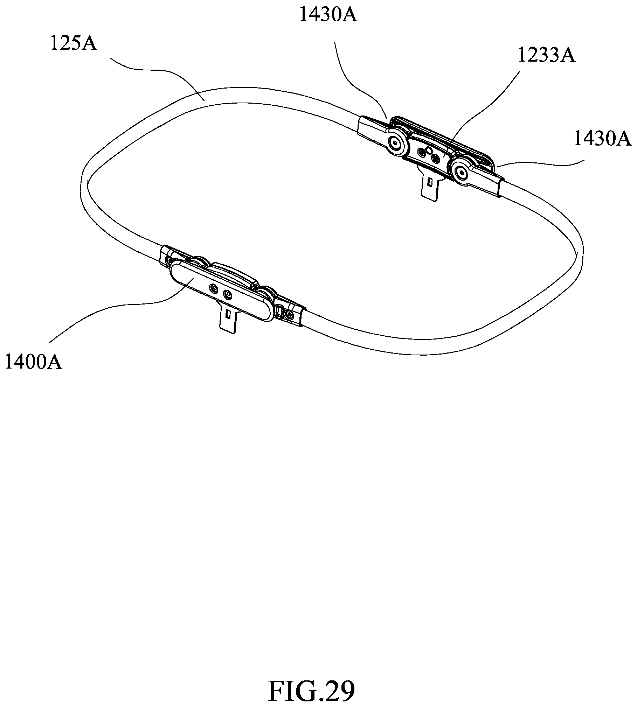

As shown in FIG. 29, the canopy frames 125A are used to support the canopy (not shown). The two canopy frames 125A are pivotally connected to the two sides of the box body 122A. Specifically, the frame structure 123A further includes a guiding member 1233A provided in the middle of the first frame 1231A, and an end of each canopy frame 125A is pivotally connected to the guiding member 1233A. By pivoting the canopy frame 125A, the canopy may be switched between a use state and a folded state, thereby achieving the purpose of sunshade and easy storage. It should be noted that, in other embodiments, the carrier (such as the baby carrier 1200A of the present embodiment) may further include a handle (not shown in the drawing), which may be pivotally connected to two sides of the box body 122A, and the distance between the two ends of the handle is greater than the distance between the two ends of each canopy frame 125A, but the present disclosure is not limited thereto.

The structure of the bracket apparatus 1300A of the fourth embodiment of the present aspect and the manner through which it is connected with the baby carrier 1200A (specifically, the box body 122A thereof) are the same as those of the bracket apparatus 1300A of the second embodiment, and thus will not be described in detail.

As shown in FIG. 27 and FIG. 28, in this embodiment, the fixing strap assembly 1500A is a three-point safety belt, which includes a shoulder strap 154A and a waist strap 156A connected to each other. An upper end of the shoulder strap 154A is connected to the top of the backrest of the vehicle seat 1600A, a middle part of the shoulder strap 154A diagonally crosses the first frame 1231A and part of the box body 122A, and a lower end of the shoulder strap 154A is detachably connected to the seat belt buckle of the vehicle seat 1600A through a seat belt latch (not shown in the drawings). One end of the waist strap 156A is connected to the vehicle seat 1600A, and the other end is connected to the lower end of the shoulder strap 154A through the seat belt latch. Referring to FIG. 28, the waist strap 156A wraps around outer sides of the two second frames 1232A, thus enabling the bottom of the baby carrier 1200A (i.e., the box body 122A) to be restrained to the vehicle seat 1600A.

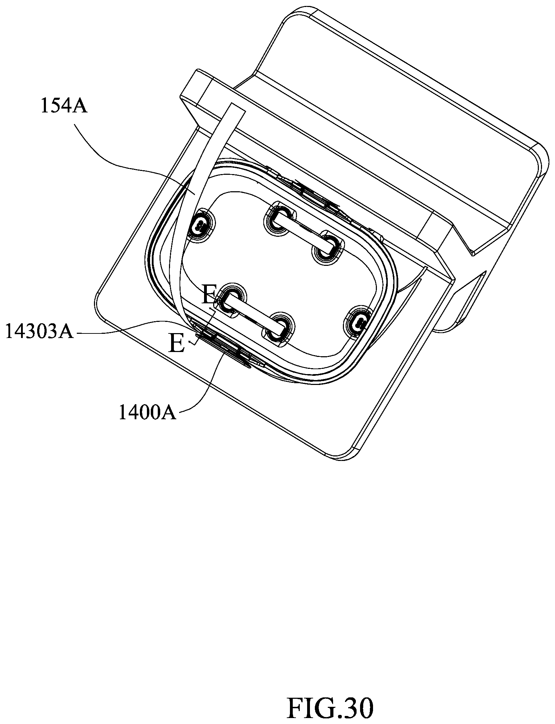

Referring to FIGS. 28 to 31, the strap guiding mechanism of the fourth embodiment includes a first strap guiding mechanism 1400A. The first strap guiding mechanism 1400A is substantially an elongate plate, and a middle portion of the first strap guiding mechanism 1400A may be secured to the guiding member 1233A by, for example, a screw. The first strap guiding mechanism 1400A and the guiding member 1233A together define two channels 1430A for the shoulder strap 154A to pass through. The two channels 1430A are respectively located on two sides of the screw and are arranged opposite to each other, that is, they can allow the shoulder strap 154A to pass through from a left side or a right side respectively. In some embodiments, each channel 1430A further has a side introduction port 14303A (see FIG. 30). The side introduction port 14303A is connected to the channel 1430A. By providing the side introduction port 14303A, the shoulder strap 154A may be easily slid into the channel 1430A laterally. It will be appreciated that in other embodiments, the first strap guiding mechanism 1400A may also be provided directly on the baby carrier 1200A (e.g., the box body 122A thereof) or the canopy frame 125A. It will be appreciated that the number of channels 1430A may also be one or more than two.

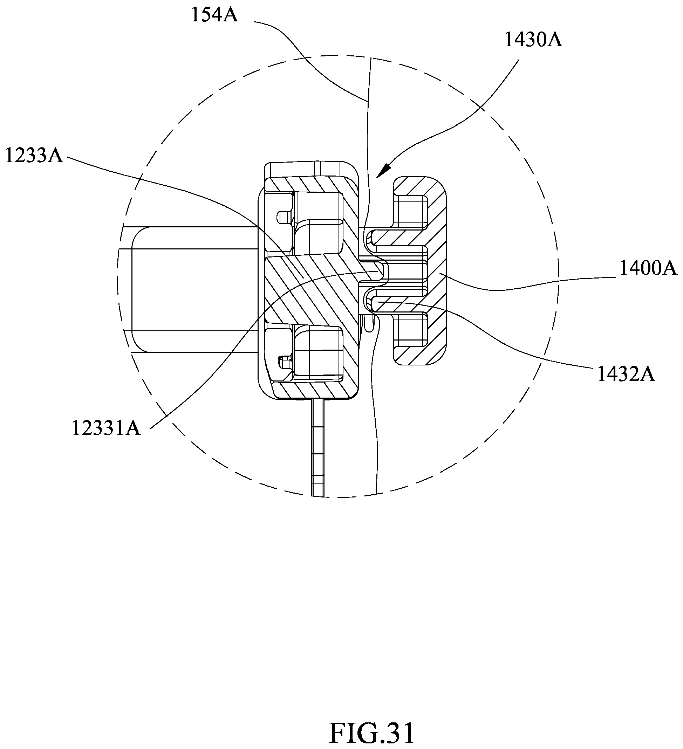

As shown in FIG. 31, the guiding member 1233A is provided with at least one third convex rib 12331A protruding toward the first strap guiding mechanism 1400A. The first strap guiding mechanism 1400A is provided with at least one fourth convex rib 1432A protruding toward the guiding member 1233A, and the third convex rib 12331A and the fourth convex rib 1432A are alternately arranged in an extending direction of the shoulder strap 154A. That is, the third convex rib 12331A and the fourth convex rib 1432A are provided on side walls opposite to each other in the channel 1430A. By reasonably setting the heights of the third convex rib 12331A and the fourth convex rib 1432A, the shoulder strap 154A located between the first port 14301A and the second port 14302A is bent in the channel 1430A to pass around the top of the third convex rib 12311A and the top of the fourth convex rib 1432A, so that the shoulder strap 154A will be subject to movement resistance from the third convex rib 12311A and the fourth convex rib 1432A. In this way, when the fixing strap assembly 1500A is tightened, the shoulder strap 154A will not easily slide relative to the bracket apparatus 1300A.

When the above carrier is in use, the baby carrier 1200A (i.e., the box body 122A) is firstly secured to the bracket apparatus 1300A, and then the baby carrier 1200A and the bracket apparatus 1300A are placed on the vehicle seat 1600A. Thereafter, the shoulder strap 154A of the fixing strap assembly 1500A is passed around a front side of the baby carrier 1200A, and the waist strap 156A is wrapped around the outer sides of the two second frames 1232A, and then the ISOFIX insert at the lower end of the shoulder strap 154A is inserted into the ISOFIX socket of the vehicle seat 1600A. Finally, the shoulder strap 154A is slid into the channel 1430A from the side introduction port 14303A of the first strap guiding mechanism 1400A, thereby securing the baby carrier 1200A to the vehicle seat 1600A.

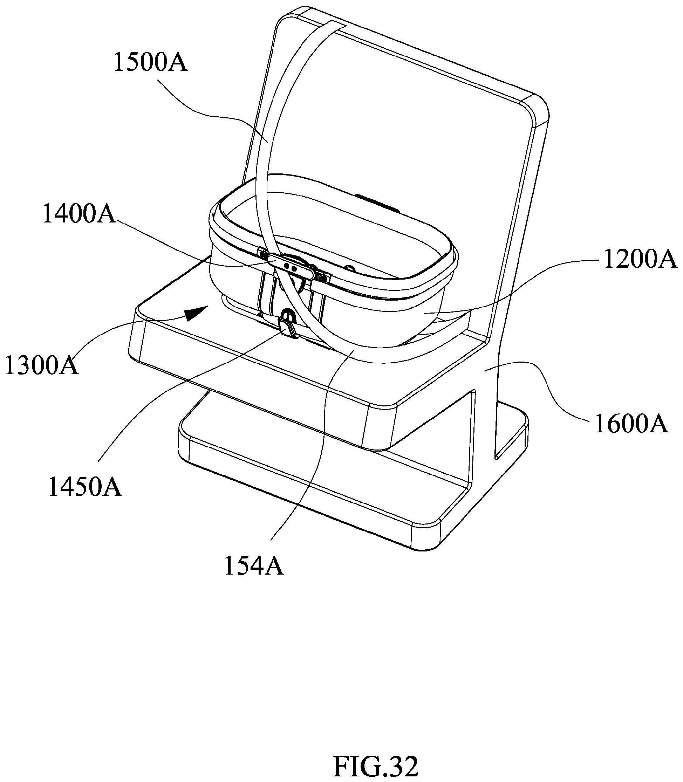

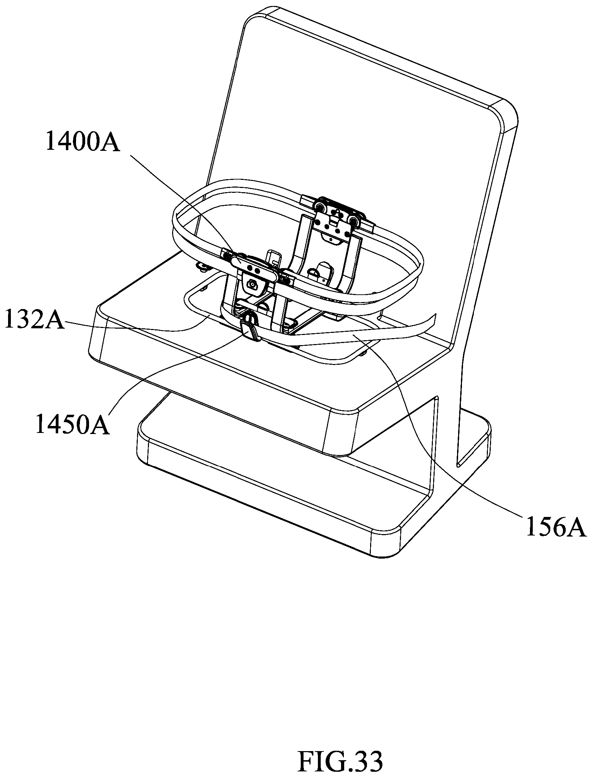

Referring to FIGS. 32 and 33, a carrier according to a fifth embodiment of the fourth aspect of the present application is similar in structure to the carrier of the fourth embodiment of the present aspect, and the carrier includes a baby carrier 1200A, a bracket apparatus 1300A, and a strap guiding mechanism. The main difference is that the strap guiding mechanism includes a second strap guiding mechanism 1450A in addition to the first strap guiding mechanism 1400A. The fixing strap assembly 1500A passes through the first strap guiding mechanism 1400A and the second strap guiding mechanism 1450A to form a plurality of connecting points between the fixing strap assembly 1500A and the bracket apparatus 1300A, thereby better securing the baby carrier 1200A to the vehicle seat 1600A without easily sliding forward, backward, left, and right.

Specifically, the bracket apparatus 1300A of the fifth embodiment includes a first shelf 132A that is substantially annular. The second strap guiding mechanism 1450A may be secured to the first shelf 132A by a fastener such as a screw, and is located at the bottom of the baby carrier 1200A. The structure of the second strap guiding mechanism 1450A is the same as that of the strap guiding mechanisms 733 and 133A in the aforementioned embodiments, and the specific structure thereof will be described below by way of example.

When the above carrier is in use, the baby carrier 1200A is first secured to the bracket apparatus 1300A, and then the baby carrier 1200A and the bracket apparatus 1300A are placed on the vehicle seat 1600A. Afterwards, the waist strap 156A of the fixing strap assembly 1500A is passed through the second strap guiding mechanism 1450A and around the front side of the baby carrier 1200A, and the waist strap 156A is wrapped around the outer sides of the two second frames 1232A, and then the ISOFIX insert at the lower end of the shoulder strap154A is inserted into the ISOFIX socket of the vehicle seat 1600A. Finally, the shoulder strap 154A is slid into the channel 1430A from the side introduction port 14303A of the first strap guiding mechanism 1400A, thereby securing the baby carrier 1200A to the vehicle seat 1600A.

The above two embodiments briefly illustrate two ways of securing the carrier of the foregoing embodiments to the vehicle seat, and for a clearer understanding of the present disclosure, a variety of ways of connecting the carrier of the present disclosure to a vehicle seat (such as a car seat or an airplane seat, etc.) are specifically illustrated hereinafter.

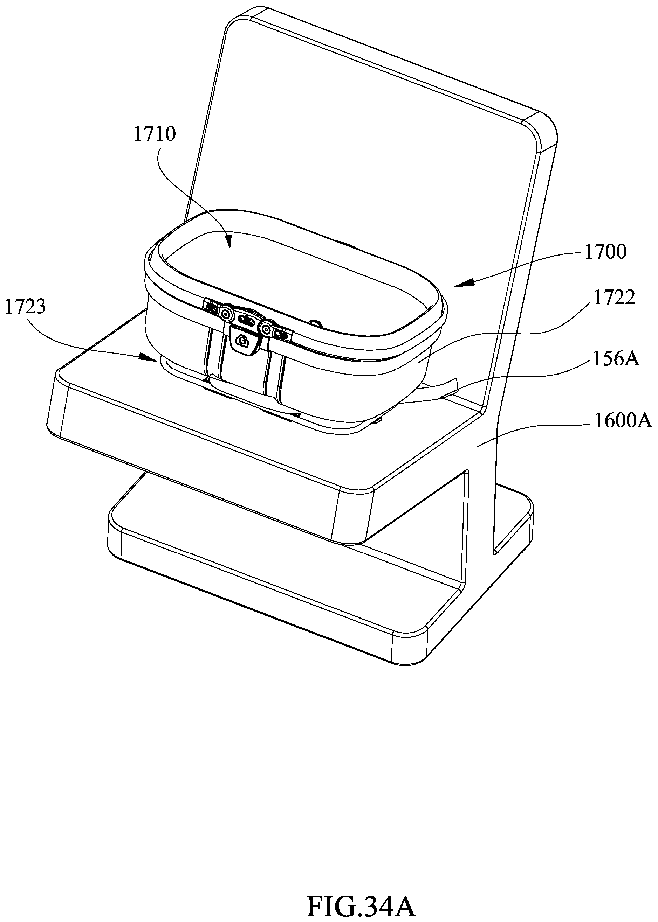

Referring to FIGS. 34A through 34D, a way of connecting a carrier 1700 to a vehicle seat 1600A of an embodiment of the present disclosure is shown schematically. Specifically, the carrier 1700 may be secured to the vehicle seat via a fixing strap assembly 1500A.

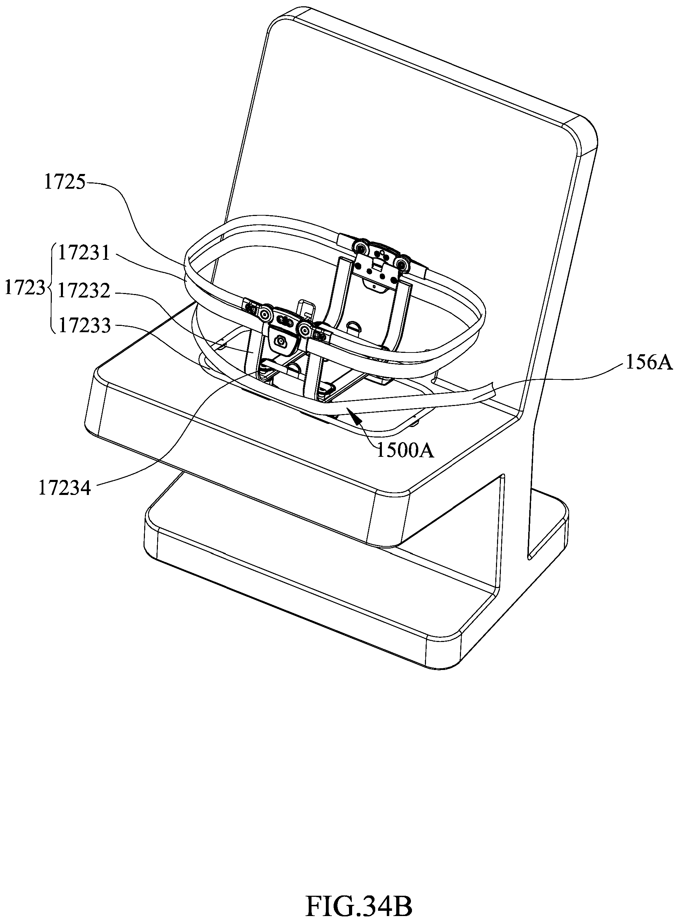

As shown in FIG. 34A and FIG. 34B, the carrier 1700 of this embodiment may include a box body 1722 (i.e., a supporting portion) and a bracket apparatus 1723. The box body 1722 defines an accommodation space 1710 for accommodating a child or a pet, and may be made of a foam material such as expanded polypropylene (EPP), expanded polyethylene (EPE), or expanded ethylene (EPO). The bracket apparatus 1723 may include a first bracket 17231, a second bracket 17232, and a third bracket 17233. The first bracket 17231 is disposed substantially parallel and in an annular structure, and is bonded to the box body 1722 and arranged around the peripheral wall of the box 1722. The two ends of the second bracket 17232 are respectively connected to the first bracket 17231, and are arranged separately from each other along a longitudinal axis direction of the box body 1722, for example, extending from one side of the box body 1722 (for example, the long side) along the transverse axis direction (i.e., the lateral direction) of the box body 1722 to the opposite side (for example, the other long side). The bottom of the second bracket 17232 is fixedly connected to the third bracket 17233 via a fixing assembly 17234. In addition, the carrier 1700 may further include a canopy frame 1725 for supporting a canopy (not shown) covered above the box body 1722 and may be connected above the first bracket 17231.

In an example, as shown in FIG. 34A and FIG. 34B, the fixing strap assembly 1500A may be a two-point safety belt, and the carrier 1700 may be fixed in a two-point manner. The fixing strap assembly 1500A includes a waist strap 156A. The two ends of the waist strap 156A are connected to the vehicle seat 1600A on two sides of the box body 1722, and the waist strap 156A passes around the bracket apparatus 1723 from the side of the carrier 1700 away from the backrest of the vehicle seat 1600A (i.e., the outer side), that is, the waist strap 156A wraps around an outer side of the second bracket 17232 and passes between the bottom of the box body 1722 and the third bracket 17233 (for example, the waist belt 156A may abut against the two fixing assemblies 17234 used to connect the second bracket 17232 and the third bracket 17233 from the outer side), so that the bottom of the box body 1722 can be restrained to the vehicle seat 1600A. Optionally, the waist strap 156A may also be wrapped around two fixing assemblies 17234 on a side of the backrest away from the vehicle seat 1600A to more stably fasten the box body 1722 to the vehicle seat 1600A.

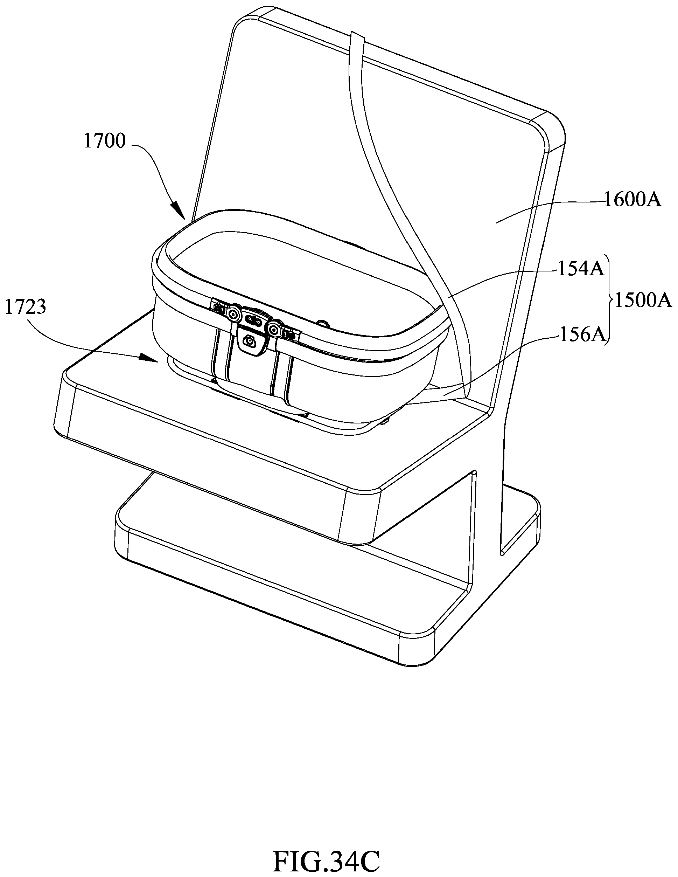

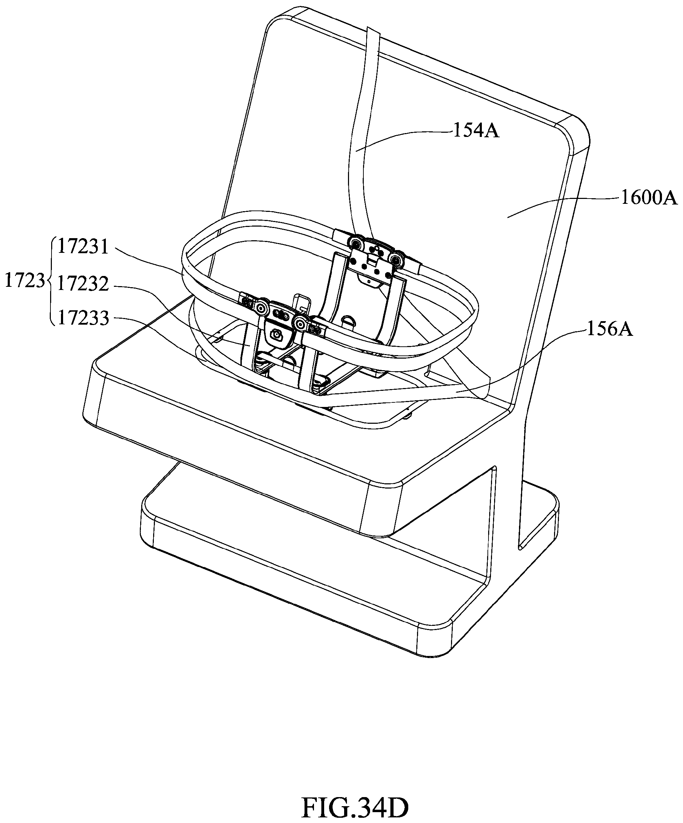

In another example, as shown in FIGS. 34C and 34D, the carrier 1700 may also be two-point secured by a three-point safety strap. Specifically, the fixing strap assembly 1500A may be a three-point safety belt, and includes a shoulder strap 154A and a waist strap 156A. In this example, the waist strap 156A is connected in a manner similar to the previous example (see FIG. 34A) and is therefore not described herein; and the shoulder strap 154A is not used to secure the carrier 1700. As shown in FIG. 34C, the shoulder strap 154A may not pass through the box 1722. Optionally or alternatively, as shown in Fig. 34D, the shoulder strap 154A may pass between the box body 1722 and the backrest of the vehicle seat 1600 (without applying force to the box body 1722).

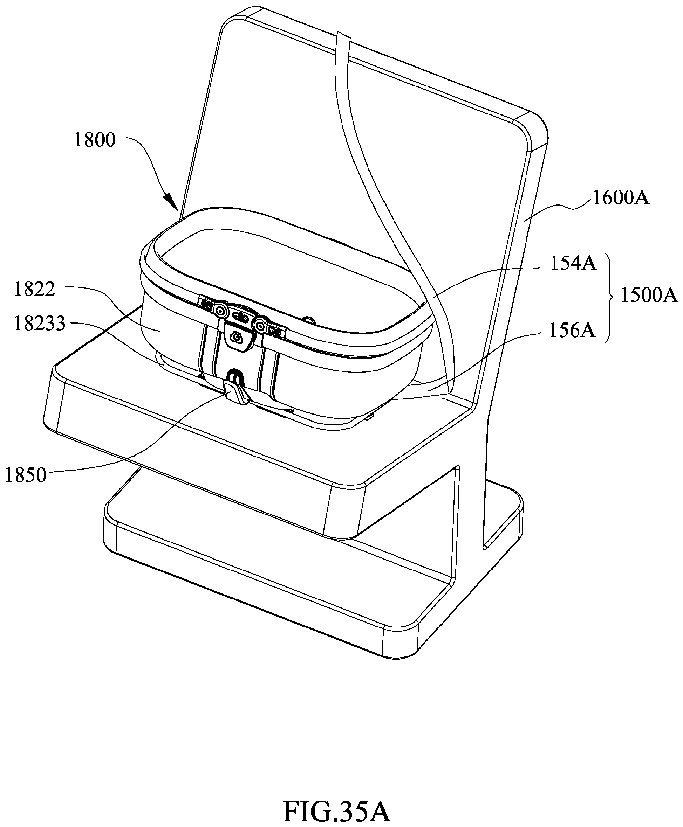

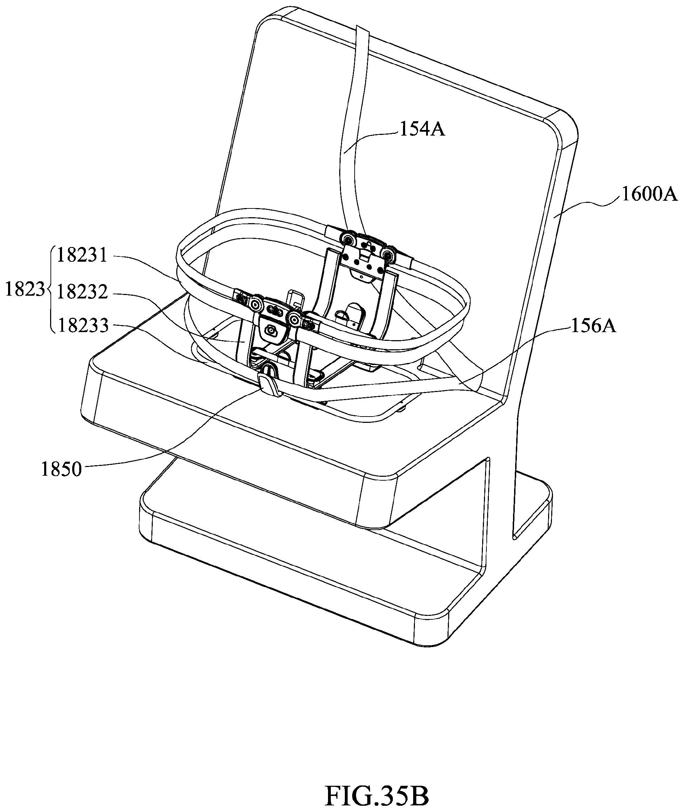

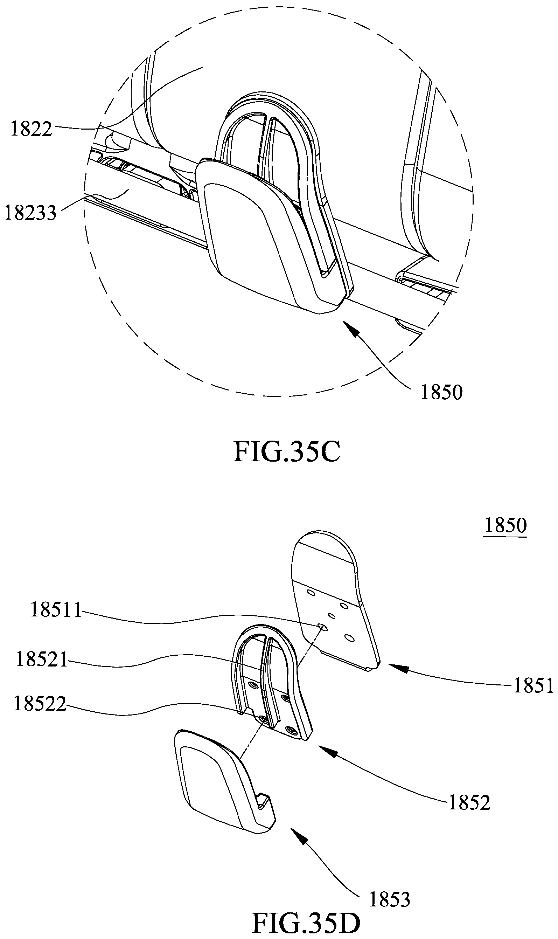

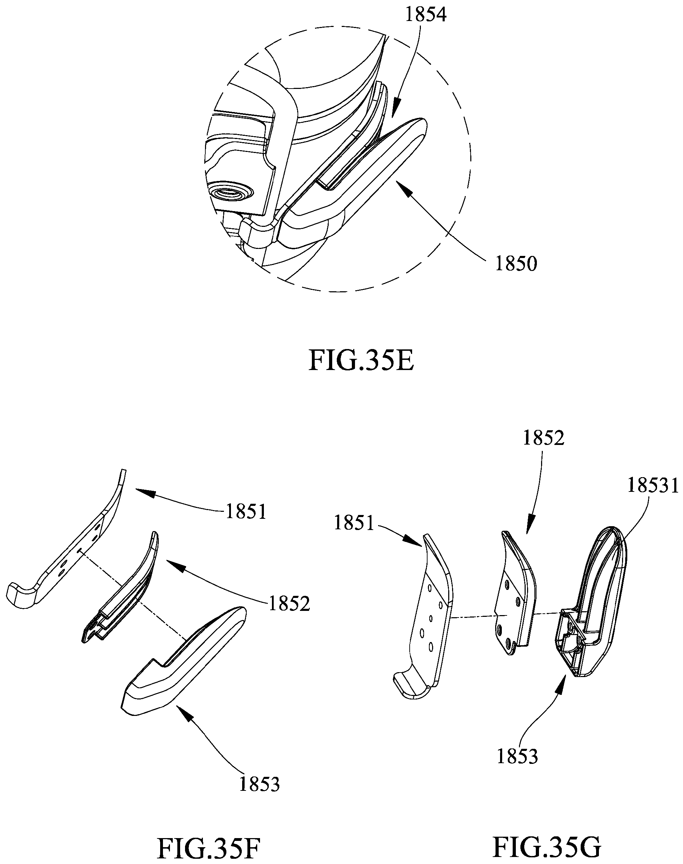

Referring to FIGS. 35A through 35G, connection of a carrier 1800 to the vehicle seat 1600A according to anther embodiment of the present disclosure is schematically shown. The carrier 1800 has a similar structure to the carrier 1700 of the previous embodiment shown in FIG. 34A, and will not be described in detail herein. The fixing strap assembly 1500A may be a three-point safety strap and may apply a two-point fixing to the carrier 1800. Specifically, the fixing strap assembly 1500A has a waist strap 156A and a shoulder strap 154A, where the shoulder belt 154A does not play a role in securing the carrier 1800. For example, the shoulder strap 154A may not pass through the box body 1822 as shown in FIG. 35A, or may pass between the box body 1722 and the backrest of the vehicle seat 1600A as shown in FIG. 35B (without applying force to the box 1822).

The difference from the previous embodiment is that the carrier 1800 is further provided with a strap guiding mechanism 1850 (similar to the "second strap guiding mechanism 1450A" described in the previous embodiment). As shown in FIG. 35A and FIG. 35B, the strap guiding mechanism 1850 is provided on the bracket apparatus 1823, and is used to fit with the fixing strap assembly 1500. Specifically, the present embodiment may be provided with two strap guiding mechanisms 1850, which are symmetrically provided on the third bracket 18233 of the bracket apparatus 1823, for example, approximately in the middle of a long side of the box body 1822.

When the carrier 1800 needs to be secured to the vehicle seat 1600A, the carrier 1800 may be placed on the vehicle seat 1600A firstly, and then the waist strap 156A of the fixing strap assembly 1500 is passed through the strap guiding mechanism 1850 and then passed around the front side of the box body 1822, and the waist strap 156A is wrapped around the outer sides of the two second brackets 18232, that is, the waist strap 156A is passed around a side of the carrier 1800 away from the back of the vehicle seat 1600A (i.e., the outer side). Then, the ISOFIX insert at the lower end of the shoulder strap 154A is inserted into the ISOFIX socket of the vehicle seat 1600A, thereby securing the carrier 1800 to the vehicle seat 1600A. With the strap guiding mechanism 1850 of this embodiment, the reliability and firmness of the securing of the carrier 1800 can be better improved, thereby better preventing the carrier 1800 from tipping forward when the vehicle is subjected to emergency braking or impact.

As shown in FIGS. 35C to 35G, in this embodiment, two fixing sheets 1851 are symmetrically provided on the third bracket 18233, for example, approximately located in the middle of the long side of the box body 1822. Each fixing sheet 1851 may be inclined toward a direction close to the box body 1822. In an example, the fixing sheet 1851 may have an approximately L-shaped structure, and a hook shaped portion of the approximately L-shaped structure is fixed to the third bracket 18233. Each fixing sheet 1851 includes an inner side close to the box body 1822 and an outer side away from the box body 1822, and the strap guiding mechanism 1850 is provided on an outer side of the fixing sheet 1851.

Specifically, referring to FIGS. 35C to 35G, the strap guiding mechanism 1850 may include a bottom shell 1852 and a top shell 1853. The bottom shell 1852 is provided with a second fixing hole 18522 corresponding to a first fixing hole 18511 on the fixing sheet 1851, so that the bottom shell 1852 may be fixed to the fixing sheet 1851 by, for example, a screw. The top shell 1853 may be mounted to the bottom shell 1852 by a fastener such as a screw. The bottom shell 1852 and the top shell 1853 jointly define a channel 1854 for the fixing strap assembly 1500A (such as the waist strap 156A) to pass through. In an example, the lower portion of the bottom shell 1852 is fixedly connected to the lower portion of the top shell 1853, the upper portion of the bottom shell 1852 is inclined toward a direction close to the box body 1822, for example to adapt to the shape of the fixing sheet 1851, and the upper portion of the top shell 1853 is inclined toward a direction away from the box body 1822, so that an angle is formed between the bottom shell 1852 and the top shell 1853, that is, approximately has a V-shaped structure.

In addition, the bottom shell 1852 is provided with at least one first convex rib 18521 protruding toward the top shell 1853. The top shell 1853 is provided with at least one second convex rib 18531 protruding toward the bottom shell 1852, and the first convex rib 18521 and the second convex rib 18531 are alternately arranged in the extending direction of the waist strap 156A. That is, the first convex rib 18521 and the second convex rib 18531 are disposed on side walls opposite to each other in the channel 1854. By reasonably setting the heights of the first convex rib 18521 and the second convex rib 18531, the waist strap 156A located in the channel 1854 is bent to pass around the top of the first convex rib 18521 and the top of the second convex rib 18531, so that the waist strap 156A will be subject to movement resistance from the first convex rib 18521 and the second convex rib 18531. In this way, when the fixing strap assembly 1500A is tightened, the waist strap 156A will not easily slide.

It may be understood that the strap guiding mechanism 133A, 733, 1450 in the aforementioned embodiments may have a structure similar to the strap guiding mechanism 1850 of this embodiment, that is, the strap guiding mechanism 1850 may be an example of the strap guiding mechanism 133A, 733, 1450 (i.e., the first strap guiding mechanism), but the present disclosure is not limited thereto.

Furthermore, in addition to using a three-point safety strap, the carrier 1800 of this embodiment may also be secured at two points using a two-point safety strap, and the connection thereof is similar to the connection of the waist strap 156A in the three-point safety belt, which will not be repeated herein.

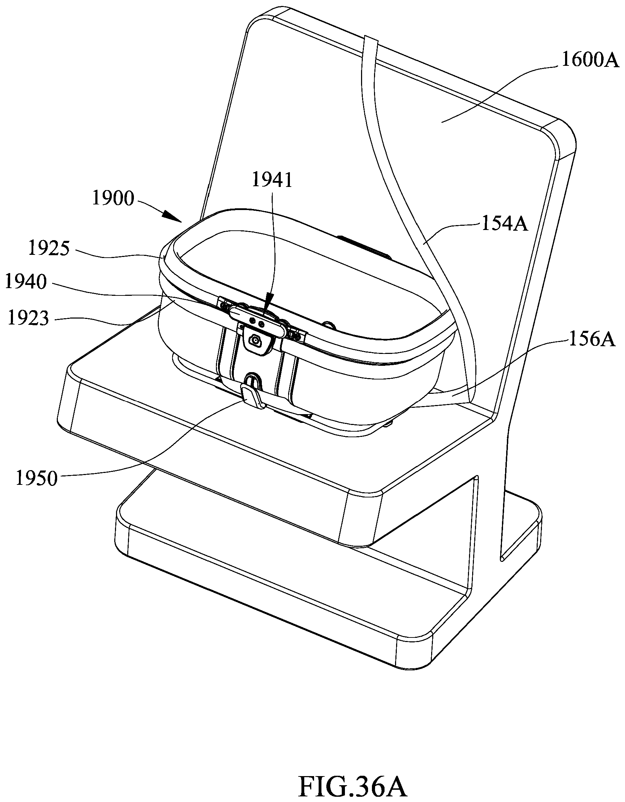

Referring to FIGS. 36A to 36C, a connection through which a carrier 1900 is secured to the vehicle seat 1600A according to another embodiment of the present disclosure is schematically shown. The carrier 1900 has a structure similar to that of the carrier 1800 of the preceding embodiment, with the difference that the carrier 1900 may further include a first strap guiding mechanism 1940 in addition to a second belt guiding mechanism 1950 similar to the strap guiding mechanism 1850 mentioned above.

In an example, the first strap guiding mechanism 1940 may be provided on the canopy frame 1925 or the first bracket 19231, and specifically, may be located approximately in the middle of the long side of the box body 1922. Optionally, the first strap guiding mechanism 1940 is substantially an elongate palte, and a middle portion of which may be fixed to the canopy frame 1925 or the first bracket 19231 by, for example, a screw. As shown in FIG. 36A, taking the example of the first strap guiding mechanism 1940 being fixed to the canopy frame 1925 (similar to the embodiment shown in FIG. 32), a channel 1941 for the shoulder strap 154A to pass through is defined between the first strap guiding mechanism 1940 and the canopy frame 1925.

In a specific example, the carrier 1900 may be provided with two first strap guiding mechanisms 1940, and the two first strap guiding mechanisms 1940 may be symmetrically arranged on one side of the carrier 1900, for example, on a side (i.e., an outer side or a front side) away from the backrest of the vehicle seat 1600A when the carrier 1900 is placed on the vehicle seat 1600A and symmetrically arranged with respect to the center line of the side. Optionally or alternatively, the two first strap guiding mechanisms 1940 may be symmetrically arranged on two sides of the carrier 1900, for example, on a side close to the backrest and a side away from the backrest when placed on the vehicle seat 1600A (i.e., the two long sides of the carrier 1900), or on the other two sides (i.e., the two short sides). Through different setting positions, the carrier 1900 may be adaptively fixed on different vehicle seats and/or different positions of the vehicle seat, such as on the left or right side seat.

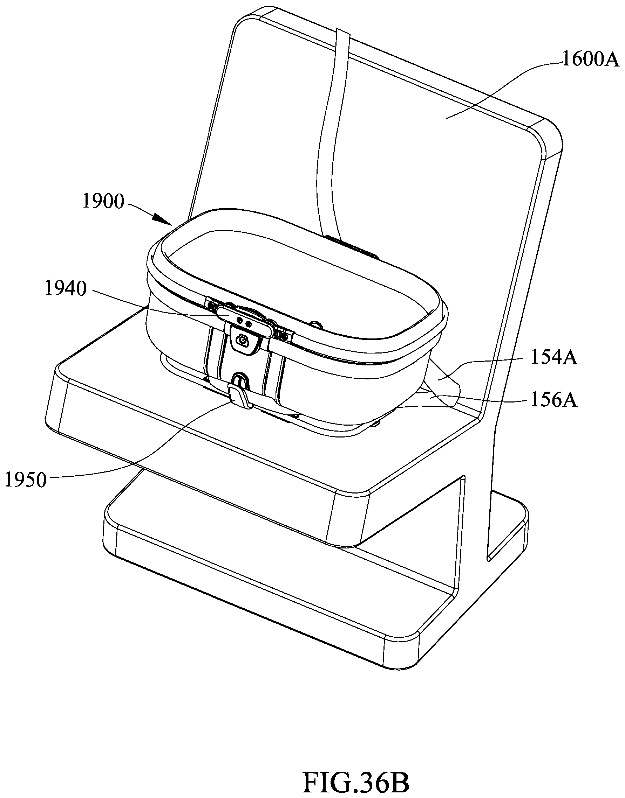

By simultaneously providing the first strap guiding mechanism 1940 and the second strap guiding mechanism 1950, the carrier 1900 of the present embodiment may be secured at two points and three points through the fixing strap assembly 1500A, where the two-point fixing manner shown in FIGS. 36A and 36B is similar to that of the aforementioned embodiment (see FIGS. 35A and 35B), and will not be repeated herein.

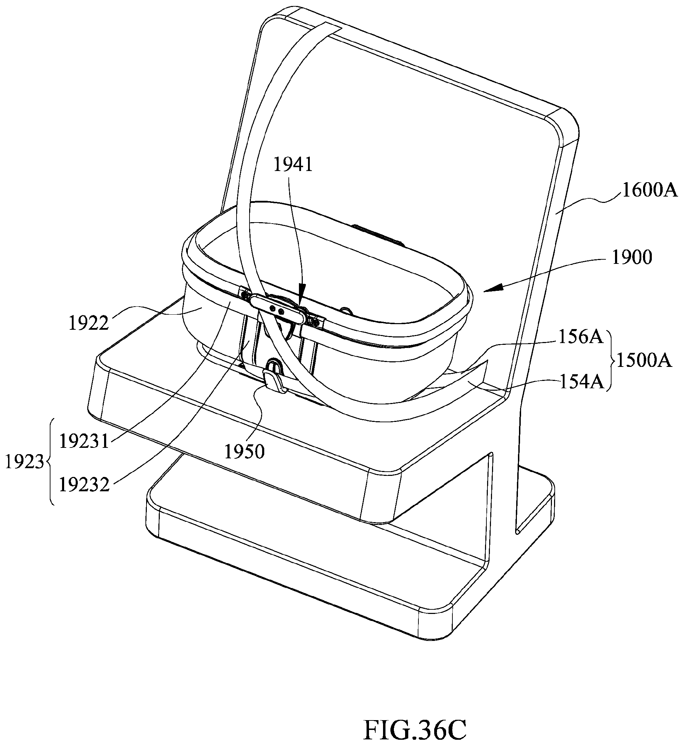

As shown in FIG. 36C, the fixing strap assembly 1500A may pass through the first strap guiding mechanism 1940 and the second strap guiding mechanism 1950, so that there are multiple connecting points between the fixing strap assembly 1500A and the bracket apparatus 1923, thereby better securing the carrier 1900 to the vehicle seat 1600A and it is not easy to slide relative to the box body 1900 when the vehicle is impacted (this embodiment is similar in structure to that shown in FIG. 32). Specifically, when the carrier 1900 needs to be fixed to the vehicle seat 1600A, the carrier 1900 may be placed on the vehicle seat 1600A firstly, then the waist strap 156A of the fixing strap assembly 1500A is passed through the strap guiding mechanism 1950 and then passed around the front side of the box body 1922, and the waist strap 156A is wrapped around the outer sides of the two second brackets 19232. Then, the ISOFIX insert at the lower end of the shoulder strap 154A is inserted into the ISOFIX socket of the vehicle seat 1600A, thereby securing the carrier 1900 to the vehicle seat 1600A. Finally, the shoulder strap 154A of the fixing strap assembly 1500A passes through the first strap guiding mechanism 1940 (e.g., the channel 1941) and then passes around the front side of the carrier 1900, with its lower end and one end of the waist strap 156A fixed to the vehicle seat 1600A, thereby forming a three-point securing. In an example, the first strap guiding mechanism 1940 may have two symmetrically arranged channels 1941, which are located on two sides of the screw. By passing the shoulder strap 154A through the channel 1941 away from the side of the ISOFIX insert (such as the channel 1941 on the left side shown in FIG. 36C), the shoulder strap 154A can be firmly secured to the carrier 1900. In another embodiment, the shoulder strap 154A of the fixing strap assembly 1500A may also pass through the first strap guiding mechanism 1940 at a side proximate to the backrest of the seat 1600A, or the shoulder strap 154A may also pass through the channel 1941 at a side proximate to the ISOFIX insert, but the present disclosure is not limited thereto.

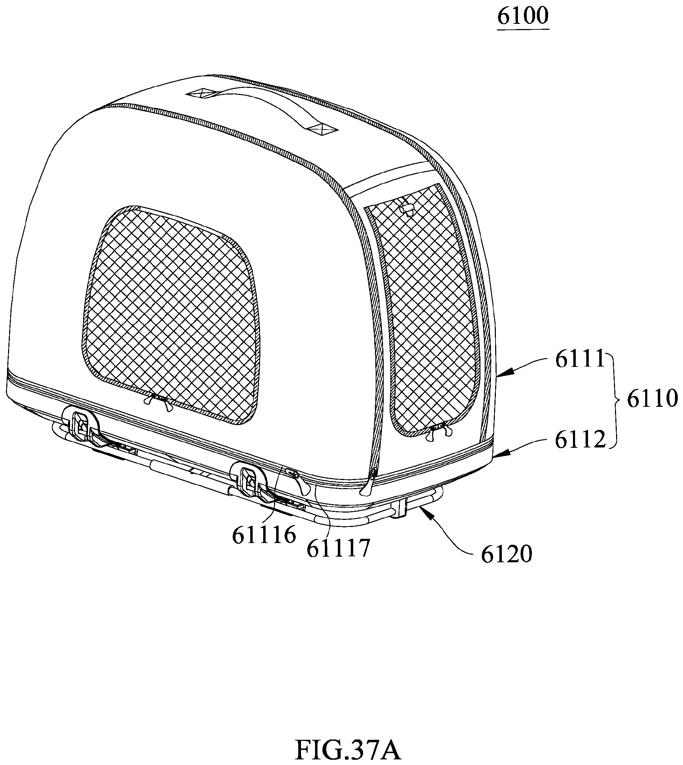

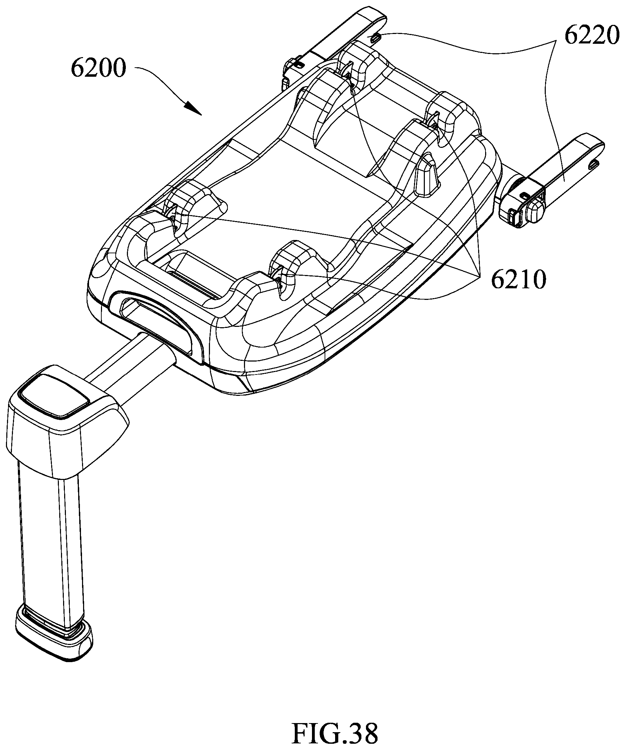

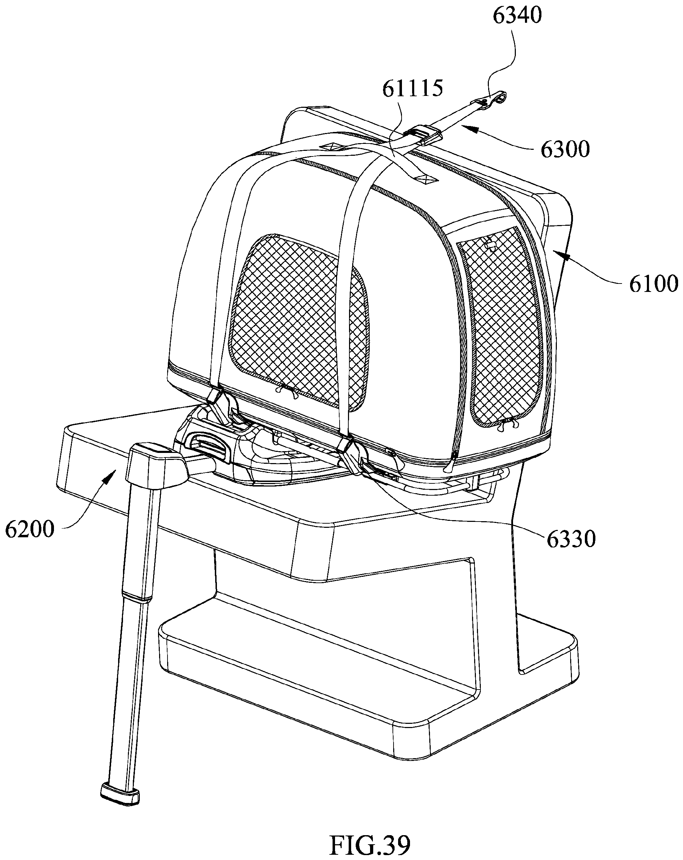

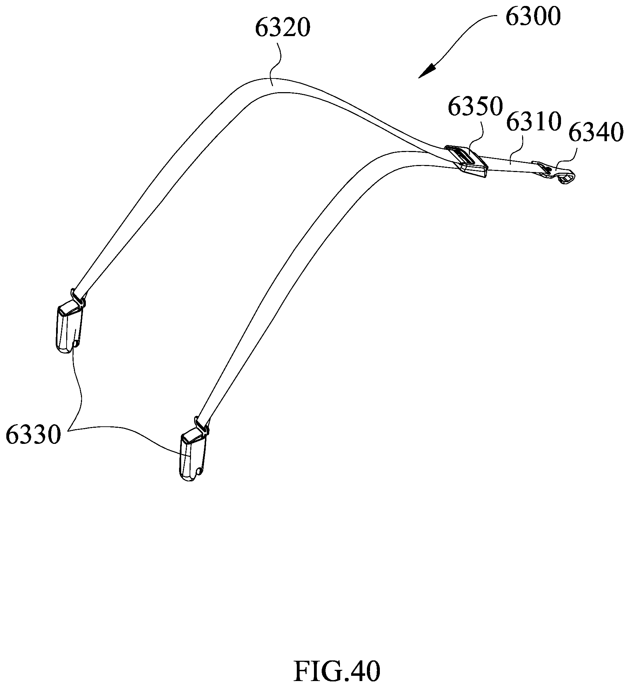

Referring to FIGS. 37A to 40, FIGS. 37A to 37C illustrate a perspective view of a carrier according to a first embodiment of a fifth aspect of the present disclosure. FIG. 38 illustrates a perspective view of a fixing seat assembly that fits with the carrier shown in FIG. 37A. FIG. 39 shows a perspective view of the carrier being mounted to a vehicle via the fixing seat assembly, and FIG. 40 shows a perspective view of the fixing strap assembly shown in FIG. 39.

A carrier 6100 of the present disclosure may be, for example, a pet box, a pet stretcher, a pet basket, a baby carrier, etc. The fifth aspect of the present disclosure provides a carrier (e.g., a pet box) which may have a different structure from the carriers of the first to fourth aspects.

As shown in FIGS. 37A to 37C, the carrier 6100 may include a box body 6110 and a bracket apparatus 6120 (also referred to as a "bracket assembly"). The box body 6110 includes a body 6111 and a bottom supporting member 6112, and the body 6111 is detachably covered on the bottom supporting member 6112 to form an accommodation space for a pet to sit on. The bottom supporting member 6112 constitutes the bottom of the box body 6110, and the body 6111 constitutes four side surfaces and a top surface of the box body 6110. The body 6111 is detachably connected to the bottom supporting member 6112 via at least one connecting assembly. Specifically, in one example, the at least one connecting assembly includes a first connecting member 61116 and a second connecting member 61117 which are detachably connected to each other, where the first connecting member 61116 is provided on the body 6111 and the second connecting member 61117 is provided on the bottom supporting member 6112. In a specific example, the first connecting member 61116 and the second connecting member 61117 are mutually cooperating zippers, but the present disclosure is not limited thereto. For example, they may also be mutually cooperating snap-fit structures, sliding buckle structures, hook and loop fasteners (Velcro), hooks and loops, etc., and preferably, a soft connection is adopted. Alternatively, in another example, the body 6111 and the bottom supporting member 6112 may be fixedly connected (e.g., sewn together) or integrally formed.

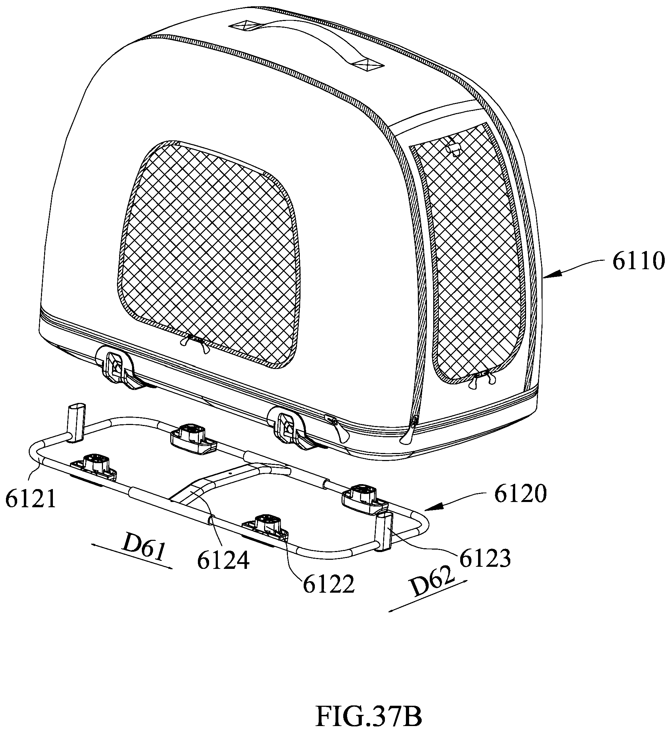

The bracket apparatus 6120 is used to fix the carrier 6100 to a moving apparatus, such as a vehicle or a stroller, etc. The bracket apparatus 6120 is provided below the bottom supporting member 6112 of the box body 6110 and may be secured to the fixing seat assembly 6200 installed on the vehicle. The box body 6110 is mounted on the bracket apparatus 6120 via the bottom supporting member 6112. As shown in FIG. 37B and FIG. 38, the bracket apparatus 6120 includes an engaging member 6121, and the engaging member 6121 is engaged with an engaging portion 6210 of the fixing seat assembly 6200. As a result, the carrier 6100 is secured to the vehicle seat by mating the connecting apparatus 6220 (e.g., an ISOFIX fixing member) of the fixing seat assembly 6200 with a socket provided on the vehicle. Optionally, as shown in FIG. 38, four engaging portions 6210 may be symmetrically provided on the fixing seat assembly 6200, so that the bracket apparatus 6120 is secured to the fixing seat assembly 6200 at four engaging points, thereby making the positioning of the two more stable. In an example, the engaging member 6121 may be in an annular structure, and is arranged to be spaced from the bottom of the bottom supporting member 6112. The center of the engaging member 6121 substantially corresponds to the center of the box body 6110 in the vertical direction.

In addition, the bracket apparatus 6120 may also include four first connecting brackets 6122, which are arranged on the engaging member 6121 to be connected to the bottom of the box body 6110, and are spaced a certain distance from each other, for example, respectively arranged near four corners of the bottom of the box body 6110, thereby providing balanced and stable support for the box body 6110. Furthermore, the four first connecting brackets 6122 may be symmetrically arranged on two opposite sides of the engaging member 6121 along the transverse axis direction with respect to a longitudinal axis direction D61 and a transverse axis direction D62 of the carrier 6100. For example, as shown in FIG. 37B, the four first connecting brackets 6122 are symmetrically arranged on two long sides of the annular structure of the engaging member 6121. However, it should be understood that the engaging member of the present disclosure is not limited to the above-mentioned shape, and the first connecting bracket 6122 is not limited to the above mentioned quantity. Optionally, in another example, only two first connecting brackets 6122 may be provided, and the two first connecting brackets 6122 are provided diagonally. In other examples, the number of the first connecting brackets 6122 may also be three, five, etc.

Furthermore, the bracket apparatus 6120 may further include a plurality of second connecting brackets 6123, which are respectively installed on two opposite sides of the engaging member 6121 along the longitudinal axis direction D61 and connected to the bottom of the box body 6110, so as to further stabilize the bonding of the box body 6110 to the bracket apparatus 6120. It should be noted that, although only two second connecting brackets 6123 are shown in FIG. 37B, the present disclosure is not limited thereto, and four, six, etc., second connection brackets 6123 may also be provided. In addition, it should be noted that in other examples, one of the first connecting bracket 6122 and the second connecting bracket 6123 may be provided, as long as it is capable of stabilizing the bonding of the box body 6110 to the bracket apparatus 6120, and the present disclosure is not limited in this regard.

In addition, the bracket apparatus 6120 may further include a structural reinforcement member 6124, which is approximately located in the middle of the engaging member 6121 along the longitudinal axis direction D61. The central portion of the structural reinforcement member 6124 is curved toward the bottom of the box body 6110, that is, the height of the central portion thereof is higher than the height of the ends on the two sides, so that the bracket apparatus 6120 has a higher impact resistance and is not easily deformed when subject to force. However, it should be noted that the structure of the bracket apparatus disclosed in the present disclosure is not limited to this embodiment.

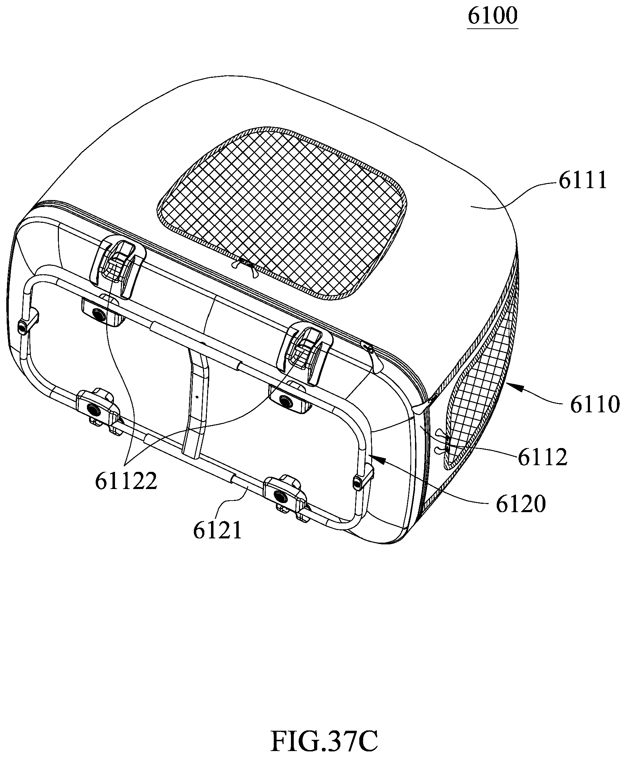

In addition, the carrier 6100 may be further secured with a Top Tether connection in addition to using the fixing seat assembly. As shown in FIG. 39 and FIG. 40, a fixing strap assembly 6300 may also be used to secure the carrier 6100 to the vehicle. Specifically, the fixing strap assembly 6300 includes a first strap 6310 and a second strap 6320, where one end of the first strap 6310 may be provided with a connecting apparatus 6340 (such as a Top Tether fixing member), and the other end of the first strap 6310 is provided with a connecting apparatus 6330 (such as a latch fixing member). One end of the second strap 6320 may be movably provided on the first strap 6310 by an adjuster 6350 (for adjusting the length of the second strap 6320), and the other end of the second strap 6320 is provided with another connecting apparatus 6330. Correspondingly, as shown in FIG. 37C, two connecting portions 61122 for connecting with the connecting apparatus 6330 are respectively provided on the outward circumference on two sides of the bottom supporting member 6112. In an example, each connecting portion 61122 may have an engaging rod for connecting with the corresponding connecting apparatus 6330. Optionally, the bottom supporting member 6112 has a corresponding recess portion at the connecting portion 61122, i.e., a recessed structure recessed inward from the outward circumference of the bottom supporting member 6112, and the engaging rod is located in the recess portion, so that when the connecting apparatus 6330 is connected to the engaging rod, at least a portion thereof is accommodated in the recess portion, so as to avoid interference between the connecting apparatus 6330 and other structures of the carrier 6100 and improve the aesthetics. Of course, the connecting portion of the present disclosure is not limited to the above structure, and it may also have other structures, such as a hook, a snap ring, etc. By providing the connecting portions 61122 at the outward circumference on two sides of the bottom supporting member 6112, the contact area (i.e., contact range or length) between the fixing strap assembly 6300 and the carrier 6100 may be made larger, so that the carrier 6100 can be placed on the vehicle seat more stably. Furthermore, when the carrier 6100 is placed on the vehicle seat, the connecting portion 61122 is provided in a position that facilitates its attachment to the connecting apparatus 6330 and does not interfere with the securing of the carrier 6100 to the vehicle seat and/or the fixing seat assembly 6200. It should be understood that the aforementioned embodiment is only an example of the fixing strap assembly 6300, but the present disclosure is not limited thereto, and the fixing strap assembly 6300 may also have other structures, such as the structures in the embodiments shown in FIG. 9, FIG. 14B or FIG. 20.

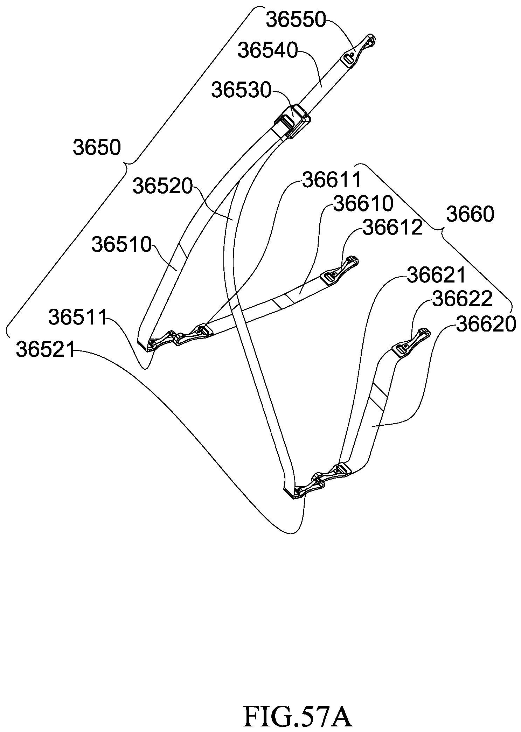

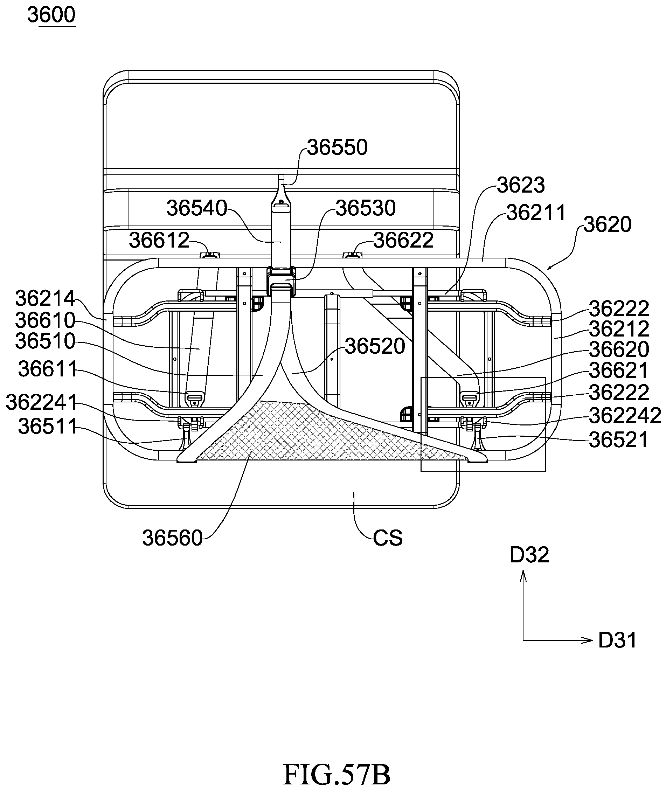

When the carrier 6100 is to be secured to a vehicle seat, as shown in the assembly diagram of FIG. 39, after the carrier 6100 is secured to the vehicle seat by the fixing seat assembly 6200, the two connecting apparatuses 6330 of the fixing strap assembly 6300 may also be connected to the two connecting portions 61122 on one side of the bottom supporting member 6112, respectively, and the other end of the fixing strap assembly 6300 (i.e., the connecting apparatus 6340 of the first strap 6310) is passed through a handle (i.e., the carrying handle) 61115 provided on the top side of the carrier 6100 to connect with a corresponding interface (e.g., a Top Tether interface, located at the top of the vehicle seat) provided on the vehicle, thereby further limiting the lateral sliding, tilting, etc. of the carrier 6100, so as to more firmly secure the carrier 6100. It should be noted that the carrier may be fixed without using a fixing seat assembly. For example, the carrier may be secured by a fixing strap assembly and a connecting assembly (similar to a connecting assembly 3660 shown in FIG. 57A below). Specifically, when the carrier needs to be secured to the vehicle seat, the two connecting apparatuses at one end of the fixing strap assembly may be respectively connected to the two connecting portions on one side of the bottom supporting member, and the other end of the fixing strap assembly may be connected to a corresponding interface on the vehicle (such as the Top Tether interface), that is, the fixing strap assembly is connected in the manner shown in FIG. 39. At the same time, the connecting assembly may be provided at the bottom of the carrier (specifically a box body) (see, for example, FIGS. 57A and 57B), with one end of the connecting assembly being connected to the carrier (e.g., the connecting portion or bracket apparatus thereof), and the other end of the connecting assembly being connected to the vehicle seat (e.g., via a latch connector, etc.), thereby stably securing the carrier to the vehicle seat.

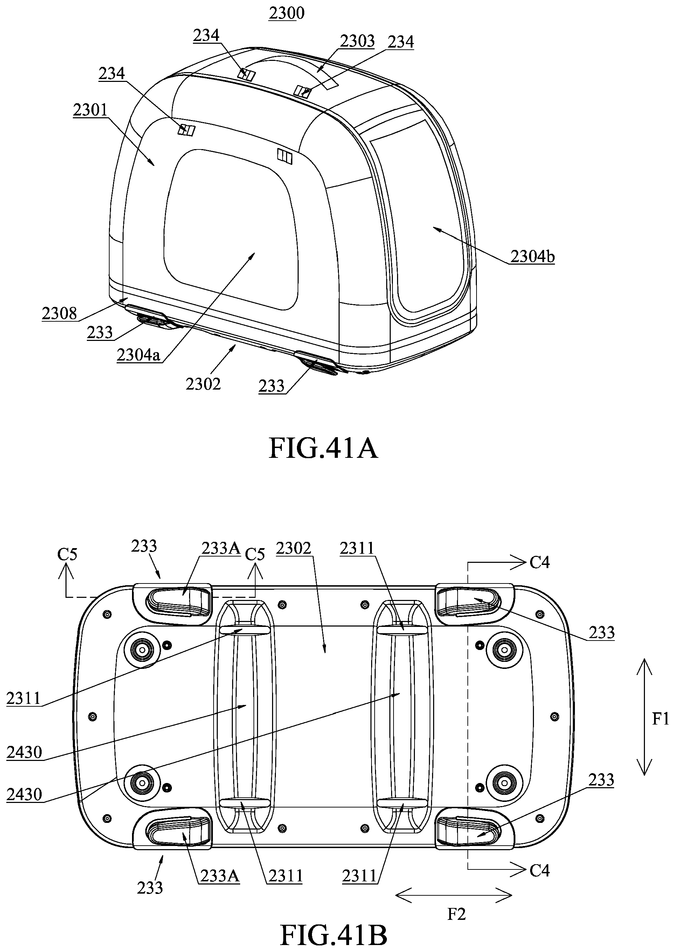

FIG. 41A illustrates a perspective view of a carrier 2300 according to a second embodiment of the fifth aspect of the present disclosure, where the carrier 2300 is, for example, a box-type structure, for example, a pet box for accommodating pets. The carrier 2300 includes, for example, a body 2301 and a bottom supporting member 2308, where the bottom of the bottom supporting member 2308 is the bottom 2302 of the carrier 2300, and the bottom supporting member 2308 is connected to a vehicle frame. Referring to FIG. 41B which is a bottom view, the bottom 2302 of the carrier 2300 includes four engaging members 2311, which are arranged in two rows and two columns. Two engaging members 2311 in the same row are spaced apart from each other in a left-right direction (first direction F1) and are substantially in the same position in a front-rear direction (second direction F2). The two engaging members 2311 in the same row are spaced apart from each other in the front-rear direction (the second direction F2 ), and are substantially in the same position in the left-right direction (first direction F1). In some embodiments, the bottom 2302 of the carrier 2300 is, for example, provided with two third grooves 2430 extending along the left-right direction (first direction F1), respectively, the two third grooves 2430 are separated by a predetermined distance in the front-rear direction (second direction F2), and the four engaging members 2311 are located in the two third grooves 2430. The bottom 2302 of the carrier 2300 has, for example, a front-rear symmetrical, left-right symmetrical structure. In some embodiments, the bottom 2302 of the carrier 2300 has two parallel rods (for example, two opposite rods of an annular structure), which extend in the front-rear direction and pass through the two third grooves 2430 in sequence, and the portions of the two rods located in the third grooves 2430 form four engaging members 2311. In some alternative embodiments, the bottom 2302 of the carrier 2300 may have four independent rods, and the four independent rods respectively pass through the two third grooves 2430 to form four engaging members 2311 .

The body 2301 and the bottom supporting member 2308 may be non-detachably connected or detachably connected by a structure such as a zipper, and the body 2301 may have a handle 2303, an observation window 2304a, a ventilation opening 2304b, etc. The body 2301 may be opened by a zipper structure to facilitate access to the pets.

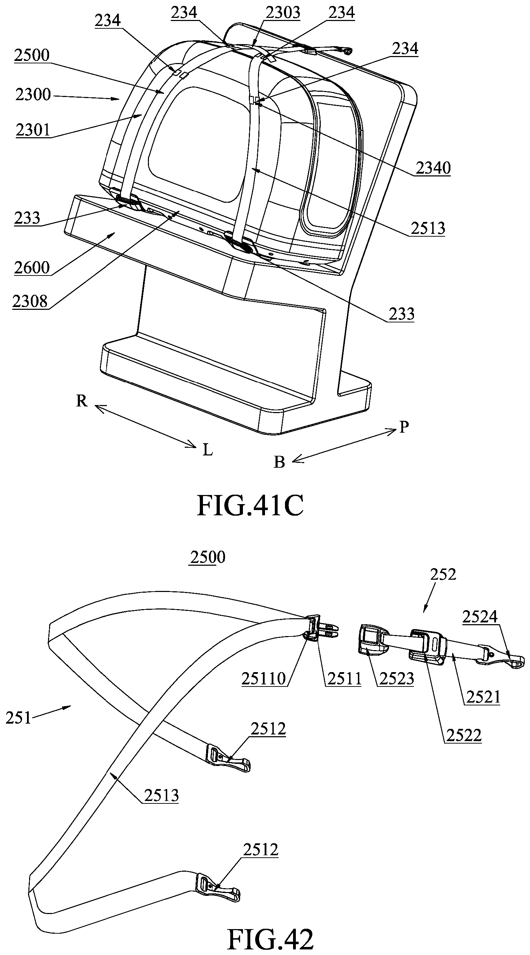

Referring to FIG. 41C, the carrier 2300 may be secured to the vehicle seat 2600 by the fixing strap assembly 2500. FIG. 42 shows an exemplary structure of the fixing strap assembly 2500. The fixing strap assembly 2500 includes, for example, a restraining strap assembly 251 and an extending component 252.

The restraining strap assembly 251 includes, for example, a first connecting end 2511 and at least one second connecting end 2512 (i.e., the fixing end). The first connecting end 2511 and each second connecting end 2512 may be connected by a plurality of restraining straps, and the restraining straps may be elastic webbing straps. In the embodiment, the restraining strap assembly 251 has two second connecting ends 2512, and the two second connecting ends 7512 are connected by a single restraining strap 2513. In some embodiments, the first connecting end 2511 may have a hole 25110 for the restraining strap to pass through, and the hole 25110 slidingly fit with the restraining strap 2513, so that the position of the first connecting end 2511 on the restraining strap 2513 is adjustable. In some embodiments, the second connecting end 2512 is, for example, an ISOFIX insert to be detachably connected to an ISOFIX socket of a vehicle seat. Of course, the type of the second connecting end 2512 is not limited to the ISOFIX insert, and it may be any suitable type such as a hook, a buckle, etc.

The extending component 252 includes, for example, an extending strap 2521, an adjusting portion 2522, a third connecting end 2523, and a fourth connecting end 2524. The extending strap 2521 is, for example, a webbing strap, and the third connecting end 2523 and the fourth connecting end 2524 are respectively connected to the extending strap 2521. The third connecting end 2523 is used to be detachably connected to the first connecting end 2511 of the restraining strap assembly 251. The third connecting end 2523 and the first connecting end 2511 may be any suitable structure such as a buckle or hook that fits with each other. The fourth connection end 2524 is used to be detachably connected to a suitable structure in the vehicle (e.g., a connection structure on the top of a vehicle seat, or a connection structure on the rearside of the backrest of a vehicle seat 2600) to secure the carrier 2300 to the vehicle seat 2600. The fourth connecting end 2524 may be any suitable type, such as a hook, a buckle, etc. The adjusting portion 2522 is provided on the extending strap 2521 to adjust the available length of the extending strap 2521 between the third connecting end 2523 and the fourth connecting end 2524.

In practice, the fourth connecting end 2524 of the extending component 252 may remain connected to a suitable structure in the vehicle, and the connection position of the first connecting end 2511 and the third connecting end 2523 is located in a place that is easily accessible to the user, such as the top or front side of the backrest of the vehicle seat This allows the user to easily secure the carrier 2300 to or remove it from the vehicle seat by conveniently manipulating the attachment or detachment of the first connecting end 2511 and the third connecting end 2523.

Referring again to FIGS. 41A and 41B, at least one strap guiding mechanism may be provided at least one of the bottom, side and top of the carrier 2300, and the strap guiding mechanism is used to guide the webbing strap of the fixing strap assembly 2500, and the restraining strap and/or extending strap of the fixing strap assembly 2500 are/is bonded to multiple positions of the carrier 2300, so as to effectively prevent the carrier 2300 from sliding left and right on the vehicle seat 2600.

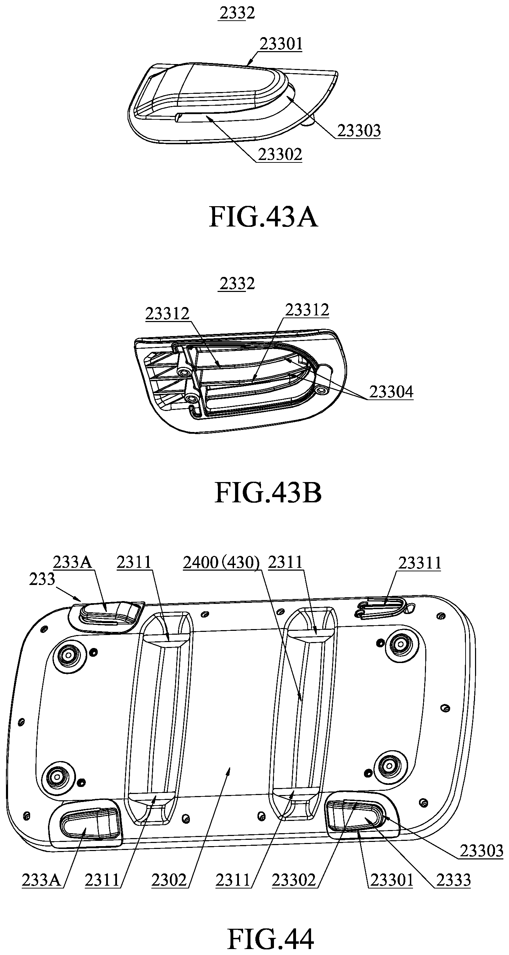

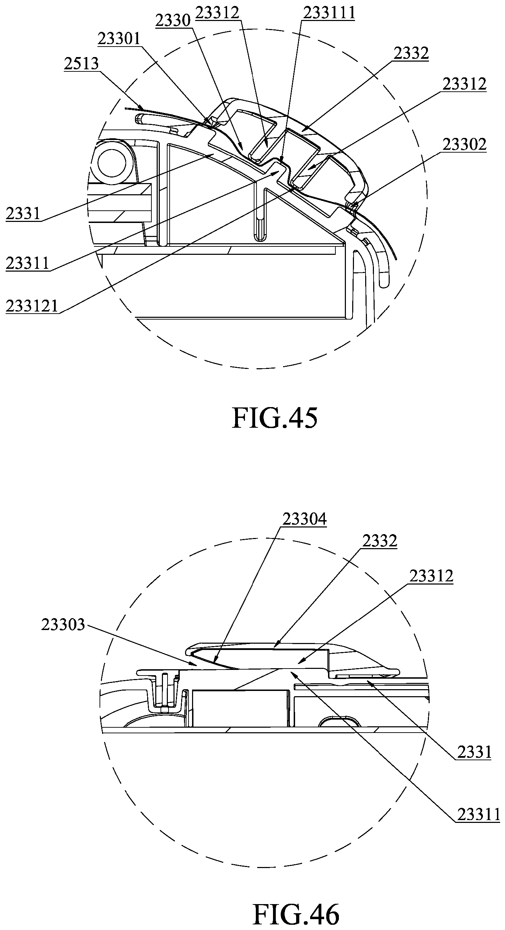

FIGS. 43A to 46 show an exemplary embodiment of a strap guiding mechanism 233. In an example, the strap guiding mechanism 233 may be symmetrically disposed at the edge of the bottom of the carrier, but the present disclosure is not limited thereto. The shell 233A of the belt guiding mechanism 233 may include a bottom shell 2331 and a top shell 2332. The bottom shell 2331 is formed by, for example, a shell of the bottom 2302 of the carrier 2300. The top shell 2332 is mounted on the bottom shell 2331 by a fastener not shown in the drawings. The bottom shell 2331 and the top shell 2332 define a channel 2330 for the webbing strap of the fixing strap assembly 2500 (more specifically, for the restraining strap 2513) to pass through, and the channel 2330 has a first port 23301 and a second port 23302. When the fixing strap assembly 2500 secures the carrier 2300 to the vehicle seat 2600, the restraining strap 2513 passes through the first port 23301 and the second port 23302. Referring to FIG. 43A, in this embodiment, the first port 23301 and the second port 23302 are both provided on the top shell 2332. In some alternative embodiments, the first port 23301 and the second port 23302 are defined, for example, jointly by the bottom shell 2331 and the top shell 2332.

Referring to FIGS. 43B to 45, at least one first convex rib 23311 protruding toward the top shell 2332 is provided on the bottom shell 2331, and at least one second convex rib 23312 protruding toward the bottom shell 2331 is provided on the top shell 2332. The first convex rib 23311 and the second convex rib 23312 are alternately arranged in a length direction of the restraining strap 2513. That is, the first convex rib 23311 and the second convex rib 23312 are arranged on the side walls opposite to each other in the channel 2330. By reasonably setting the heights of the first convex rib 23311 and the second convex rib 23312, the restraining strap 2513 located between the first port 23301 and the second port 23302 is bent in the channel 2330 to pass around a top end 233111 of the first convex rib 23311 and a top end 233121 of the second convex rib 23312, so that the restraining band 2513 is subjected to movement resistance from the first convex rib 23311 and the second convex rib 23312. In this way, when the fixing strap assembly 2500 is tightened, the restraining strap 2513 is less likely to slip relative to the carrier 2300.

Referring to FIG. 43A, FIG. 44 and FIG. 46, in some embodiments, the channel 2330 further has a side introduction port 23303, the side introduction port 23303 is located on the same side of the first port 23301 and the second port 23302, and the side introduction port 23303 has a sloped wall 23304 (also referred to as a "guiding slope"). By providing the side introduction port 23303 and the sloped wall 23304, the restraining strap 2513 can be easily slid laterally into the channel 2330.

Further referring to FIG. 41C, an exemplary embodiment of a strap guiding mechanism 234 is also shown. The strap guiding mechanism 234 is, for example, a C-shaped structure with an opening 2340. The strap guiding mechanism 234 may be provided on at least one of the bottom, side, and top of the carrier 2300. The restraining strap 2513 may be engaged in an accommodation space of the C-shaped structure, and the C-shaped structure limits the relative movement between the restraining strap 2513 and the carrier 2300 in the left-right direction of the vehicle seat 2600, so that the carrier 2300 is stably secured to the vehicle seat 2600. In some alternative embodiments, the strap guiding mechanism 234 may be, for example, a belt loop or any other suitable structure as long as the relative positional relationship between the restraining strap 2513 and the carrier 2300 can be maintained. In some embodiments, the restraining strap 2513 passes through both the strap guiding mechanism 234 and the handle 2303 at the top of the carrier 2300.

Optionally, the distance between the second connecting ends 2512 (i.e., the fixing ends) of the two restraining straps 2513 is smaller than the distance between two strap guiding mechanisms 233 (through which the two restraining straps 2513 pass), and the openings of the strap guiding mechanisms 233 face outward, so that the restraining straps 2513 are less likely to be disengaged from the strap guiding mechanisms 233 when being secured. It should be noted that this setting is not limited to the above mentioned embodiment, and is also applicable to other embodiments of the fifth aspect of the present disclosure.

It should be noted that the "strap guiding mechanism 234" in this embodiment may be considered as the "first strap guiding mechanism", and the "strap guiding mechanism 233" may be considered as the "second strap guiding mechanism". The carrier 2300 may be provided with only the first strap guiding mechanism or the second strap guiding mechanism, or be provided with both the first strap guiding mechanism and the second strap guiding mechanism.

It should be noted that, unless otherwise clearly specified and limited, the terms regarding directions such as "front", "rear", "left", and "right" of the vehicle seat in the embodiments of the present disclosure are based on the "front", "rear", "left", and "right" directions of a normally traveling vehicle. The drawings schematically show the "front" and "rear" directions with arrows B and P, and schematically show the "left" and "right" directions with arrows L and R. These terms regarding directions are used only to make the description of embodiments of the present disclosure clearer and are not intended to unduly limit the scope of protection of the present disclosure.

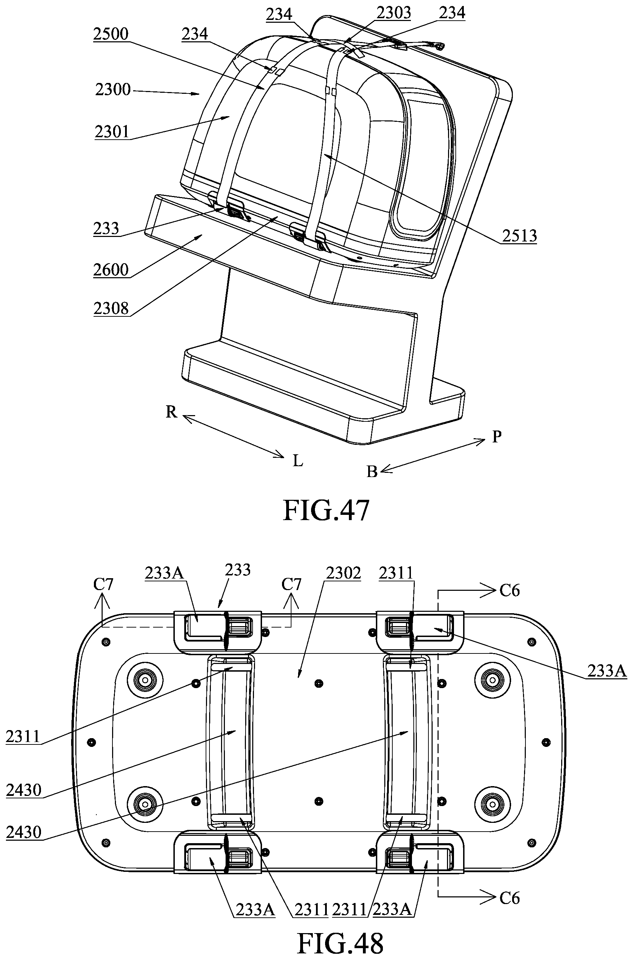

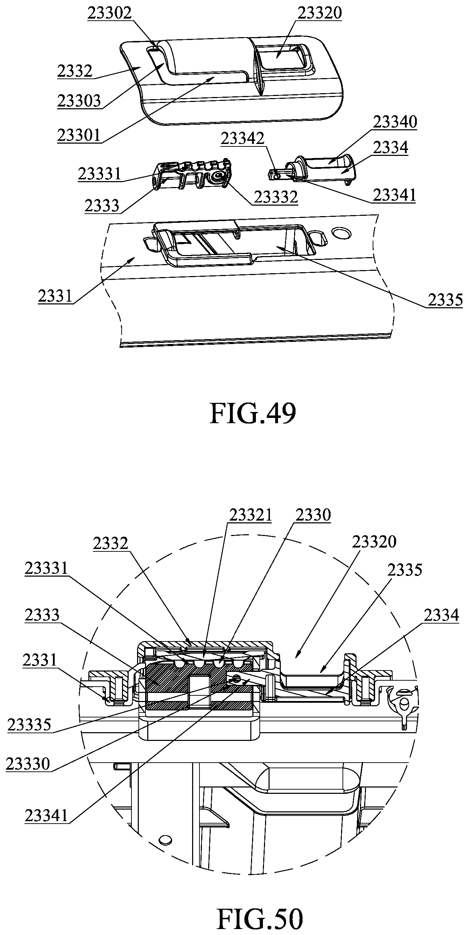

FIGS. 47 to 52 show an exemplary embodiment of a strap guiding mechanism 233 of a third embodiment of the fifth aspect of the present disclosure. The shell 233A of the strap guiding mechanism 233 may include a bottom shell 2331 and a top shell 2332. The bottom shell 2331 is formed, for example, by a shell of the bottom 2302 of the carrier 2300. The top shell 2332 is mounted on the bottom shell 2331, for example, by a fastener not shown in the drawings. The bottom shell 2331 and the top shell 2332 define a channel 2330 for the webbing strap of the fixing strap assembly 2500 (more specifically, for the restraining strap 2513) to pass through. The channel 2330 has a first port 23301 and a second port 23302. The restraining strap 2513 passes through the first port 23301 and the second port 23302. Referring to FIG. 49, in the present embodiment, the first port 23301 and the second port 23302 are both provided on the top shell 2332. In some alternative embodiments, the first port 23301 and the second port 23302 are, for example, jointly defined by the bottom shell 2331 and the top shell 2332.

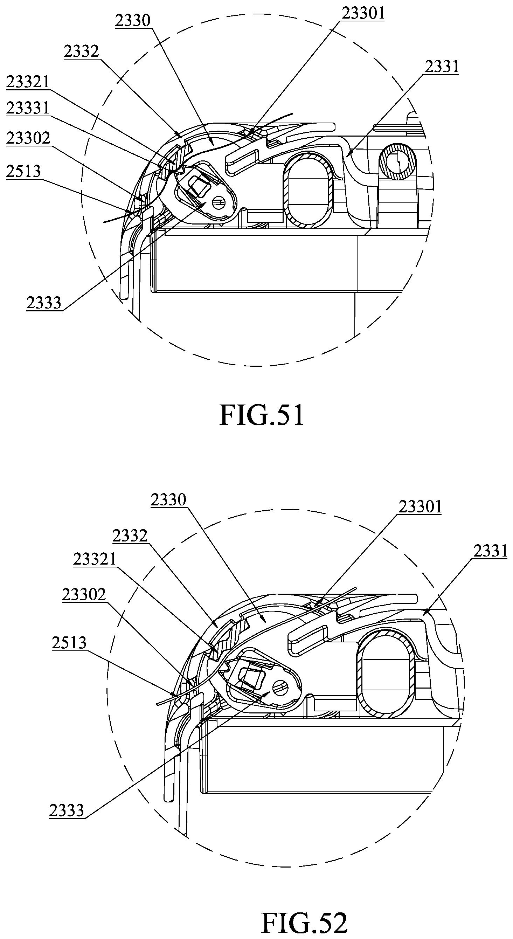

Referring to FIG. 51 and FIG. 52, the strap guiding mechanism 233 further includes a cam 2333 provided in the channel 2330. The cam 2333 has a working position and a disabled position. Referring to FIG. 51, in the working position, the cam 2333 presses the restraining strap 2513 against the top shell 2332 (the side wall of the channel 2330) of the shell 233A, so that the restraining strap 2513 cannot move relative to the strap guiding mechanism 233. In some embodiments, the top shell 2332 is provided with a reinforcing member 23321 located in the channel 2330, and the reinforcing member 23321 may be made of a material that has a large friction coefficient and is strong. When the cam 2333 is in the working position, the restraining strap 2513 is clamped between the cam 2333 and the reinforcing member 23321. Referring to FIG. 52, in the disabled position, the cam 2333 releases the pressure on the restraining strap 2513, and the restraining strap 2513 may move freely relative to the strap guiding mechanism 233.

Referring to FIGS. 48 to 50, to facilitate changing the position of the cam 2333, the strap guiding mechanism 233 may further include an adjusting button 2334, which is connected to the cam 2333 to drive the cam 2333 to rotate between the working position and the disabled position. In some embodiments, the cam 2333 has a hole 23330 and the adjusting button 2334 has a connecting shaft 23341, which is used to be inserted into the hole 23330 and fit with the hole 23330 in a non-rotatable manner. The hole 23342 of the connecting shaft 23341 is connected to the hole 23332 of the cam 2333 through a fastener 23335 (see FIG. 50). In some embodiments, the bottom shell 2331 of the shell 233A defines an mounting cavity 2335 adjacent to the channel 2330, the adjusting button 2334 is mounted in the mounting cavity 2335, and the top shell 2332 of the shell 233A defines an operating port 23320 for operating the adjusting button 2334. The user may adjust the cam 2333 to the working position or the disabled position by turning the adjusting button 2334 through the operating port 23320. Referring to FIG. 49, the adjusting button 2334 has, for example, a recessed portion 23340 to facilitate the user to apply force to the adjusting button 2334.

Referring to FIG. 49, in some embodiments, the cam 2333 has a plurality of teeth 23331 for pressing the restraining strap 2513, and the teeth 23331 are capable of catching the restraining strap 2513, making the restraining strap 2513 less likely to slip relative to the strap guiding mechanism 233. Referring to FIG. 43A and FIG. 44, the strap guiding mechanism 233 may also be configured with a side introduction port 23303 as described in the previous embodiments.

It may be understood that the strap guiding mechanism 233 of the present embodiment may also be applied to the strap guiding mechanisms in the aforementioned embodiments, such as the strap guiding mechanisms 133A, 733, 1450, 1850, 1950, and the present disclosure is not limited thereto.

In the following, carriers according to various embodiments of sixth to eighth aspects of the present disclosure will be described, and for the convenience of description, the carriers will be represented by "8300", "3100", "3300" to "3800", "9300" and "1300" respectively. The carrier may be, for example, an animal carrier, and more specifically a stretcher, but the present disclosure is not limited thereto.

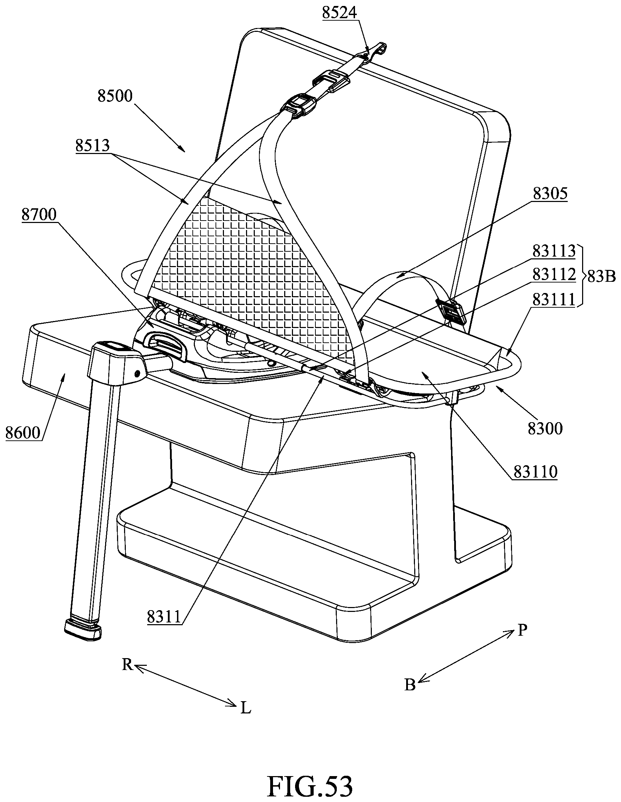

FIG. 53 shows a carrier 8300 according to a first embodiment of the sixth aspect of the present disclosure and the manner through which it is secured to a vehicle seat 8600. Specifically, as shown in FIG. 53, the carrier 8300 is, for example, a stretcher, and the stretcher has a strap 8305 to restrain an object on the carrier 8300.

Referring to FIG. 53, the carrier 8300 includes, for example, a bracket apparatus 83B and a supporting surface 83110 (i.e., the top surface or upper surface of a supporting portion). The bracket apparatus 83B is provided on an opposite side of the supporting surface 83110, i.e., a bottom surface of the supporting portion. The bracket apparatus 83B includes, for example, a first bracket 83111, a second bracket 83112, and a third bracket 83113. The first bracket 83111 and the third bracket 83113 are disposed substantially parallel to each other and in annular structures, and the size of the third bracket 83113 may be smaller than that of the first bracket 83111. The first bracket 83111 and the third bracket 83113 are connected via the second bracket 83112, and the second bracket 83112 may have an oblique rod (not shown in the drawings) extending between the first bracket 83111 and the third bracket 83113. The supporting surface 83110 is, for example, connected to the first bracket 83111, for example, to support a pet. The supporting surface 83110 is made of, for example, a rigid material (e.g., metal plate, plastic plate) or a flexible material (e.g., canvas), depending on the actual application requirements. The engaging member 8311 is, for example, formed on the third bracket 83113. The carrier 8300 may be secured to the vehicle seat 8600 via the fixing seat assembly 8700 and/or the fixing strap assembly 8500, for example, it may be secured to the fixing seat assembly 8700 (which is similar in construction to the fixing seat assembly 6200 described above, and will not be repeated herein) via the engaging member 8311. In addition, the carrier of the present embodiment may also be secured to the vehicle seat via a fixing strap assembly. The specific structure of the fixing strap assembly and its connection to the carrier and the vehicle seat will be described in detail below.

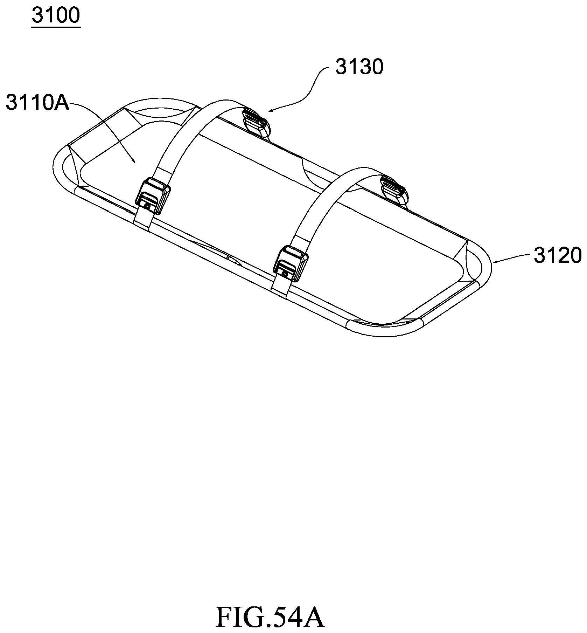

FIGS. 54A to 54D illustrate carriers 3100, 3300 according to a second embodiment of a sixth aspect of the present disclosure, and detailed descriptions are as follows.

Referring to FIG. 54A, which illustrates a schematic view of the appearance of a carrier 3100 at various viewpoints according to the second embodiment of the sixth aspect of the present disclosure. The carrier 3100 includes a carrying portion 3110, a bracket apparatus 3120 and a restraining apparatus 3130. The carrying portion 3110 may be rectangular or square ring-shaped, which defines a carrying surface 3110A for carrying and supporting an animal thereon. Specifically, the carrying portion 3110 may carry and support an animal, and is made of a rigid material (such as metal, plastic, wood, etc.) or a soft (i.e., flexible) material (such as fabric, etc.) according to actual application requirements. The bracket apparatus 3120 may be made of metal or other materials with high rigidity, and each constituent bracket thereof may be in the form of a hollow tube or a solid rod, but the present disclosure is not limited thereto. The restraining apparatus 3130 is disposed on the carrying surface 3110A to stably restrain the animal on the carrying surface 3110A, and further provides supporting stability for the animal on the carrying surface 3110A (to be further described below).

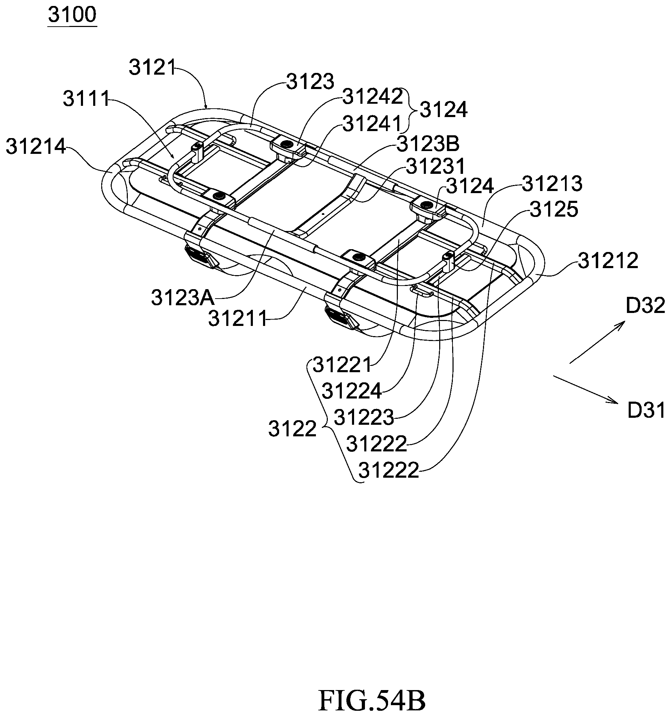

Referring to FIG. 54B, which shows the appearance of the carrier 3100 from another perspective to illustrate the bracket apparatus 3120 of the carrier 3100. As shown in the drawings, the bracket apparatus 3120 includes a first bracket 3121, two second brackets 3122, a third bracket 3123, and a first fixing assembly 3124 connecting each second bracket 3122 and the third bracket 3123. The bracket apparatus 3120 is provided on the bottom surface 3111 of the carrying portion 3110 (i.e., the opposite side of the carrying surface 3110A). In the present disclosure, the bracket apparatus 3120 not only provides necessary supporting strength for the carrying portion 3110 of the carrier 3100, but also allows the carrier 3100 to be fixed to a moving apparatus (such as a vehicle or a stroller).

As shown in FIG. 54B, the first bracket 3121 mainly consists of two opposite long sides 31211, 31213 and two opposite short sides 31212, 31214 adjacent to each other, which is in the shape of a rectangle or a square ring and corresponds to the size and shape of the carrying portion 3110, but the present disclosure is not limited thereto. In other embodiments, the first bracket may also consist of four sides of substantially equal length adjacent to each other to form a generally square shape. In this embodiment, the first bracket 3121 is bonded to the carrying portion 3110 and is arranged around the periphery of the carrying portion 3110. The carrying portion 3110 does not completely cover the first bracket 3121, but exposes the four corners of the rectangular or square ring shaped supporting bracket 3121 and the midpoints of the long sides 31211, 31213, so as to facilitate the caregiver or user to hold the carrier 3100 with their hands. However, the present disclosure is not limited thereto. Optionally, the carrying portion 3110 may be designed according to actual needs to expose other portions of the carrying portion 3110 or completely cover the first bracket 3121. In addition, the carrying portion 3110 may be of a recessed structure, that is, the bottom thereof may be slightly lower than a plane formed by the first bracket 3121, thereby forming an accommodation space with a depth to facilitate carrying and supporting the animal therein.

The two second brackets 3122 are connected to the first bracket 3121 and are separated from each other along the longitudinal direction D31 of the carrying portion 3110 (i.e., they are respectively located on two sides of the line connecting the centers of the two long sides of the carrying portion 3110). Each second bracket 3122 is bonded to the carrying portion 3110 and extends from one long side of the carrying portion 3110 to the other long side along the transverse direction D32 of the carrying portion 3110. By providing the two second brackets 3122 spaced apart in the longitudinal direction D31 of the carrying portion 3110, the load-bearing capacity of the carrying portion 3110 can be dispersed and a firm support can be provided for the carrying portion 3110, thereby improving the load-bearing capacity and impact resistance of the carrying portion 3110.

In this embodiment, each second bracket 3122 includes a first cross bar 31221, a pair of longitudinal bars 31222, a second cross bar 31223, and a pair of connecting portions 31224. As shown in FIG. 54B, the first crossbar 31221 is a curved bar with both ends bent and a contour that corresponds to the recessed structure of the carrying portion 3110, but the present disclosure is not limited thereto. Alternatively, the first cross bar 31221 may also be a straight bar, so as to form a fixed interval between the first cross bar 31221 and the carrying portion of the recessed structure as an avoidance space. The first crossbar 31221 is connected to the two long sides 31211, 31213 of the first bracket 3121 (i.e., parallel to the transverse direction D32), and is spaced apart from each other along the longitudinal direction D31 of the carrying portion 3110 (i.e., respectively located on two sides of the center line of the two long sides of the carrying portion 3110). The pair of longitudinal rods 31222 of the second bracket 3122 are arranged parallel to each other, each of which has one end connected to the first cross bar 31221, and the other end connected to a short side 31212 (or a short side 31214 ) of the first bracket 3121. The second cross bar 31223 is shorter than the first cross bar 31221, and the two ends of which are respectively connected to the pair of longitudinal bars 31222. That is, in this embodiment, when viewing along the longitudinal direction D31 of the carrier 3100, the respective pair of longitudinal rods 3122 and the second cross rod 31223 of each second bracket 3122 forms an "H" shaped structure, which is connected between the respective first cross bar 31221 of each second bracket 3122 and the short side 31212 or 31214 of the first bracket 3121, so as to further improve the load-bearing capacity and impact resistance of the carrying portion 3110. In this embodiment, the longitudinal rod 31222 is in the form of a straight rod, but the present disclosure is not limited thereto. Optionally, the longitudinal rod 31222 may also be formed as a non-straight rod, and may be formed as a rod with a zigzag form or a tapering form according to the height of the contour of the carrying portion or the space of the bracket.

The pair of connecting portions 31224 of each second bracket 3122 may be disposed at positions where each second cross bar 31223 and the pair of longitudinal bars 31222 are connected, so as to facilitate attachment (e.g., by means of hooking) of a strap fixing system (e.g., various fixing strap assembly as described above and below) of a moving apparatus (e.g., a vehicle) thereto by means of a connector, thereby securing the carrier 3100 to the moving apparatus (to be further described below). Alternatively, the pair of connecting portions of each of the second brackets may be provided at any position on each of the second crossbars as long as it may assist the strap fixing system in securing the animal carrier to the moving apparatus. In addition, in this embodiment, the connecting portion 31224 extends away from the bottom surface 3111 on each of the corresponding second brackets 3122, thereby forming a fixed interval with the bottom surface 3111, and providing an avoidance space when the carrier 3100 of the present embodiment is connected to the strap fixing system of the vehicle, so as to prevent the connector of the strap fixing system from pressing upward against the bottom surface 3111 and causing interference when the connector is connected to the connecting portion 31224. Alternatively, in other embodiments, the second bracket may not include a connecting portion, and the connector of the strap fixing system may be directly connected or hooked to the first bracket; or, the connector may be directly connected or hooked to the third bracket, and fit with a limiting structure (not shown, which may be provided on the connector itself or the third bracket) to limit the connection position of the connector hooked to the third bracket.

The third bracket 3123 is connected to the second bracket 3122 through the corresponding first fixing assembly 3124, and may be rectangular or square ring-shaped for fitting with the engaging apparatus of the moving apparatus (to be further described below), but the present disclosure is not limited thereto. In other embodiments, the third bracket may also be formed by four sides of substantially equal length adjacent to each other to form a generally square shape. As shown in the drawings, the third bracket 3123 is smaller than the first bracket 3121 and is parallel to the first bracket 3121, the third bracket 3123 and the first bracket 3121 are substantially horizontally arranged and are in an up-and-down arrangement in the vertical direction. In this embodiment, the third bracket 3123 further includes a structural reinforcement member 31231. The reinforcement member 31231 connects two opposite long sides at the center of the long side of the third bracket 3123 to improve the strength of the third bracket 3123. In this embodiment, the reinforcement member 31231 may be of a bent rod structure with two ends bent up, and a central portion thereof is used to press against the bottom surface 3111 of the bearing portion 3110, thereby further strengthening the support for the carrying portion 3110. In this embodiment, the third bracket 3123 and the carrying portion 3110 are not in contact with each other, but the present disclosure is not limited thereto. In this embodiment, the third bracket 3123 is connected to the second bracket 3122 via four first fixing assemblies 3124, the four first fixing assemblies 3124 are symmetrically arranged with respect to each other in both the longitudinal direction D31 and the transverse direction D32 of the carrier 3100. In other words, the four first fixing assemblies 3124 are provided in pairs spaced apart from each other along the longitudinal direction D31 (i.e., respectively located on two sides of the center line of the long side of the carrying portion 3110), and are provided in pairs spaced apart from each other in the transverse direction D32 (i.e., respectively located on two sides of the center line of the short side of the carrying portion 3110). In this embodiment, the symmetrical arrangement of the first fixing assembly 3124 can further enhance the overall stability of the bracket apparatus 3120 of the carrier 3100, which is more conducive to a stable fit with the moving apparatus.

As shown in FIG. 54B, the bracket apparatus 3120 of the carrier 3100 of this embodiment may further include a second fixing assembly 3125, which is connected between the second bracket 3122 and the third bracket 3123, so that further stability of the third bracket 3123 with respect to the second bracket 3122 may be provided. Specifically, the second fixing assembly 125 is connected to the midpoint of the short side of the third bracket 123 to provide uniform supporting force and better stabilization effect.

In this embodiment, the first bracket 3121, the second bracket 3122, the third bracket 3123, the first fixing assembly 3124 and the second fixing assembly 3125 are independent structural members connected to each other, but the present disclosure is not limited thereto. In other embodiments, the first bracket 3121, the second bracket 3122, the third bracket 3123, the first fixing assembly 3124, and the second fixing assembly 3125 (or parts thereof) may also be an integrated structural member.

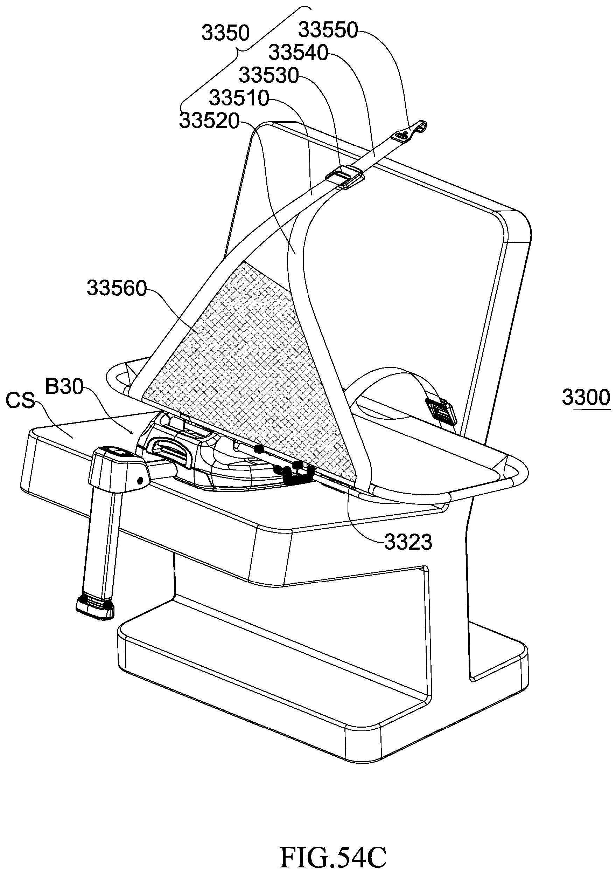

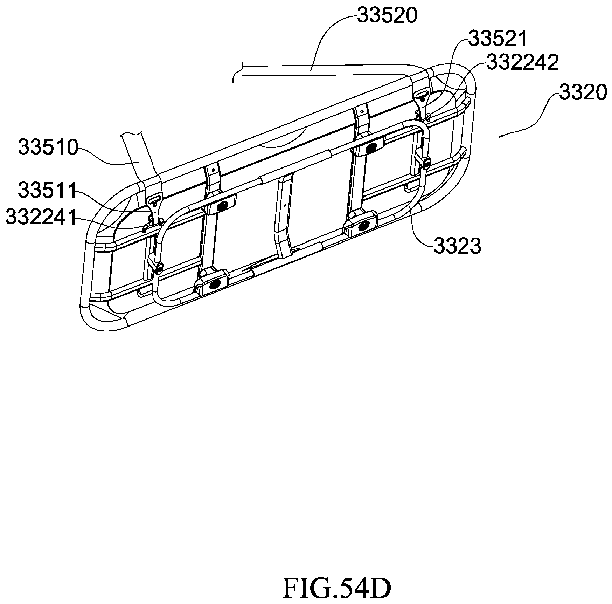

Referring to FIGS. 54C and 54D, which are schematic diagrams of the structure of a carrier (such as an animal carrier, a stretcher, etc.) according to a third embodiment of the sixth aspect of the present disclosure, and the drawings are used to illustrate the manner through which the carrier fits with the vehicle seat. The carrier 3300 of this embodiment has a similar structure to the carrier 3100 of the aforementioned embodiment, and thus will not be described in detail. In this embodiment, the carrier 3300 may be mounted to the base B30 (also referred to as a "fixing seat assembly", similar to the "fixing seat assembly 6200" and "fixing seat assembly 8700" in the aforementioned embodiments) via its third bracket 3323, thereby being fixed to the vehicle seat CS. This embodiment differs from the preceding embodiments in that, in this embodiment, the carrier 3300 further includes a securing strap assembly 3350 through which the stability of the securing to the vehicle seat can be further improved. As shown in the drawings, in this embodiment, the fixing strap assembly 3350 may be a top fixing strap assembly (Top Tether), which mainly includes a first tether 33510, a second tether 33520, a length adjuster 33530 and a connecting tether 33540. The first tether 33510 and the second tether 33520 of the present embodiment may also be referred to as "restraining straps", which are similar in structure to the restraining straps in the aforementioned embodiments of the present disclosure. One end of each of the first tether 33510 and the second tether 33520 is connected to a hook member 33511, 33521; the other end of each of the first tether 33510 and the second tether 33520 is connected to the same side of the length adjuster 33530. In this embodiment, the connecting tether 33540 of the fixing strap assembly 3350 extends through the other side of the length adjuster 33530 with one end thereof to form an adjusting end (not shown), and a fixing hook member 33550 (such as a hook, etc.) is connected to the opposite end of the adjusting end for being fixed to a corresponding fixing point (not shown in the drawings) at an upper side of the rear seat of the vehicle, or over the seat to the rear bottom as an anchor point. It should be noted that the aforementioned "first tether 33510" and "second tether 33520" may also be referred to as "restraining strap", similar to the "restraining strap 1513" in the aforementioned embodiment; the "length adjuster 33530" may also be referred to as "adjusting portion", similar to the "adjusting portion 1522" in the aforementioned embodiment; and the "connecting tether 33540" may also be referred to as "extending strap", similar to the "extending strap 1521" in the aforementioned embodiment.

Specifically, the respective hook members 33511, 33521 of the first tether 33510 and the second tether 33520 are connected to corresponding hooking portions (i.e., connecting portions) 332241, 332242, such as fixing rings, etc., on the side proximate to the carrier 3300 that is away from the backrest of the vehicle seat, but the present disclosure is not limited thereto. In the case where the carrier 3300 has been engaged with the base B30 (the base B30 has been installed and secured to the vehicle seat in advance), one end of the first tether 33510 and the second tether 33520 are fixedly connected to the side of the second bracket 3320 of the carrier 3300 that is away from the seat backrest by the fit of their respective hook members 33511, 33521 with the corresponding connecting portions 332241, 332242, and extends toward the top of the vehicle seat CS. In this embodiment, the lengths of the first tether 33510 and the second tether 33520 are fixed, and the user may pull the adjusting end of the connecting tether 33540 to adjust the length of the connecting tether 33540 in conjunction with the fixation of the length adjuster 33530, thereby adjusting the overall strap length of the fixing strap assembly 3350 to adapt to the position of the fixing point in the vehicle. Alternatively, in other embodiments, the length of the connecting tether may be fixed, and the user adjusts the length of the first tether and the second tether with a length adjuster, thereby adjusting the overall strap length of the fixing strap assembly to accommodate a fit to the fixing point at the upper side, or at the rear bottom of, the rear seat of the vehicle. The specific structure of the length adjuster and the method of adjusting the length by using the connecting tether in conjunction with the length adjuster are common knowledge understood by those skilled in the art and will not be elaborated here.

In this embodiment, the fixing strap assembly 3350 may further include a supporting structure 33560 (only shown in FIG. 54C) connected between the first tether 33510 and the second tether 33520. For example, the supporting structure 33560 is a supporting mesh and is connected between the first tether 33510 and the second tether 33520 by, for example, sewing. In this way, the animal can be prevented from rolling due to changes in vehicle speed when being carried on the carrier 3300, thereby protecting the animal from being injured due to changes in vehicle speed or even in the event of impact to the vehicle. Besides, the supporting mesh will not obstruct the sight of the driver or caregiver, allowing the driver or caregiver to observe the real-time situation of the animal on the vehicle 3300 in a timely manner.

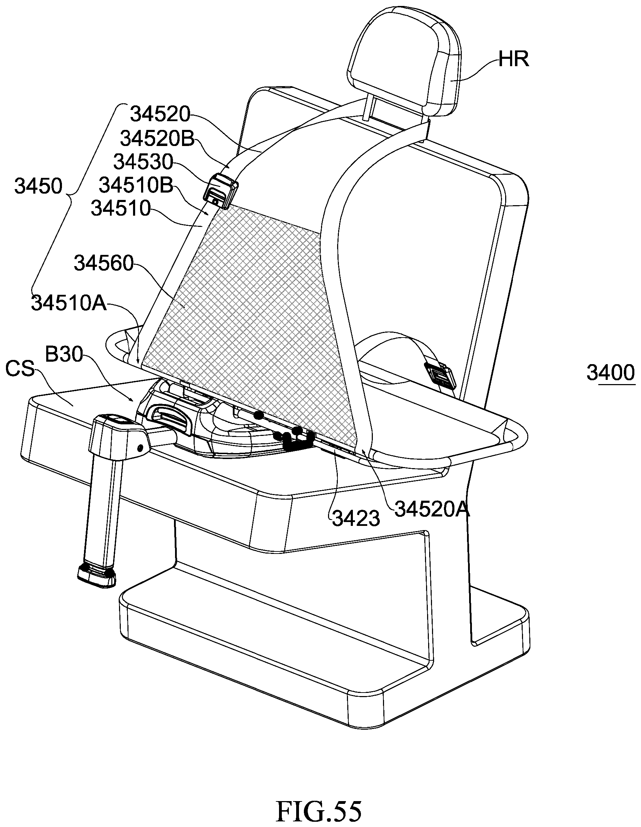

Referring to FIG. 55, which is a schematic diagram of the structure of a carrier according to a fourth embodiment of the sixth aspect of the present disclosure, and the figure is used to illustrate another manner through which the carrier fits with the vehicle seat. In this embodiment, the carrier 3400 may also be mounted to the base B30 (also referred to as a "fixing seat assembly", which is similar to the structure of the fixing seat assembly in the previous embodiments) through its third bracket 3423, so as to be secured to the vehicle seat CS. The difference between this embodiment and the aforementioned embodiment is that, in this embodiment, the fixing strap assembly 3450 of the carrier 3400 is a tether assembly (Tether), which may fit with the vehicle seat backrest or headrest HR, thereby further improving the stability of the carrier 3400 secured to the vehicle seat. As shown in the drawings, in this embodiment, the fixing strap assembly 3450 mainly includes a first tether 34510, a second tether 34520, and a length adjuster 34530. The respective first ends 34510A, 34520A of the first tether 34510 and the second tether 34520 are connected with a respective hook member (not shown in the drawings due to occlusion, specifically like the hook members 33511, 33521 as shown in FIG. 54D) to form fixing ends. The respective second ends 34510B and 34520B of the first tether 34510 and the second tether 34520 are connected to respective sides of the length adjuster 34530. In the present embodiment, either the first tether 34510 or the second tether 34520 (or both) extends through the length adjuster 34530 with the respective second end 34510B, 34520B to form an adjusting end.

In this embodiment, similar to FIG. 54D, the respective hook members of the first tether 34510 and the second tether 34520 may be connected to corresponding hook portions (not shown in the drawings, the hook portions 332241, 332242 shown in FIG. 54D may be referred to, which have a similar structure) close to the side of the carrier 3400 away from the backrest of the vehicle seat, and fit with the vehicle seat headrest HR to form a supporting point, so that the carrier 3400 can be more securely mounted to the vehicle seat. Specifically, in a case where the carrier 3400 has been engaged with the mounted base B30, the first end 34510A of the first tether 34510 is connected to the corresponding connecting portion of the second bracket through its hook member, so that the fixing strap assembly 3450 is fixedly connected to a side of the second bracket of the carrier 3400 away from the backrest of the seat with the first end 34510A of the first tether 34510 as a first fixing end. The user may cause the first end 34520A of the second tether 34520 to extend toward the top of the vehicle seat CS, go around to the rear of the headrest HR of the seat and press against the headrest HR (or between the headrest HR and the backrest) as a supporting point, then further extend the first end 34520A of the second tether 34520 downward toward the vehicle seat CS, and finally fix the first end 34520A of the second tether 34520 to the side of the second bracket of the carrier 3400 away from the backrest of the seat through its hook member as a second fixing end. Similarly, in this embodiment, the user may pull the second end 34510B, 34520B of the first tether 34510 or the second tether 34520 to adjust the length of the first tether 34510 or the second tether 34520 in conjunction with the fixation of the length adjuster 34530 so as to adjust the overall strap length of the fixing strap assembly 3450 to adapt to the position of the headrest HR of the seat. The specific structure of the length adjuster and the length adjusting method of the first tether and the second tether in conjunction with the length adjuster are common knowledge understood by those skilled in the art and will not be elaborated here.

Similarly, in this embodiment, the fixing strap assembly 3450 may further include a supporting structure 34560 (e.g., a supporting mesh) connected between the first tether 34510 and the second tether 34520, thereby preventing the animal carried on the carrier 3400 from rolling due to changes in vehicle speed, and allowing the driver or caregiver to observe the real-time situation of the animal on the vehicle 3400 in a timely manner.

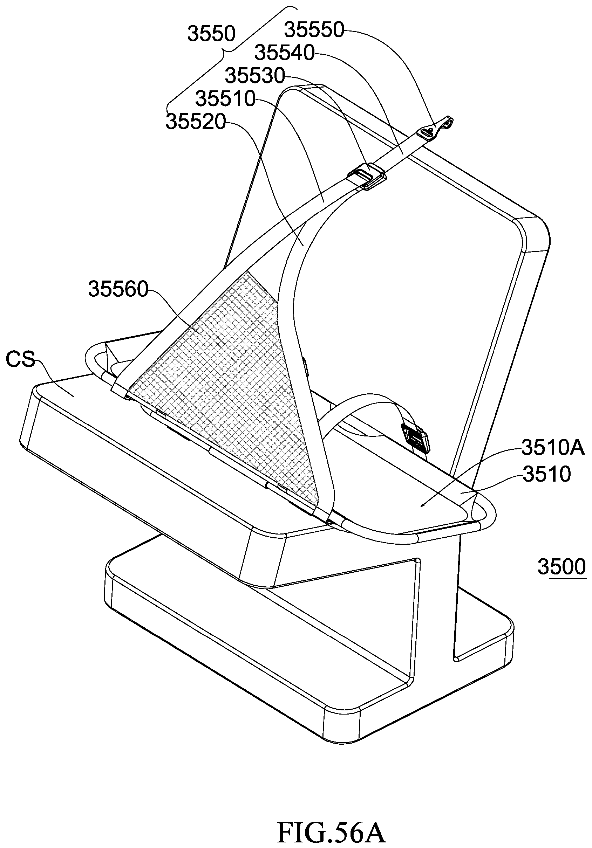

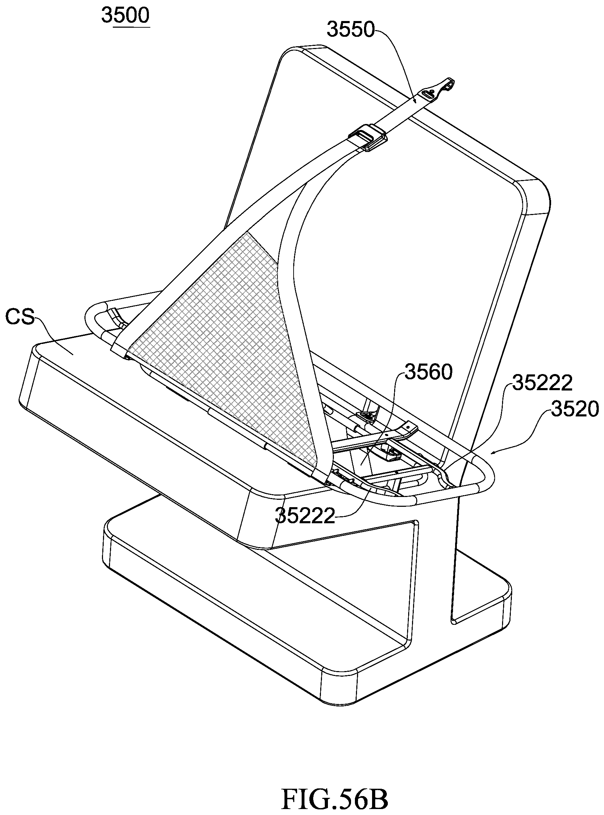

Referring to FIGS. 56A and 56B, which are schematic diagrams of the structure of a carrier according to a fifth embodiment of the sixth aspect of the present disclosure, in this embodiment, the carrier 3500 may have the same structure as the carrier 3300 and 3400, but the difference is that, in this embodiment, a pair of longitudinal rods 35222 in each second bracket of the carrier 3500 are formed as rods with a zigzag form or tapering toward the short side of the carrier, and compared with the previous embodiment, the longitudinal rods 35222 are arranged relatively close to the long side of the carrier. In addition, the carrier 3500 further includes a fixing strap assembly 3550 and a connecting assembly 3560, by which the carrier 3500 is secured to corresponding fixing points of the vehicle seat CS. It should be noted that FIG. 56B omits the carrying portion (e.g., composed of a supporting plate) and the restraining apparatus of the carrier for the sake of clarity of the drawings and ease of illustration.

In this embodiment, the fixing strap assembly 3550 may be, for example, an upper fixing strap assembly (Top Tether), and the connecting assembly 3560 may be, for example, a Lower Anchors Tether for Children (LATCH) system.

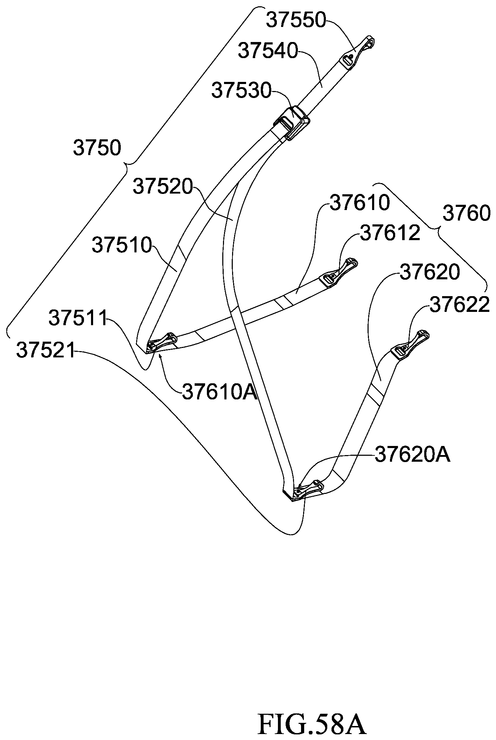

Specifically, as shown in FIGS. 56A and 56B, in this embodiment, the fixing strap assembly 3550 has the same arrangement and structure as the aforementioned fixing strap assembly 3350, that is, it also includes a first tether 35510, a second tether 35520, a length adjuster 35530, a connecting tether 35540, a fixing hook member 35550, a supporting structure 35560 and a hook member (not shown in the drawings), etc. The carrier 3500 is fixed to a corresponding fixing point (not shown) at the upper side of the rear seat of the vehicle or over the seat to the rear bottom as an anchor point by the fixing hook member 35550 of the fixing strap assembly 3550. In addition to the fixing strap assembly 3550, the carrier 3500 is further connected to the fixing points of the vehicle seat CS by connectors of the connecting assembly 3560. With respect to the setting of the connecting assembly and the manner in which it fits with the carrier and the fixing strap assembly of the present disclosure will be further described below with reference to FIGS. 57A to 57C and FIGS. 58A to 58C.

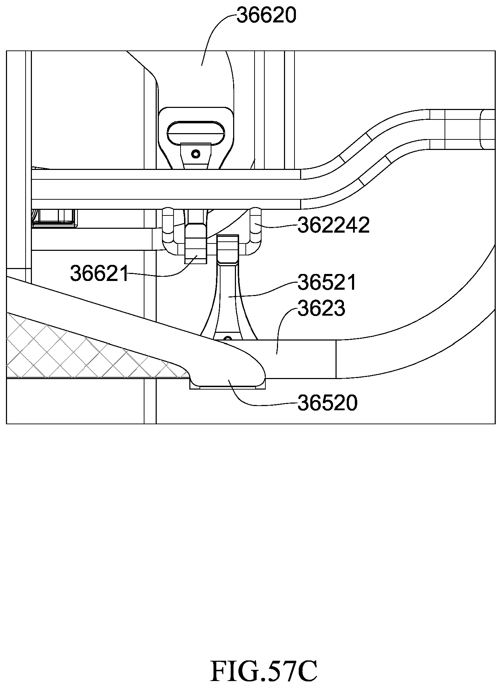

Referring to FIGS. 57A to 57C, schematic structural diagrams of a carrier according to a sixth embodiment of the sixth aspect of the present disclosure are illustrated, where FIG. 57A illustrates a fixing strap assembly and a connecting assembly according to this embodiment, and FIGS. 57B and 57C illustrate configurations of the fixing strap assembly and the connecting assembly in the carrier of the present disclosure. The body of the carrier 3600 of this embodiment has the same structure as that of the aforementioned carrier 3500, including: a carrying portion (e.g., composed of a supporting plate), a bracket apparatus 3620 and the structures thereof, a zigzag or tapered structure of a longitudinal rod 36222, and a restraining apparatus, etc. The difference is that in this embodiment, the carrier 3600 further includes a fixing strap assembly 3650 and a connecting assembly 3660, and is fixed to the corresponding fixing points of the vehicle seat CS by the fixing strap assembly 3650 and the connecting assembly 3660. In addition, in this embodiment, the fixing strap assembly 3650 and the connecting assembly 3660 are two assemblies separated from each other, and are respectively connected to the bracket apparatus 3620 of the carrier 3600 by their respective hook members or fasteners.

To be specific, as shown in FIG. 57A , the fixing strap assembly 3650 has the same composition and configuration as the aforementioned fixing strap assemblies 3350 and 3550, namely, the fixing strap assembly 3650 includes: a first strap 36510, a second strap 36520, a length adjuster 36530 and a connecting tether 36540. One end of each of the first tether 36510 and the second tether 36520 is connected with a hook member 36511, 36521; the other end of each of the first strap 36510 and the second strap 36520 is connected to the same side of the length adjuster 36530. One end of the connecting tether 36540 of the fixing strap assembly 3650 extends through the other side of the length adjuster 36530 to form an adjusting end (not shown in the drawings). The opposite end of the adjusting end is connected with a fixing hook member 36550 for being fixed to a corresponding fixing point (not shown in the drawings) at the upper side of the rear seat of the vehicle or over the seat to the rear bottom as an anchor point. Optionally, the fixing strap assembly 3650 may further include a supporting structure 36560 (shown in FIG. 57B) connected between the first tether 36510 and the second tether 36520, such as a supporting mesh, thereby protecting the animal from being injured due to changes in vehicle speed or even in the event of impact to the vehicle, and allowing the driver or caregiver to observe the real-time situation of the animal on the vehicle 3600 in a timely manner. In addition, the connecting assembly 3660 mainly includes two connecting webbing strap 36610, 36620, each of which is provided with a respective first connecting member 36611, 36621 at one end as the connecting end, and each of which is provided with a respective second connecting member 36612, 36622 at the other end as a fixing end.

As shown in FIG. 57B and FIG. 57C, in this embodiment, the carrier 3600 is horizontally placed on the vehicle seat CS and presses against the seat backrest in the direction of the long side of the carrier portion thereof (i.e., the long side of the first bracket 36211). The fixing ends of the connecting webbing straps 36610, 36620 of the connecting assembly 3660 are connected to the fixing points (not shown in the drawings) between the vehicle seat and the seat backrest by means of their respective second connecting members 36612, 36622. The connecting webbing straps 36610, 36620 extend along the transverse direction D32 underneath the bracket apparatus 3620 (specifically, underneath the long side 36211 of the first bracket and the third bracket 3623), and are hooked at their connecting ends to the corresponding connecting portions 362241, 362242 of the second bracket with their respective first connecting members 36611, 36621. The first tether 36510 and the second tether 36520 of the fixing strap assembly 3650 are connected to the corresponding hooking portions 362241 and 362242 at their connecting ends with their respective hook members 36511 and 36521, and then extend upward and further extend toward the seat backrest or the rear of the seat. In this embodiment, a pair of longitudinal rods 36222 of the respective second bracket are provided relatively close to the long side of the carrier, so as to facilitate the user to hook and fix the hook members 36511, 36521 to the corresponding connecting portions 362241, 362242. Besides, since the longitudinal rod 36222 is formed as a rod with a zigzag form or tapering toward the short side of the carrier, the connections of the longitudinal rod 36222 to the corresponding short sides 36212 and 36214 of the first bracket are not affected. The fixing strap assembly 3650 is fixed to a corresponding fixing point (not shown in the drawings) at the upper side of the rear seat of the vehicle or over the seat to the rear bottom as an anchor point through the fixing hook member 36550. In this embodiment, the two second connecting members 36612 and 36622 of the connecting assembly 3660 are fixed to the vehicle seat to form fixing points, and a fixing point is formed by fixing the hook member 36550 to the upper side, or rear bottom of the rear seat of the vehicle. By coordinating the adjustment of the overall length and tightness of the fixing strap assembly 3650 (for example, using the length adjuster 36530 to adjust the length of the connecting tether 36540 or the first tether 36510, the second tether 36520), and the adjustment of the length and tightness of the connecting webbing straps 36610, 36620 of the connecting assembly 3660 (for example, the connecting assembly 3660 further includes a length adjuster, which may adaptively adjust the length of the connecting webbing straps 36610, 36620), the bracket apparatus 3620 can be effectively fixed and tightened, so that the carrier 3600 can be stably secured to the vehicle seat, and the swaying of the carrier 3600 is reduced.

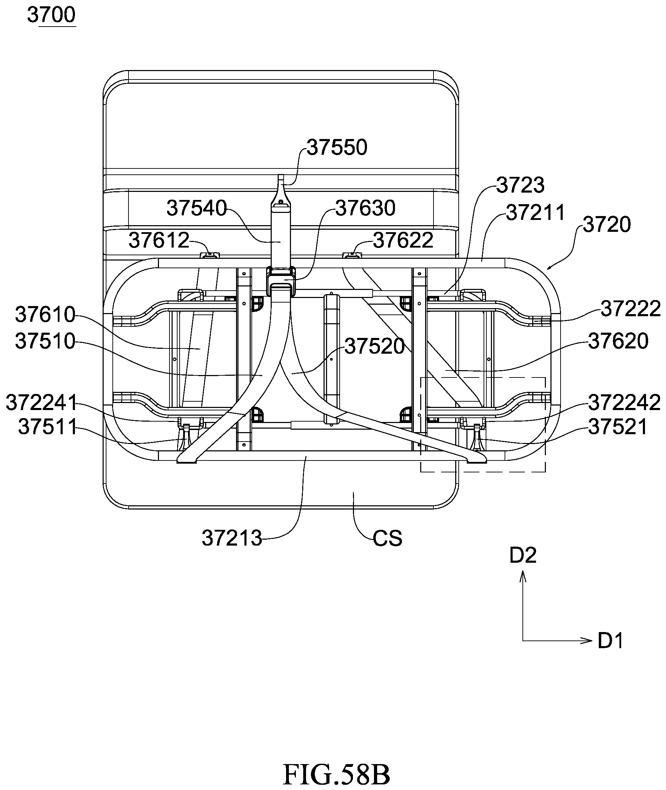

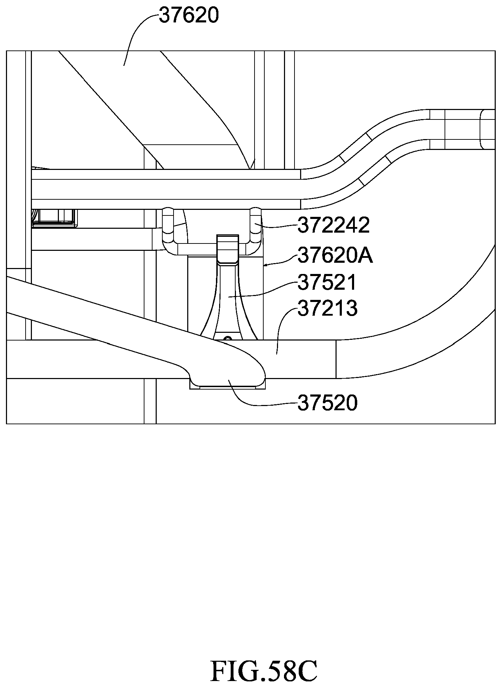

FIGS. 58A to 58C are schematic diagrams of the structure of the carrier according to a seventh embodiment of the sixth aspect of the present disclosure, where FIG. 58A illustrates the fixing strap assembly and the connecting assembly according to this embodiment, and FIGS. 58B and 58C illustrate the configuration of the fixing strap assembly and the connecting assembly in the carrier of the present disclosure. The body of the carrier 3700 of this embodiment has the same structure as that of the aforementioned carrier 3600, including: a carrying portion, a bracket apparatus 3720 and the structures thereof, a zigzag or tapered structure of a longitudinal rod 37222, and a restraining apparatus, etc. The difference is that, in this embodiment, the fixing strap assembly 3750 and the connecting assembly 3760 of the carrier 3700 are inseparable from each other and are formed as an integrated structure.

In detail, as shown in FIG. 58A, the fixing strap assembly 3750 has the same composition and configuration as the aforementioned fixing strap assemblies 3350, 3550, and 3650, namely, it includes: a first tether 37510 and a second tether 37520, a length adjuster 37530 and a connecting tether 37540. One end of each of the first tether 37510 and the second tether 37520 is connected with a hook member 37511, 37521, and the other end of each of the first tether 37510 and the second tether 37520 is connected to the same side of the length adjuster 7530. The connecting tether 37540 of the fixing strap assembly 3750 extends through the other side of the length adjuster 37530 with one end to form an adjusting end (not shown in the drawings), and the opposite end of the adjusting end is connected with a fixing hook member 37550 for being fixed to a corresponding fixing point (not shown in the drawings) at the upper side of the rear seat of the vehicle or over the seat to the rear bottom as an anchor point. Optionally, the fixing strap assembly 3750 may further include a supporting structure (not shown in the drawings) connected between the first tether 37510 and the second tether 37520, such as a supporting mesh, thereby protecting the animal from being injured due to changes in vehicle speed or even in the event of impact to the vehicle, and allowing the driver or caregiver to observe the real-time situation of the animal on the vehicle 3700 in a timely manner.

In this embodiment, the connecting assembly 3760 mainly includes two connecting webbing straps 37610, 37620, each of which is provided with a respective connecting member 37612, 37622 at one end as a fixing end, and the respective other ends 37610A, 37620A are fixedly connected to the connecting ends of the first tether 37510 and second tether 37520 (i.e., the ends with hook members 37511, 37521) of the fixing strap assembly 3750, respectively, by means of e.g., but not limited to, sewing, bonding, or gluing. Thus, the connecting assembly 3760 and the fixing strap assembly 3750 form an integral structure and are inseparable from each other.

As shown in FIG. 58B and FIG. 58C, in this embodiment, the carrier is horizontally placed on the vehicle seat CS and presses against the seat backrest in the direction of the long side of the carrier portion thereof (i.e., the long side of the first bracket 37211). The fixing ends of the connecting webbing straps 37610, 37620 of the connecting assembly 3760 are connected to the fixing points (not shown in the drawings) between the vehicle seat and the seat backrest by means of their respective second connecting members 37612, 37622. The connecting webbing straps 37610, 37620 extend away from the direction of the seat backrest along the transverse direction D32 underneath the bracket apparatus 3620 (specifically, underneath the long side 37211 of the first bracket and the third bracket 3723), and extend through the corresponding connecting portions 372241, 372242 with their ends 37610A, 37620A (see FIG. 58A) connected with the first tether 37510 and the second tether 37520 integrally, so as to be connected to the first tether 37510 and the second tether 37520 of the fixing strap assembly 3750 and press against the long side 37213 of the first bracket. The hook members 37511 and 37521 of the fixing strap assembly 3750 are respectively hooked and connected to the corresponding connecting portions 372241 and 372242. After extending upward, the first tether 37510 and the second tether 37520 (which are respectively fixedly connected to the connecting end 37610A of the connecting webbing strap 37610 and the connecting end 37620A of the connecting webbing strap 37620) further extend toward the seat backrest or the rear of the seat, and are fixed to a corresponding fixing point (not shown in the drawings) at the upper side of the rear seat of the vehicle or over the seat to the rear bottom as an anchor point by means of the fixing hook member 37550 at the distal end of the connecting tether 37540. In this embodiment, the two connecting members 37612 and 37622 of the connecting assembly 3760 are fixed to the vehicle seat to form fixing points, and a fixing point is formed by fixing the hook member 37550 to the upper side, or rear bottom of the rear seat of the vehicle. In conjunction with the adjustment of the overall length and tightness of the fixing strap assembly 3750 (for example, using the length adjuster 37530 to adjust the length of the connecting tether 37540 or the first tether 37510, the second tether 37520), and the adjustment of the length and tightness of the connecting webbing straps 37610, 37620 of the connecting assembly 3760, the bracket apparatus 3720 can be effectively fixed and tightened, so that the carrier 3700 can be stably secured to the vehicle seat, and the swaying of the carrier 3700 is reduced.

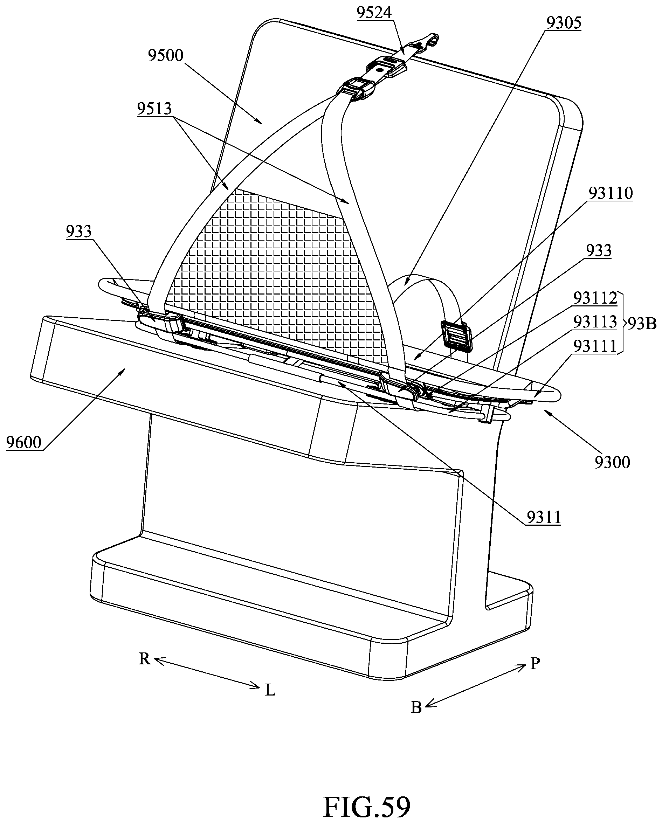

FIG. 59 shows a carrier 9300 and a manner through which it is secured to a vehicle seat 9600 according to a first embodiment of a seventh aspect of the present disclosure. Specifically, as shown in FIG. 59, the carrier 9300 is, for example, a stretcher, and the stretcher has a binding strap 9305 to tie an object to the carrier 9300. The carrier 9300 has a similar structure to the carrier 8300 in the previous embodiment. In addition to being fixed to the vehicle seat 8600 by the fixing seat assembly 8700 and the fixing strap assembly 8500 as shown in FIG. 53, the carrier 9300 may be fixed to the vehicle seat 9600 only by the fixing strap assembly 9500. The carrier 9300, for example, may be provided with the aforementioned strap guiding mechanism 933 or strap guiding mechanisms in other forms.

Referring to FIG. 59, more specifically, the carrier 9300 includes, for example, a bracket apparatus 93B and a carrying surface 93110. The bracket apparatus 93B includes, for example, a first bracket 93111, a second bracket 93112, and a third bracket 93113. The first bracket 93111 and the third bracket 93113 are arranged substantially in parallel and are in annular structures, and the size of the third bracket 93113 may be smaller than that of the first bracket 93111. The first bracket 93111 and the third bracket 93113 are connected by the second bracket 93112, and the second bracket 93112 may have an inclined rod (not shown in the drawings) extending between the first bracket 93111 and the third bracket 93113. The carrying surface 93110 is for example connected to the first bracket 93111, for example for supporting a pet. The carrying surface 93110 is for example made of a rigid material (e.g., a metal plate, a plastic plate) or a flexible material (e.g., canvas) according to actual application requirements. The engaging member 9311 is, for example, formed on the third bracket 93113. Furthermore, the carrier 9300 shown in FIG. 59 may also be provided with a strap guiding mechanism 933 (for example, provided on the inclined rod of the second bracket 93112). For example, after the two second connecting ends (e.g., 7512 shown in FIG. 14B) are connected to the ISOFIX sockets of the vehicle seat, the restraining straps 9513 extend forward from the left and right sides at the bottom of the third bracket 93113 shown in FIG. 59, then being secured to the left and right sides of the carrier 9300 via, for example, two strap guiding mechanisms 933 on the second bracket 93112, the restraining straps 9513 then extend upward and backward, and are finally connected to a suitable structure in the vehicle by a fourth connecting end 9524, so as to fix the carrier 9300 to the vehicle seat 9600.

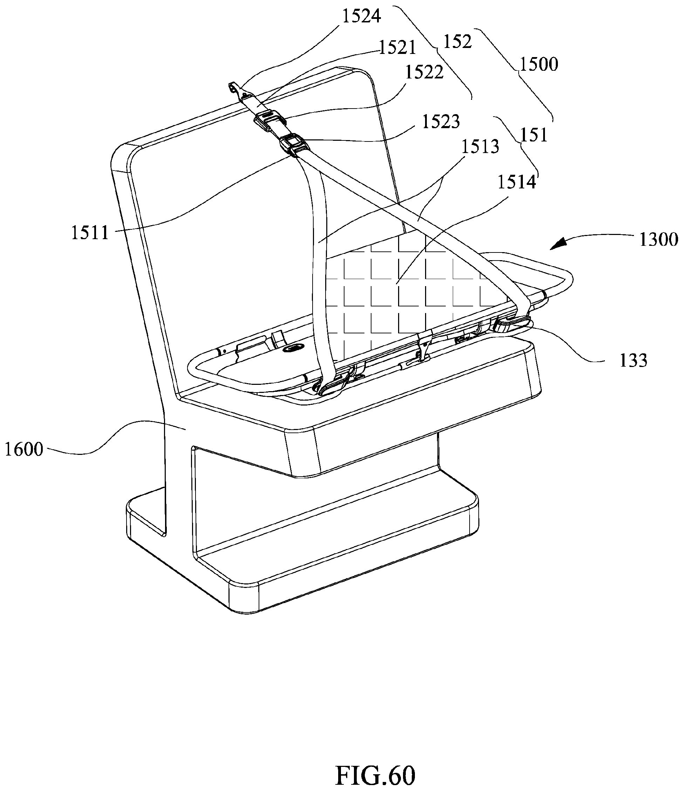

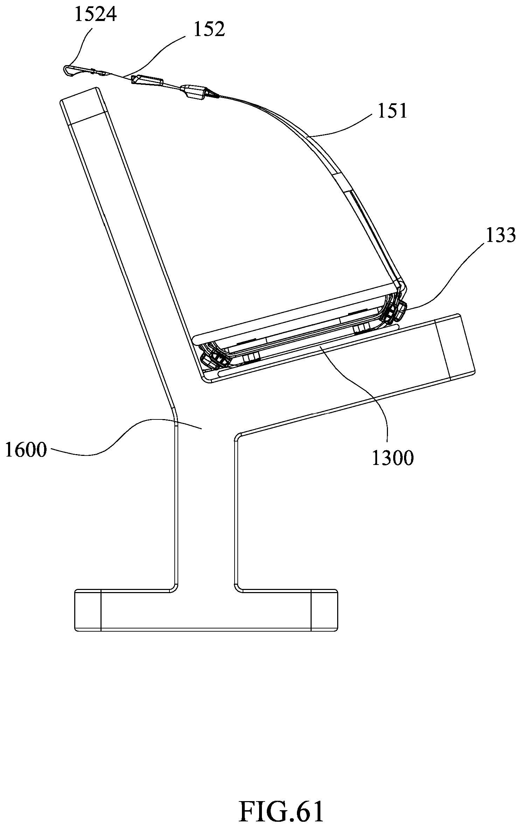

Referring to FIGS. 60 to 63, a carrier according to a second embodiment of the seventh aspect of the present application includes a bracket apparatus 1300 and a plurality of strap guiding mechanisms 133. The plurality of strap guiding mechanisms 133 are provided on the bracket apparatus 1300 and are used to fit with the fixing strap assembly 1500. The fixing strap assembly 1500 passes through the plurality of strap guiding mechanisms 133 and connects the bracket apparatus 1300 and the vehicle seat 1600 in a detachable manner, so as to better secure the bracket apparatus 1300 to the vehicle seat 1600 without easily sliding forward, backward, left or right.

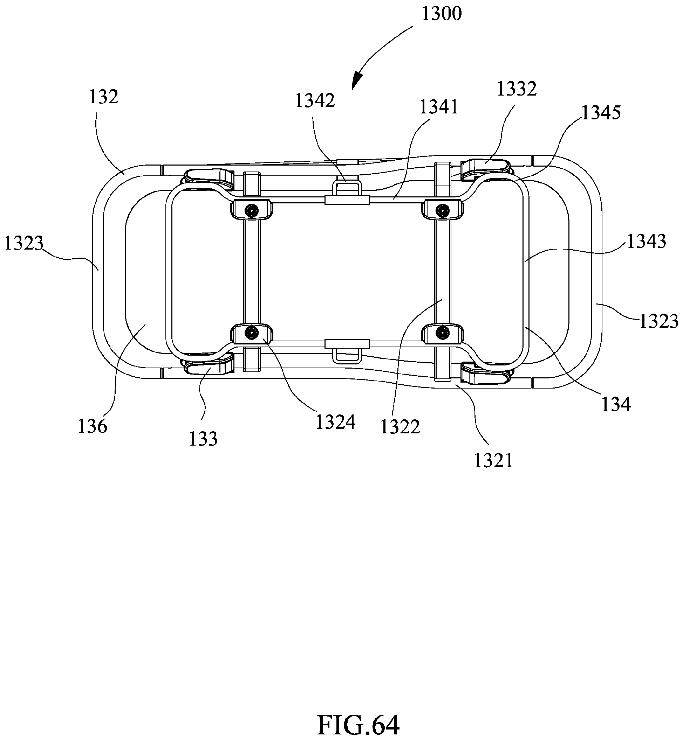

As shown in FIGS. 64 to 65, in this embodiment, the bracket apparatus 1300 can have a structure similar to the stretcher, which includes a first shelf 132, a second shelf 134, and a supporting plate 136 (for example, forming a carrying portion, as a form of the carrying portion) located between the first shelf 132 and the second shelf 134. The first shelf 132 is a substantially annular square frame, which includes two long sides 1321 and two short sides 1323 connected to the two long sides 1321. It should be noted that in this embodiment, the lengths of the two short sides 1323 are not equal. The length of the short side 1323 on the right side in FIG. 64 is slightly greater than the length of the short side 1323 on the left side. Of course, in other embodiments, the lengths of the two short sides 1323 may also be equal. The second shelf 134 is substantially the same in shape as the first shelf 132, but smaller in size than the first shelf 132. Two parallel supporting rods 1322 are provided between the two long sides of the first shelf 132. The supporting plate 136 is a substantially square flat plate, which is fixed to the two supporting rods 1322 by fasteners such as screws. The supporting plate 136 may be made of a rigid material (such as a metal plate, a plastic plate) or a flexible material (such as canvas) according to actual application requirements. Two fixing seats 1324 (also referred to as "fixing assemblies") are respectively provided on each supporting rod 1322. The second shelf 134 includes two long sides 1341 and two short sides 1343. The two long sides 1341 are fixedly connected to the two supporting rods 1322 through the four fixing seats 1324. A fixing ring 1342 (i.e., a hooking portion) is respectively provided in the middle of the two long sides 1341. The second shelf 134 further includes an arc-shaped blocking portion 1345 located between the long side 1341 and the short side 1343. Each blocking portion 1345 is provided corresponding to one strap guiding mechanism 133. The distance between two adjacent blocking portions 1345 is greater than the distance between the two long sides 1341. It should be noted that the "first shelf 132" of this embodiment may also be referred to as a "first bracket", the "supporting rod 1322" may also be referred to as a "second bracket", and the "second shelf 134" may also be referred to as a "third bracket", which may correspond to the "first bracket", "second bracket" and "third bracket" of various embodiments of other aspects below.

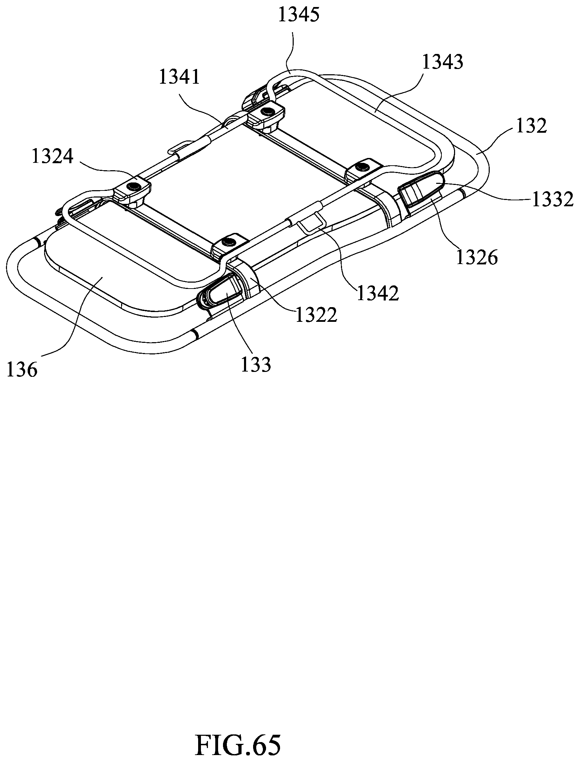

As shown in FIG. 65, at least one symmetrically distributed fixing sheet 1326 is provided on the first shelf 132. Each fixing sheet 1326 is inclined toward the direction close to the second shelf 134. Each strap guiding mechanism 133 is fixed to a fixing sheet 1326 by a fastener such as a screw. Specifically, each fixing sheet 1326 includes an inner side close to the supporting plate 136 and an outer side away from the supporting rod 1322, and each strap guiding mechanism 133 is fixed on the outer side of the fixing sheet 1326. In this embodiment, the number of fixing sheets 1326 is four. It will be appreciated that in other embodiments, the number of fixing sheets 1326 may also be two, three, five, or more. It will be appreciated that in other embodiments, the fixing sheets 1326 may also be provided on the second shelf 134, and in this case, the strap guiding mechanism 133 is also provided on the second shelf 134.

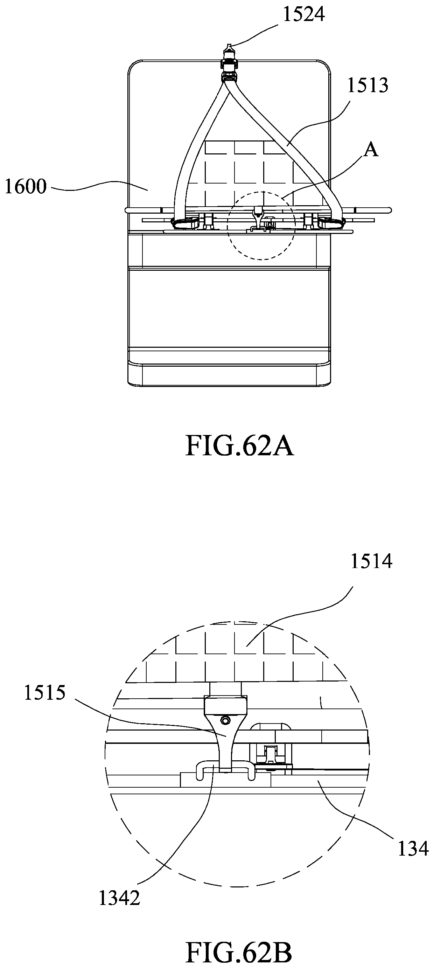

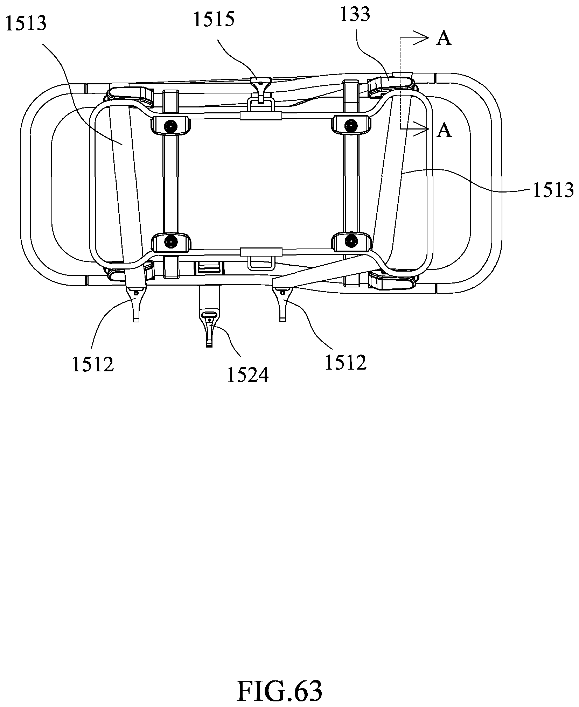

Referring again to FIGS. 60 to 63, the fixing strap assembly 1500 includes, for example, a restraining strap assembly 151 and an extending component 152. The restraining strap assembly 151 includes two restraining straps 1513 and a supporting structure, such as a shielding net 1514, disposed between the two restraining straps 1513, but the present disclosure is not limited thereto. The restraining strap 1513 may be an elastic webbing strap. The restraining strap assembly 151 further includes a first connecting end 1512 (i.e., a fixing end connected to the vehicle seat) located at one end of each restraining strap 1513, a first buckle 1511 connected to the other ends of the two restraining straps 1513, and a second connecting end 1515 located below the shielding net 1514. In this embodiment, the first connecting end 1512 is an ISOFIX insert. Referring to FIG. 63 , the first connecting end 1512 together with the restraining strap 1513 passes around the bottom of the bracket apparatus 1300 and is detachably connected to the ISOFIX socket of the vehicle seat. Of course, the type of the first connecting end 1512 is not limited to the ISOFIX insert, and it may be any suitable structure such as a hook, a buckle, etc. Referring to FIG. 62B, the second connecting end 1515 is substantially a hook, which may be detachably connected to the fixing ring 1342 of the second shelf 134. It may be understood that the number of the restraining strap 1513 may be one or more. The shielding net 1514 and the second connecting end 1515 may also be omitted in some embodiments.

The extending member 152 includes an extending strap 1521, an adjusting portion 1522, a second buckle 1523, and a third connecting end 1524. The extending strap 1521 is, for example, a webbing strap, one end of which is connected to the second buckle 1523. The second buckle 1523 is detachably connected to the first buckle 1511. The adjusting portion 1522 is provided on the extending strap 1521 and is used to adjust the available length of the extending strap 1521. The third connecting end 1524 at the other end of the extending strap 1521 is generally a hook, which may be detachably engaged with a suitable structure of the vehicle seat (such as a connecting rod at the top or the rear side of the backrest of the vehicle seat 1600) to fix the bracket apparatus 1300 to the vehicle seat 1600. It may be understood that in some embodiments, the adjusting portion 1522 may also be omitted.

Optionally, as shown in FIG. 63, the distance between the fixing ends of the two restraining straps 1513 is smaller than the distance between the strap guiding mechanisms 133 (through which the two restraining straps 1513 pass), and the opening of the strap guiding mechanism 133 faces outward, so that the restraining strap 1513 is not easily disengaged from the strap guiding mechanism 133 when being fixed. In addition, referring to FIG. 63 and FIG. 64, the distance between the fixing ends of the two restraining straps 1513 is smaller than the distance between the two restraining straps 1513 when they are wrapped out from an outer side of the first shelf 132 (also referred to as the first bracket). It should be noted that this setting is not limited to this embodiment, and is also applicable to other embodiments of the sixth and seventh aspects of the present disclosure.

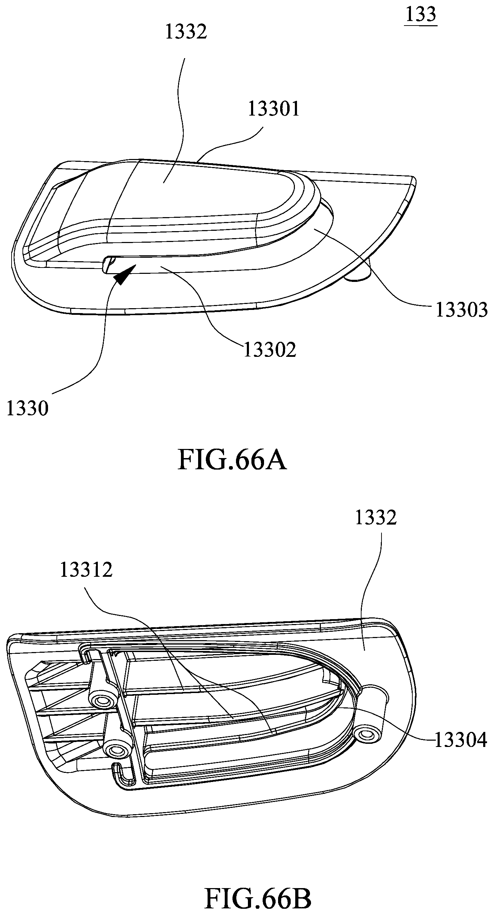

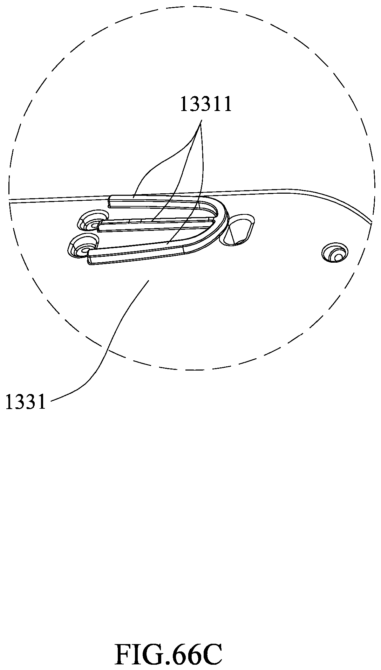

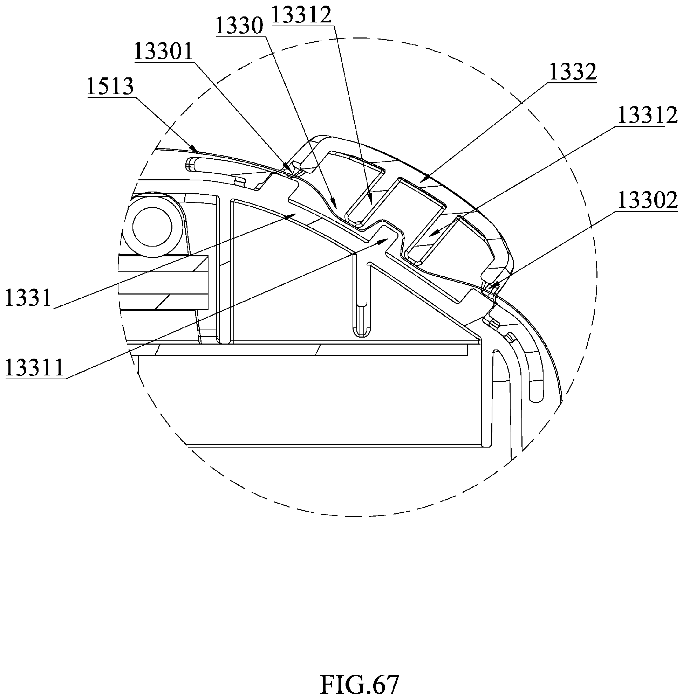

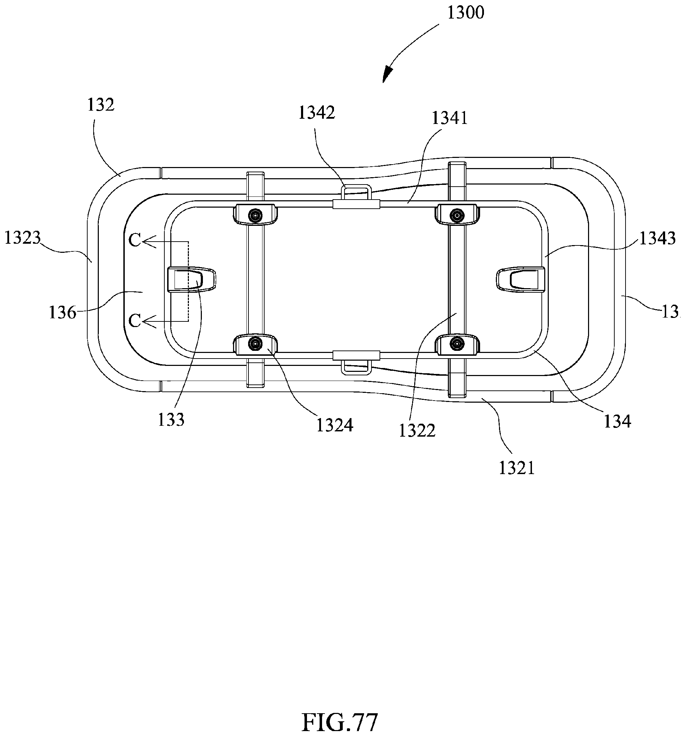

Referring to FIGS. 66A, 66B, 66C and 67, the strap guiding mechanism 133 includes a bottom shell 1331 and a top shell 1332. The bottom shell 1331 may be fixed to the fixing sheet 1326 of the first shelf 132 by means of a screw, etc. The top shell 1332 may be mounted on the bottom shell 1331 by means of a fastener such as a screw, etc. The bottom shell 1331 and the top shell 1332 jointly define a channel 1330 for the restraining strap 1513 of the fixing strap assembly 1500 to pass through. The channel 1330 has a first port 13301 and a second port 13302. When the fixing strap assembly 1500 secures the bracket apparatus 1300 to the vehicle seat 1600, the restraining strap 1513 may pass through the first port 13301 and the second port 13302. Referring to FIG. 66A, in this embodiment, the first port 13301 and the second port 13302 are both provided on the top shell 1332. In some other embodiments, the first port 13301 and the second port 13302 may be, for example, defined by the bottom shell 1331 and the top shell 1332. Referring again to FIGS. 63 to 65 and 66A, the blocking portion 1345 of the second shelf 134 is provided close to the top shell 1332. Therefore, after the restraining strap 1513 passes through the second port 13302, under the blocking effect of the blocking portion 1345, the restraining strap 1513 may only pass through a gap between the second shelf 134 and the supporting plate 136, but may not pass through an outer side of the second shelf 134. It may be understood that in other embodiments, for example, as shown in FIG. 77, the blocking portion 1345 may be omitted, and in this case the restraining strap 1513 may also pass through the outer side of the second shelf 134 away from the supporting plate 136.

Referring to FIG. 66A and FIG. 66B, in some embodiments, the channel 1330 further has a side introduction port 13303, the side introduction port 13303 is connected to the first port 13301 and the second port 13302 at the same time, and the side introduction port 13303 has a guiding slope 13304 (also referred to as a "sloped wall"). By providing the side introduction port 13303 and the guiding slope 13304, the restraining strap 1513 can be easily slid laterally into the channel 1330 from the side.

Referring to FIG. 66B and 66C, the bottom shell 1331 is provided with at least one first convex rib 13311 protruding toward the top shell 1332. The top shell 1332 is provided with at least one second convex rib 13312 protruding toward the bottom shell 1331, and the first convex rib 13311 and the second convex rib 13312 are alternately arranged in an extending direction of the restraining strap 1513. That is, the first convex rib 13311 and the second convex rib 13312 are disposed on side walls opposite to each other in the channel 1330. As shown in FIG. 67, by reasonably setting the heights of the first convex rib 13311 and the second convex rib 13312, the restraining strap 1513 located between the first port 13301 and the second port 13302 is bent in the channel 1330 to pass around the top of the first convex rib 13311 and the top of the second convex rib 13312, so that the restraining strap 1513 will be subject to movement resistance from the first convex rib 13311 and the second convex rib 13312. In this way, when the fixing strap assembly 1500 is tightened, the restraining strap 1513 will not easily slide relative to the bracket apparatus 1300. It may be understood that if the first convex rib 13311 is directly provided on the fixing sheet 1326 of the first shelf 132, the bottom shell 1331 may also be omitted.

Referring to FIGS. 60 to 63, when the above-mentioned carrier is in use, the bracket apparatus 1300 is firstly placed on the vehicle seat 1600, and then the two second connecting ends 1512 are connected to the ISOFIX sockets of the vehicle seat. Afterwards, the two restraining straps 1513 located between the second shelf 134 and the supporting plate 136 are respectively passed through the two strap guiding mechanisms 133 located on two sides of the first shelf 132, and the second connecting end 1515 below the shielding net 1514 is engaged with the fixing ring 1342 of the second shelf 134. Next, the third connecting end 1524 of the extending component 152 is engaged with the connecting rod at the top or rear side of the backrest of the vehicle seat 1600, and finally the tops of the two restraining straps 1513 are engaged with the second buckle 1523 of the extending component 152, so that the bracket apparatus 1300 is secured more firmly to the vehicle seat 1600.

In this embodiment, the number of the strap guiding mechanisms 133 is four. As shown in FIG. 63, the two restraining straps 1513 may pass through the two strap guiding mechanisms 133 located on one side of the bracket apparatus 1300, respectively. Alternatively, one restraining strap 1513 passes through two strap guiding mechanisms 133, and the other restraining strap 1513 passes through one strap guiding mechanism 133. Alternatively, each restraining strap 1513 passes through only one strap guiding mechanism 133. Alternatively, each restraining strap 1513 passes through both strap guiding mechanisms 133. It may be understood that the number of the strap guiding mechanisms 133 may also be one, two, or more.

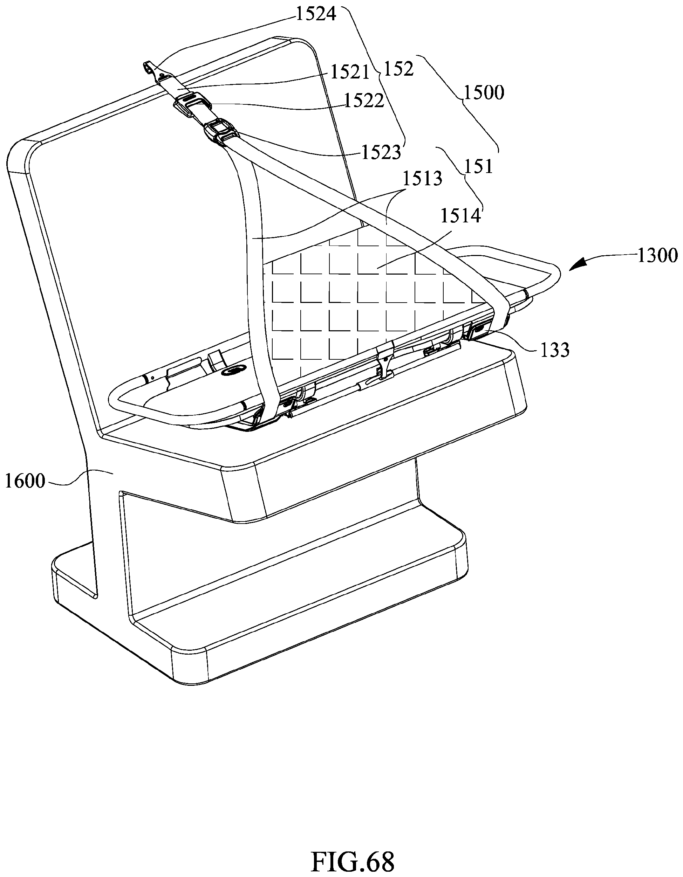

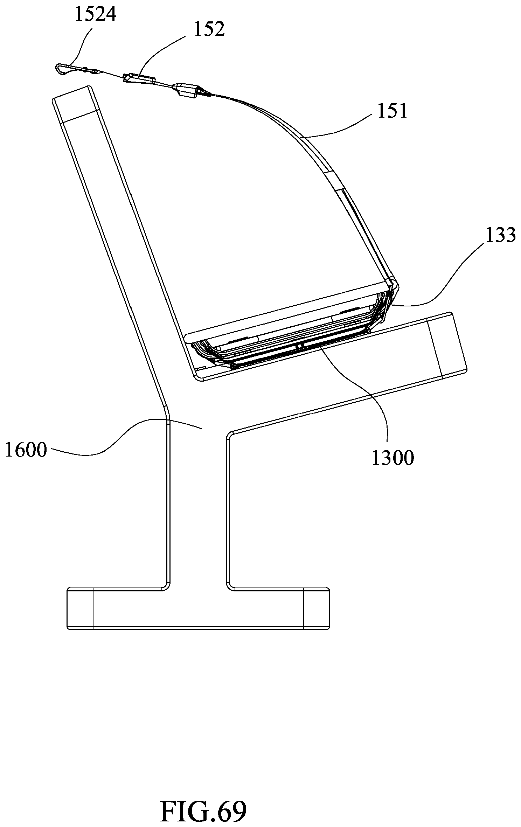

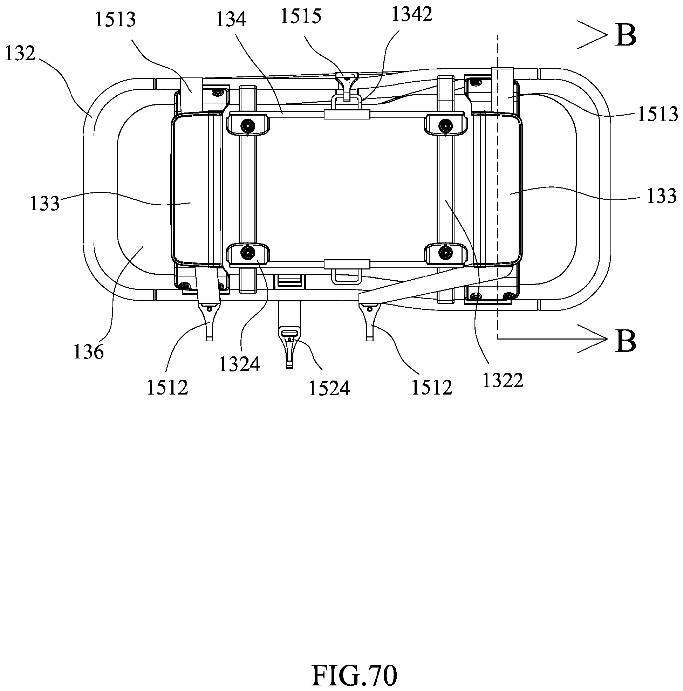

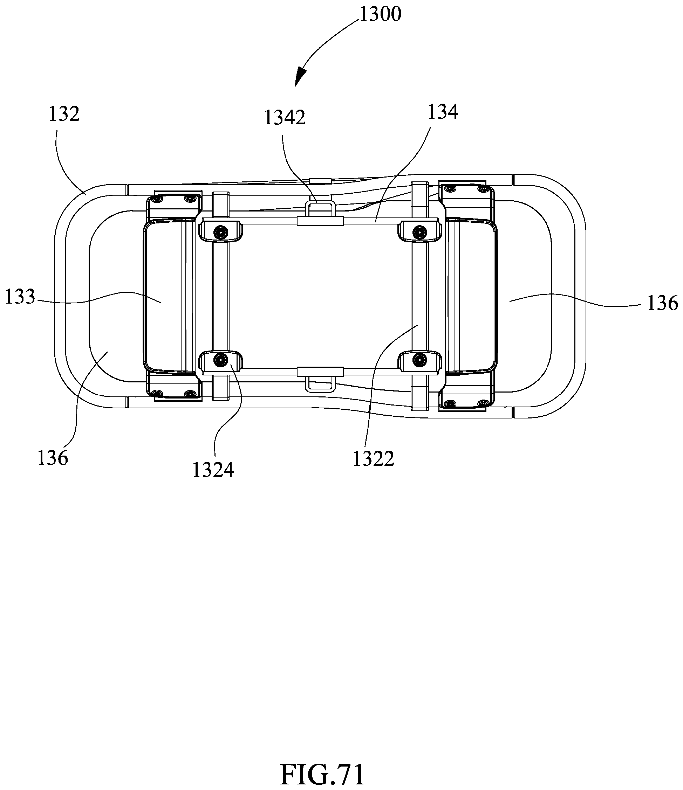

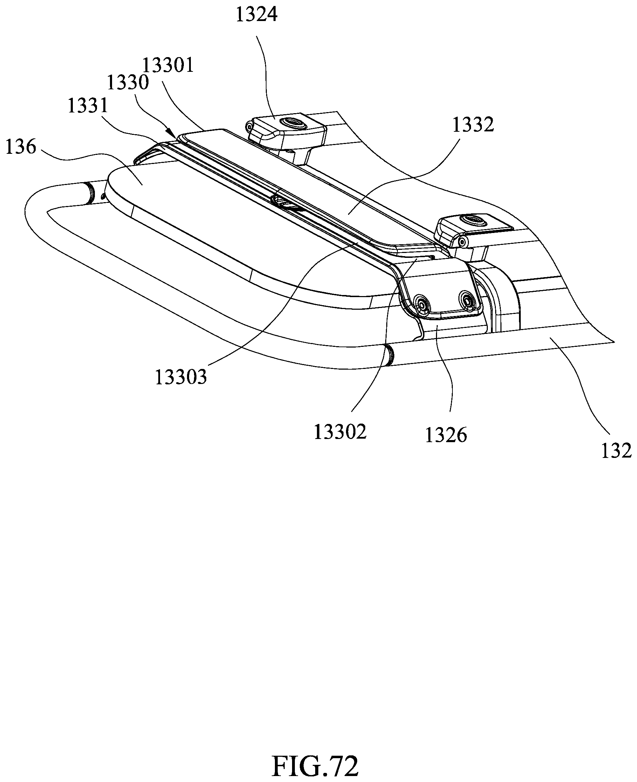

Referring to FIGS. 68 to 70, the carrier according to a third embodiment of the seventh aspect of the present application is similar in structure to the carrier of the second embodiment of the present aspect, including a bracket apparatus 1300, two strap guiding mechanisms 133, and a fixing strap assembly 1500. The main difference is that the structure of the strap guiding mechanism 133 is different. As shown in FIGS. 71 and 72, two parallel supporting rods 1322 are provided between the two long sides of the first shelf 132. Each of the supporting rods 1322 is also provided with two fixing seats 1324, respectively. The second shelf 134 is fixedly connected to the two supporting rods 1322 via the four fixing seats 1324. The second shelf 134 of this embodiment does not include the short side 1343 and the blocking portion 1345 shown in FIG. 65, thus the structure of the second shelf 134 can be simplified. The first shelf 132 is provided with four symmetrically distributed fixing sheets 1326. Each fixing sheet 1326 is inclined toward the direction close to the second shelf 134. The two ends of each belt guide mechanism 133 are respectively arranged on two opposite fixing sheets 1326. The restraining belt 1513 passes through the two strap guiding mechanisms 133, so that there are multiple connecting points between the fixing strap assembly 1500 and the bracket apparatus 1300, so as to better secure the bracket apparatus 1300 to the vehicle seat 1600 without easily sliding forward, backward, left or right.

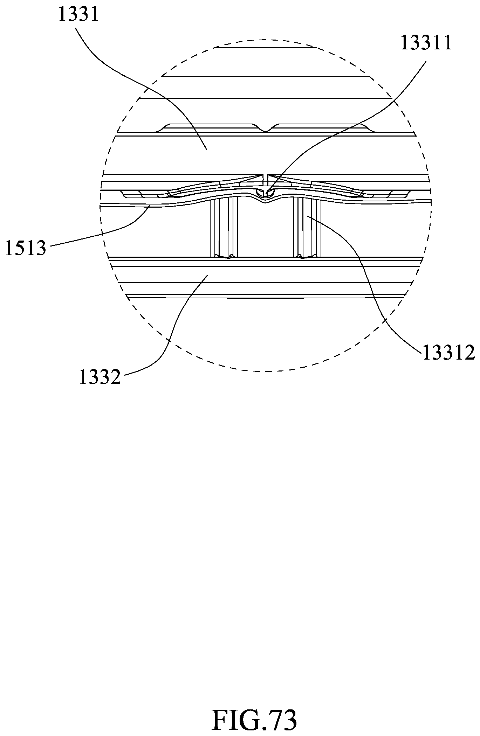

As shown in FIGS. 72 and 73, the strap guiding mechanism 133 includes a bottom shell 1331 and a top shell 1332. The bottom shell 1331 is substantially a U-shaped long plate, and the two ends thereof may be fixedly connected between two fixing sheets 1326 of the first shelf 132, respectively by, for example, screws. The top shell 1332 is generally a long strip plate with an L-shaped cross section, and may be mounted to the bottom shell 1331 by a fastener such as a screw. The bottom shell 1331 and the top shell 1332 define a channel 1330 through which the restraining strap 1513 of the fixing strap assembly 1500 passes. The channel 1330 has a first port 13301 and a second port 13302. When the fixing strap assembly 1500 fixes the bracket apparatus 1300 to the vehicle seat 1600, the restraining strap 1513 may pass through the first port 13301 and the second port 13302. In some embodiments, the channel 1330 further has a side introduction port, where the side introduction port is connected to both the first port and the second port, and the side introduction port 13303 has a guiding slope (not show). By providing the side introduction port 13303 and the guiding slop, the restraining strap 1513 can be easily slid into the channel 1330 from a lateral direction. Compared with the strap guiding mechanism 133 of the ninth embodiment, the channel 1330 of the strap guiding mechanism 133 of the tenth embodiment is longer and has a simpler structure.

Referring to FIG. 73, the bottom shell 1331 is provided with at least one first convex rib 13311 protruding toward the top shell 1332. The top shell 1332 is provided with at least one second convex rib 13312 protruding toward the bottom shell 1331, and the first convex rib 13311 and the second convex rib 13312 are alternately arranged in the extending direction of the restraining strap 1513. That is, the first convex rib 13311 and the second convex rib 13312 are disposed on side walls opposite to each other in the channel 1330. By reasonably setting the heights of the first convex rib 13311 and the second convex rib 13312, the restraining strap 1513 located between the first port 13301 and the second port 13302 is bent in the channel 1330 to pass around the top of the first convex rib 13311 and the top of the second convex rib 13312, so that the restraining strap 1513 would be subject to movement resistance from the first convex rib 13311 and the second convex rib 13312. In this way, when the fixing strap assembly 1500 is tightened, the restraining strap 1513 will not easily slide relative to the bracket apparatus 1300.

Referring to FIGS. 68 to 70, when the above-mentioned carrier is in use, the bracket apparatus 1300 is first placed on the vehicle seat 1600, and then the two second connecting ends 1512 are connected to the ISOFIX sockets of the vehicle seat. Afterwards, the two restraining straps 1513 are respectively passed through the two strap guiding mechanisms 133 located on the first shelf 132, and the second connecting end 1515 below the shielding net 1514 is engaged with the fixing ring 1342 of the second shelf 134. Next, the third connecting end 1524 of the extending component 152 is engaged with the connecting rod at the top or the backrest of the vehicle seat 1600, and finally the tops of the two restraining straps 1513 are engaged with the second buckle 1523 of the extending component 152, so that the bracket apparatus 1300 is secured to the vehicle seat 1600.

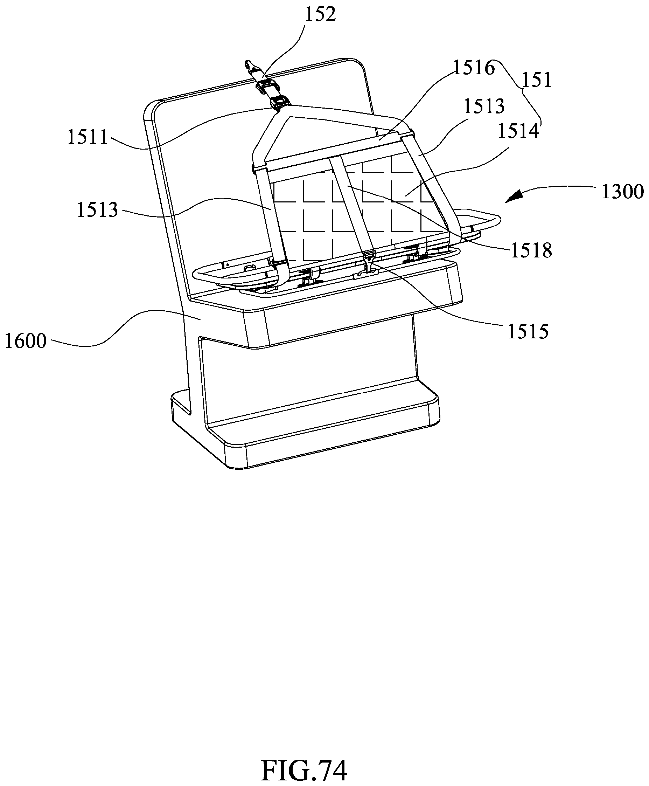

Referring to FIGS. 74 to 76, the carrier according to a fourth embodiment of the seventh aspect of the present application is similar in structure to the carrier according to the second embodiment of the present aspect, and includes a bracket apparatus 1300 and a plurality of strap guiding mechanisms 133. The plurality of strap guiding mechanisms 133 are provided on the bracket apparatus 1300, and are used to fit with the fixing strap assembly 1500. The fixing strap assembly 1500 passes through the plurality of strap guiding mechanisms 133, and connects the bracket apparatus 1300 and the vehicle seat 1600 in a detachable manner, so as to better secure the bracket apparatus 1300 to the vehicle seat 1600 without easily sliding forward, backward, left, or right.

As shown in FIG. 77, in this embodiment, the bracket apparatus 1300 may have a structure similar to a stretcher, including a first shelf 132 (i.e., the "first bracket"), a second shelf 134 (i.e., the "third bracket"), and a supporting plate 136 located between the first shelf 132 and the second shelf 134 (i.e., forming a carrying portion). The first shelf 132 is a substantially annular square frame, which includes two long sides 1321 and two short sides 1323 connected to the two long sides 1321. It should be noted that in this embodiment, the lengths of the two short sides 1323 are not equal. The length of the short side 1323 on the right side in FIG. 77 is slightly greater than the length of the short side 1323 on the left side. Of course, in other embodiments, the lengths of the two short sides 1323 may also be equal. The second shelf 134 is substantially the same in shape as the first shelf 132, but smaller in size than the first shelf 132. Two parallel supporting rods 1322 (also referred to as "second bracket") are provided between two long sides of the first shelf 132. The supporting plate 136 is a substantially square plate, which is fixed to the two supporting rods 1322 by fasteners such as screws. The supporting plate 136 may be made of a rigid material (such as a metal plate, a plastic plate) or a flexible material (such as canvas) according to actual application requirements. Two fixing seats 1324 are respectively disposed on each supporting rod 1322. The second shelf 134 includes two long sides 1341 and two short sides 1343. The two long sides 1341 are fixedly connected to the two supporting rods 1322 via the four fixing seats 1324. A fixing ring 1342 is further provided in the middle of the two long sides 1341 respectively.

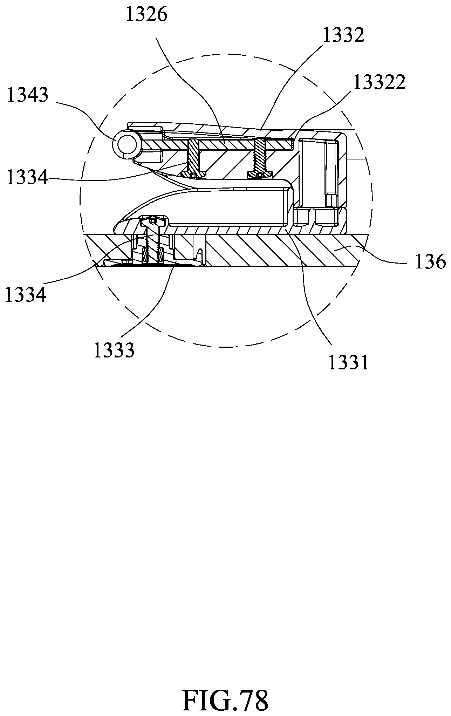

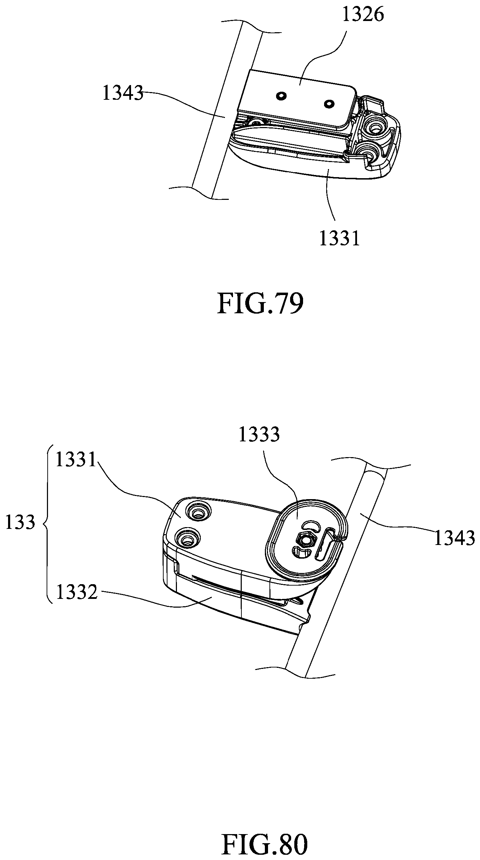

As shown in FIGS. 78 and 79, two fixing sheets 1326 are provided on the second shelf 134. Specifically, the two fixing sheets 1326 may be fixed to the two short sides 1343 of the second shelf 134 by welding or the like, and the two fixing sheets 1326 are arranged opposite to each other. Each strap guiding mechanism 133 is fixed to one fixing sheet 1326 by a fastener such as a screw.

As shown in FIGS. 78 to 80, the strap guiding mechanism 133 includes a bottom shell 1331 and a top shell 1332. The bottom shell 1331 is fixed on the supporting plate 136, and the top shell 1332 is fixed to the second shelf 134. Specifically, the strap guiding mechanism 133 further includes a positioning seat 1333. The positioning seat 1333 is embedded in the supporting plate 136. The bottom shell 1331 may be fixed to the positioning seat 1333 by, for example, a screw 1334. The top shell 1332 has a receiving groove 13322 for receiving the fixing sheet 1326. The fixing sheet 1326 is inserted into the receiving groove 13322 of the top shell 1332 and fixed to the top shell 1332 by a plurality of screws 1334. The bottom shell 1331 and the top shell 1332 may also be fixedly connected by a plurality of screws. It will be appreciated that in other embodiments, the strap guiding mechanism 133 may also be secured to the supporting plate 136 only by the positioning seat 1333, and the fixing sheet 1326 may also be omitted in this case. Similarly, in other embodiments, the strap guiding mechanism 133 may also be fixed to the second shelf 134 only by the fixing sheet 1326, and the positioning seat 1333 may also be omitted in this case. The other structures of the strap guiding mechanism 133 in this embodiment are similar to the strap guiding mechanism 133 of the ninth embodiment or the tenth embodiment of the sixth aspect mentioned above, and will not be repeated herein.

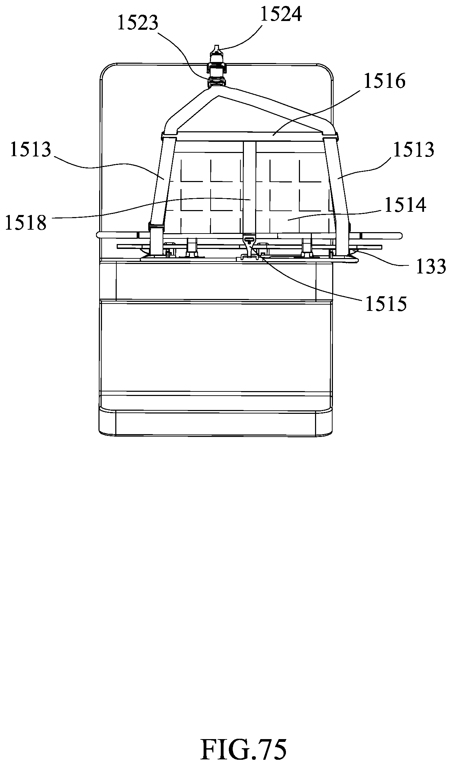

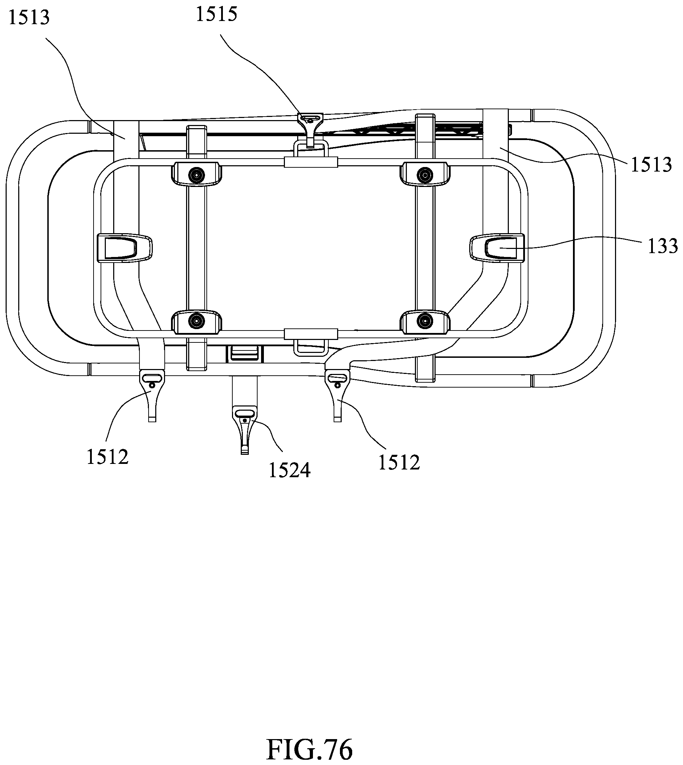

Referring again to FIGS. 74 and 75, the fixing strap assembly 1500 of the fourth embodiment of the seventh aspect of the present application is substantially the same as the fixing strap assembly 1500 of the second and third embodiments, and includes a restraining strap assembly 151 and an extending component 152. The restraining strap assembly 151 includes two restraining straps 1513 and a shielding net 1514 located between the two restraining straps 1513. The restraining strap 1513 may be an elastic webbing strap. The restraining strap assembly 151 further includes a first connecting end 1512 located at one end of each restraining belt 1513 (i.e., a fixing end connected to the vehicle seat), a first buckle 1511 connected to both the other ends of the two restraining straps 1513, and a second connecting end 1515 located below the shielding net 1514. In this embodiment, the first connecting end 1512 is an ISOFIX insert. Referring to FIG. 76, the first connecting ends 1512 together with the restraining belts 1513 pass around the lower side of the bracket apparatus 1300 and are detachably connected to the ISOFIX sockets of the vehicle seat. Of course, the type of the first connecting end 1512 is not limited to the ISOFIX insert, and it may be any suitable structure such as a hook, a buckle, etc. Referring to FIG. 76, the second connecting end 1515 is generally a hook, which may be detachably connected to the fixing ring 1342 of the second shelf 134.

As shown in FIGS. 74 and 75, the difference between the fixing strap assembly 1500 of the second and third embodiments of the present aspect and the fixing strap assembly 1500 of the fourth embodiment is that the fixing strap assembly 1500 of the fourth embodiment further includes a supporting strip 1516 located between the two restraining straps 1513, and a reinforcing strap 1518 provided on the shielding net 1514.

The two ends of the supporting strip 1516 are respectively arranged on the two restraining straps 1513, and the supporting strip 1516 is located on one side of the shielding net 1514. The supporting strip 1516 may be made of plastic or metal. The supporting strip 1516 may be deformed without breaking during an impact, and prevents the baby or pet from being injured during the impact. In the present embodiment, one supporting strip 1516 is provided on the upper side of the shielding net 1514. It may be understood that in other embodiments, another supporting strip 1516 may be provided on the lower side of the shielding net 1514. The lengths of the supporting strips 1516 on the upper and lower sides of the shielding net 1514 may be equal or unequal. When the lengths of the two supporting strips 1516 are equal, the shape of the shielding net 1514 is a rectangle; when the supporting strip 1516 on the lower side of the shielding net 1514 is slightly longer than the supporting strip 1516 on the upper side of the shielding net 1514, the shape of the shielding net 1514 is a trapezoid.

The reinforcing strap 1518 is located in the middle of the shielding net 1514. The reinforcing strap 1518 is connected to the second connecting end 1515, and its function is to strengthen the strength of a mesh 1514 connected to the second connecting end 1515, and prevent the mesh 1514 near the second connecting end 1515 from being broken due to excessive force when the second connecting end 1515 is connected to the fixing ring 1342. It may be understood that in some embodiments, the reinforcing strap 1518 may also be applied to the shielding net 1514 shown in FIG. 60 or FIG. 68.

Referring to FIGS. 74 to 76, when the above-mentioned carrier is in use, the bracket apparatus 1300 is firstly placed on the vehicle seat 1600, and then the two second connecting ends 1512 are connected to the ISOFIX sockets of the vehicle seat. Afterwards, the two restraining straps 1513 are respectively passed through the two strap guiding mechanisms 133 on the second shelf 134, and the second connecting end 1515 below the shielding net 1514 is engaged with the fixing ring 1342 of the second shelf 134. Next, the third connecting end 1524 of the extending component 152 is engaged with the connecting rod at the top or the rear side of the backrest of the vehicle seat 1600, and finally, the tops of the two restraining straps 1513 are engaged with the second buckle 1523 of the extending component 152, thereby securing the bracket apparatus 1300 to the vehicle seat 1600.

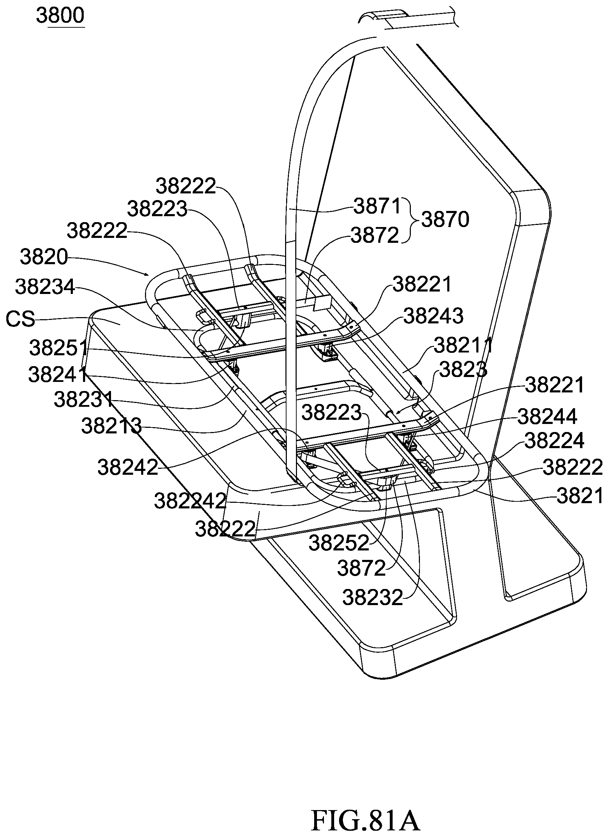

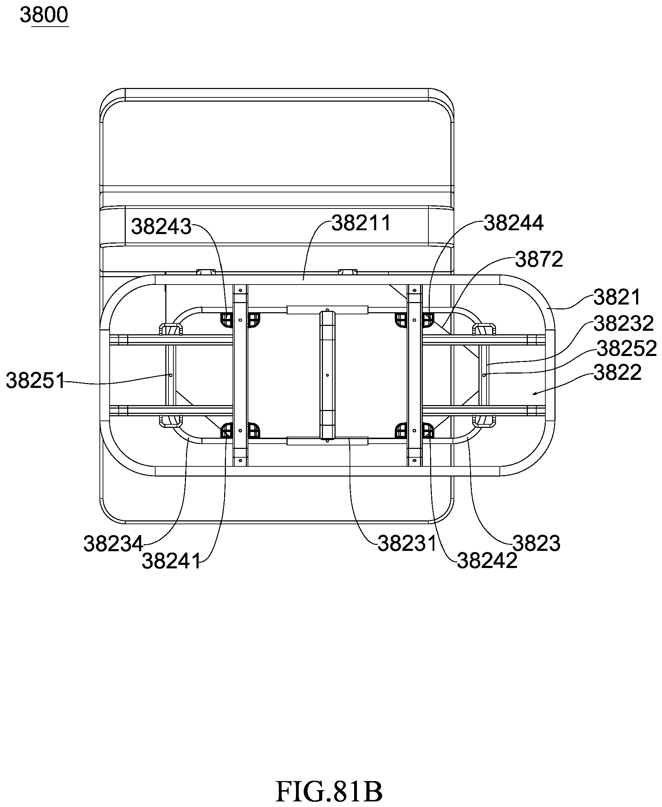

The carrier of the present disclosure may further cooperate with a vehicle seat belt system to enhance the stability of the carrier within the vehicle. Referring to FIG. 81A and FIG. 81B, schematic diagrams of the structure of a carrier according to a first embodiment of the eighth aspect of the present disclosure are illustrated. In this embodiment, the carrier 3800 has a configuration and composition similar to the carriers in the previous embodiments, including: a carrying portion (supporting plate), a bracket apparatus 3820 and components thereof, a restraining apparatus, etc. It should be understood that for the sake of simplicity of the drawings and clear description, the illustration of the carrying portion (supporting plate) has been omitted in the drawings, and only the detailed structure of the bracket apparatus 3820 is shown.

As shown in FIG. 81A, the carrier 3800 is horizontally placed on the vehicle seat CS and presses against the seat backrest in the direction of the long side of the carrier portion thereof (i.e., the long side of the first bracket 38211). In this embodiment, the pulled-out vehicle safety belt (e.g., rear seat safety belt) 3870 may be bonded to the bracket apparatus 3820 of the carrier 3800 to secure the carrier 3800 to the vehicle seat. Specifically, the vehicle safety belt 3870 (which may also be considered as a fixing strap assembly) is generally composed of a shoulder strap 3871 and an abdomen strap (or waist strap) 3872. In this embodiment, the shoulder strap 3871 extends forward (i.e., the travelling direction of vehicle) after being pulled out, turns and extends underneath the first bracket 3821 and the second bracket 3822 after contacting the long side 38213 of the first bracket 3821, and extends further toward the seat backrest by the guidance of the second fixing assembly 38252. As shown in FIGS. 81A and 81B, the abdomen strap 3872 is pulled out between the second bracket 3822 and the third bracket 3823, and is guided by the second fixing assembly 38251 and the first fixing assembly 38241 in sequence to extend from a side near the short side 38234 of the third bracket 3823 to a side near the long side 38231. After extending along the long side 38231, the abdomen strap 3872is guided by the first fixing assembly 38242, the second fixing assembly 38252, and the first fixing assembly 38244 in sequence to extend along a side near the short side 38232 of the third bracket 3823 to a place close to the seat backrest, and is connected together with the shoulder strap 3871 to the safety belt female buckle (not shown) fixed to the seat and fixed at the place. Through the fit between the vehicle safety belt 3870 and the bracket apparatus 3820, the safety belt 3870 contacts various parts of the bracket apparatus 3820 to form a number of supporting points for the bracket apparatus 3820, and the carrier 3800 can be stably secured to the vehicle seat.

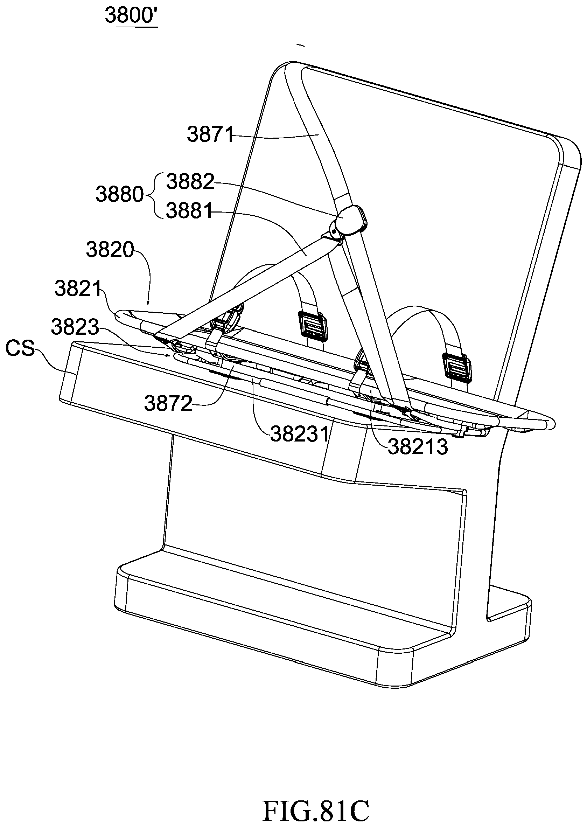

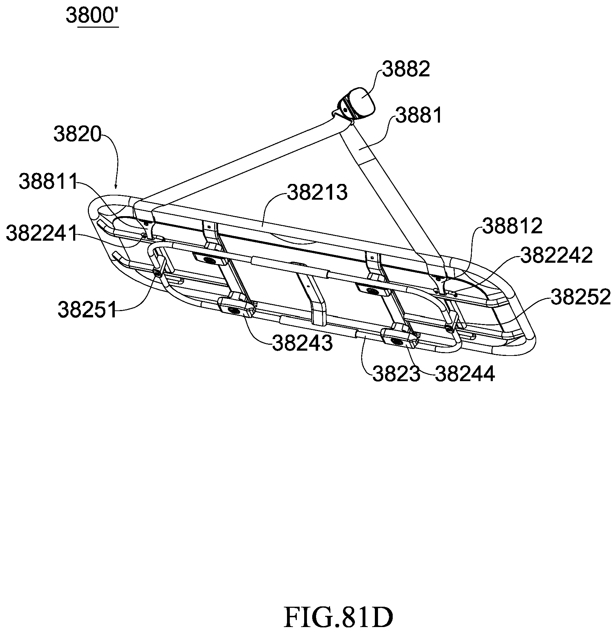

Referring to FIG. 81C and FIG. 81D, schematic structural diagrams of a carrier according to a second embodiment of the eighth aspect of the present disclosure from different viewing angles are illustrated. The carrier 3800' of the present embodiment is a variation of the carrier 3800 of the aforementioned embodiment, and the two have the same configuration and composition. The difference of the present embodiment is that the carrier 3800' further includes a webbing strap supporting assembly 3880, which cooperates with the vehicle safety belt 3870 to allow the shoulder strap 3871 to extend more stably and tighten the bracket apparatus of the carrier, and may cooperate with the bracket apparatus to provide additional supporting points, so that the carrier can be more stably secured to the vehicle seat.

In detail, the webbing supporting assembly 3880 includes a connecting webbing strap 3881 and a guiding clamp 3882. The two ends of the connecting webbing strap 3881 are provided with respective connecting members 38811 and 38812 for being connected to the bracket apparatus 3820. The connecting webbing strap 3881 extends through the steering guiding clamp 3882, thereby turning the extending direction of the connecting webbing strap 3881. The two end portions of the connecting webbing strap 3881 thus may extend in a direction away from the vehicle seat backrest, cross over and abut the long side 38213 of the first bracket 3821, and be connected to the corresponding hook portions 382241, 382242 of the second bracket (close to the long side 38213 of the first bracket, i.e., a side away from the seat backrest) with their respective connecting members 38811, 38812. The guiding clamp 3882 is clamped at a suitable position of the shoulder strap 3871 of the safety belt to adjust the tension of the connecting webbing strap 3881. By adjusting the tension, the connecting webbing strap 3881 can tighten the bracket apparatus 3820 and provide two additional supporting points at the first bracket 3821, thereby further strengthening the carrier's ability to be secured to the vehicle seat.

The present disclosure relates to a carrier. The carrier includes a bracket apparatus and at least one strap guiding mechanism. The at least one strap guiding mechanism is provided on the bracket apparatus and is used to fit with a fixing strap assembly to secure the bracket apparatus to a vehicle seat.

In an embodiment, the strap guiding mechanism includes a bottom shell and a top shell connected to the bottom shell, the bottom shell and the top shell jointly define a channel, and the channel has a first port and a second port for the fixing strap assembly to pass through.

In an embodiment, the channel further has a side introduction port connected to the first port and the second port, and the side introduction port has a guiding slope.

In an embodiment, a first convex rib and a second convex rib are respectively provided on side walls opposite to each other in the channel, and the first convex rib and the second convex rib are alternately provided in the extending direction of the fixing strap assembly.

In an embodiment, the bracket apparatus includes a first shelf and a second shelf, and the strap guiding mechanism is arranged on the first shelf and/or the second shelf.

In an embodiment, the first bracket is provided with a plurality of symmetrically distributed fixing sheets, the carrier includes a plurality of the strap guiding mechanisms, and each strap guiding mechanism is correspondingly provided on one of the fixing sheets.

In an embodiment, the first bracket is provided with a plurality of symmetrically distributed fixing sheets, the carrier includes a plurality of the strap guiding mechanisms, and the two ends of each strap guiding mechanism are respectively provided on two opposite fixing sheets.

In an embodiment, each of the fixing sheets is inclined toward a direction close to the second bracket.

In an embodiment, the fixing strap assembly passes through the strap guiding mechanism, and is detachably connected to the bracket apparatus and the vehicle seat.

In an embodiment, the fixing strap assembly includes a restraining strap assembly and an extending component, the restraining strap assembly includes at least one restraining strap and a first connecting end located at an end of the restraining strap, and the first connecting end is detachably connected to an ISOFIX socket of the vehicle seat.

In an embodiment, the restraining strap assembly includes two restraining straps and a shielding net located between the two restraining straps, where the fixing strap assembly includes a second connecting end connected to the shielding net, the bracket apparatus is provided with a fixing ring, and the second connecting end is detachably connected to the fixing ring.

In an embodiment, the restraining strap assembly further includes a first buckle connected to the both of the restraining straps, the extending component includes an extending strap, a second buckle, and a third connecting end, two ends of the extending strap are respectively connected to the second buckle and the third connecting end, the second buckle is detachably connected to the first buckle, and the third connecting end is detachably connected to the vehicle seat.

In an embodiment, the bracket apparatus includes a first shelf, a second shelf, and a supporting plate located between the first shelf and the second shelf, and a portion of the fixing strap assembly is located between the second shelf and the support plate.

In an embodiment, the second shelf includes a blocking portion corresponding to the strap guiding mechanism, for preventing a portion of the fixing strap assembly from passing through an outer side of the second shelf.

In an embodiment, the bracket apparatus includes a first shelf, a second shelf, and a supporting plate located between the first shelf and the second shelf, and a portion of the fixing strap assembly is located on a side of the second shelf away from the supporting plate.

In an embodiment, the carrier includes four strap guiding mechanisms, and the fixing strap assembly passes through two of the strap guiding mechanisms; or the fixing strap assembly passes through the four strap guiding mechanisms.

In an embodiment, the bracket apparatus includes a first shelf, a second shelf, and a supporting plate located between the first shelf and the second shelf, and the strap guiding mechanism is provided on the second shelf and/or the supporting plate.

In an embodiment, the strap guiding mechanism includes a bottom shell and a top shell connected to the bottom shell, the bottom shell and the top shell jointly define a channel, and the channel has a first port and a second port for the fixing strap assembly to pass through.

In an embodiment, the channel further has a side introduction port connected to the first port and the second port, and the side introduction port has a guiding slope.

In an embodiment, a first convex rib and a second convex rib are respectively provided on side walls opposite to each other in the channel, and the first convex rib and the second convex rib are alternately provided in the extending direction of the fixing strap assembly.

In an embodiment, the bottom shell is fixed on the supporting plate, and the top shell is fixed to the second shelf.

In an embodiment, two opposite fixing sheets are provided on the second bracket, the carrier includes two strap guiding mechanisms, and the top shell of each strap guiding mechanism is fixed to one fixing sheet.

In an embodiment, the strap guiding mechanism further includes a positioning seat penetrating through the supporting plate, and the bottom shell is fixed to the positioning seat.

In an embodiment, the fixing strap assembly passes through the strap guiding mechanism, the fixing strap assembly includes a restraining strap assembly and an extending component, the restraining strap assembly includes at least one restraining strap and a first connecting end located at an end of the restraining strap, and the first connecting end is detachably connected to an ISOFIX socket of the vehicle seat.

In an embodiment, the restraining strap assembly includes two restraining straps and a shielding net located between the two restraining straps, the fixing strap assembly includes a reinforcing strap located on the shielding net and a second connecting end connected to the reinforcing strap, the bracket apparatus is provided with a fixing ring, and the second connecting end is detachably connected to the fixing ring.

In an embodiment, the shielding net is rectangular or trapezoidal.

In an embodiment, the restraining strap assembly includes two restraining straps, a shielding net located between the two restraining straps, and a supporting strip located between the two restraining straps, where the supporting strip is located on one side of the shielding net.

In an embodiment, two ends of the supporting strip are respectively provided with a frame buckle with a middle cross bar for the restraining strap to pass through.

In an embodiment, the shielding net includes a storage portion located at an edge thereof, and the restraining strap and/or the supporting strip are movably extended through the storage portion.

In an embodiment, the carrier further includes a box body, and the box body is provided on the bracket apparatus.

In an embodiment, the bracket apparatus includes a first shelf, the strap guiding mechanism is provided on the first shelf, a fixing block is provided on the first shelf, and the box body is fixedly connected to the fixing block.

In an embodiment, the first shelf is provided with a plurality of symmetrically distributed fixing sheets, the carrier includes a plurality of the strap guiding mechanisms, and each strap guiding mechanism is correspondingly provided on one of the fixing sheets.

In an embodiment, the first shelf is provided with a plurality of symmetrically distributed fixing sheets, the carrier includes a plurality of the strap guiding mechanisms, and the two ends of each strap guiding mechanism are respectively provided on two opposite fixing sheets.

In an embodiment, a locking seat is further provided on the first shelf, a locking groove is provided at the bottom of the box body, and the locking seat is inserted into the locking groove.

In an embodiment, the fixing strap assembly includes a restraining strap assembly and an extending component, the restraining strap assembly includes at least one restraining strap and a first connecting end located at an end of the restraining strap, the restraining strap passess through the strap guiding mechanisms, and the first connecting end is detachably connected to an ISOFIX socket of the vehicle seat.

In an embodiment, a portion of the restraining strap is located on a side of the first shelf away from the box body, or a portion of the restraining strap is located between the first shelf and the box body.

In an embodiment, the carrier includes four strap guiding mechanisms, and the restraining strap passes through two of the strap guiding mechanisms; or the restraining strap passes through the four strap guiding mechanisms.

In an embodiment, the bracket apparatus includes a first shelf, and the strap guiding mechanism is provided on the first shelf and/or the box body.

In an embodiment, the carrier includes two strap guiding mechanisms, which are respectively provided on two opposite sides of the first shelf, the first shelf is provided with two opposite fixing sheets, and the top shell of each strap guiding mechanism is fixed to one fixing sheet.

In an embodiment, a shell of the strap guiding mechanism includes a bottom shell and a top shell connected to the bottom shell, the bottom shell and the top shell jointly define a channel, and the channel has a first port and a second port for the fixing strap assembly to pass through.

In an embodiment, a first convex rib and a second convex rib are respectively provided on side walls opposite to each other in the channel, and the first convex rib and the second convex rib are alternately provided in the extending direction of the fixing strap assembly.

In an embodiment, the strap guiding mechanism includes a bottom shell, a top shell connected to the bottom shell, and a positioning seat, the positioning seat is embedded in the box body, and the bottom shell is fixed to the positioning seat.

In an embodiment, the bracket apparatus includes a canopy frame and a guiding member, an end of the canopy frame is pivotally connected to the guiding member, and the at least one strap guiding mechanism includes a first strap guiding mechanism provided on the guiding member.

In an embodiment, the fixing strap assembly includes a shoulder strap and a waist strap connected to each other, and the first strap guiding mechanism and the guiding member jointly define at least one channel for the shoulder strap to pass through.

In an embodiment, a third convex rib and a fourth convex rib are respectively provided on side walls opposite to each other in the channel, and the third convex rib and the fourth convex rib are alternately provided in an extending direction of the shoulder strap.

In an embodiment, the bracket apparatus includes a first frame and two second frames, the first frame is arranged around a peripheral wall of the box body, the two second frames are connected to the first frame and are provided separately from each other along a longitudinal axis direction of the box body, and the waist strap is wrapped around one side of the two second frames.

In an embodiment, the strap guiding mechanism includes a first strap guiding mechanism and a second strap guiding mechanism provided on the bracket apparatus, the fixing strap assembly includes a shoulder strap and a waist strap connected to each other, the shoulder strap passes through the first strap guiding mechanism, and the waist strap passes through the second strap guiding mechanism.

In an embodiment, the bracket apparatus includes a first shelf, the strap guiding mechanism includes a second strap guiding mechanism provided on the first shelf, and the fixing strap assembly includes a waist strap passing through the second belt guiding mechanism.

In an embodiment, the second strap guiding mechanism includes a bottom shell and a top shell connected to the bottom shell, the bottom shell and the top shell jointly define a channel, and the channel has a first port and a second port for the waist strap to pass through.

In an embodiment, the channel further has a side introduction port connected to the first port and the second port, and the side introduction port has a guiding slope.

In an embodiment, a first convex rib and a second convex rib are respectively provided on side walls opposite to each other in the channel, and the first convex rib and the second convex rib are alternately provided in the extending direction of the waist strap.

The present disclosure further provides a carrier, where the carrier is provided with a strap guiding mechanism, and the strap guiding mechanism is used to guide a webbing strap passing therethrough.

The present disclosure further provides a strap guiding mechanism, the strap guiding mechanism includes a shell, where the housing defines a channel, and the channel has a first port and a second port for the webbing strap to pass through.

In an embodiment, the channel further has a side introduction port, the side introduction port is located on the same side of the first port and the second port, and the side introduction port has a sloped wall.

In an embodiment, a first convex rib and a second convex rib are respectively provided on side walls opposite to each other in the channel, and the first convex rib and the second convex rib are alternately provided in a lengthwise direction of the webbing strap.

In an embodiment, the strap guiding mechanism further includes a cam provided in the channel, the cam has a working position and a disabled position. In the working position, the cam presses the webbing strap against the shell; and in the disabled position, the cam releases pressing on the shell.

In an embodiment, a reinforcing member is provided on the side wall of the channel, and when the cam is in the working position, the fixing strap assembly is adapted to be clamped between the reinforcing member and the cam.

In an embodiment, the strap guiding mechanism further includes an adjusting button, where the adjusting button is connected to the cam to push the cam to rotate between the working position and the disabled position.

In an embodiment, the shell defines a mounting cavity adjacent to the channel, and the adjusting button is mounted in the mounting cavity. The housing defines an operation port for operating the adjusting button.

In one embodiment, the cam has a plurality of teeth for pressing against the webbing strap.

The present disclosure further provides a carrier, where the carrier is equipped with the strap guiding mechanism described in any embodiment of the second aspect.

The present disclosure further provides a carrier. The carrier includes: a carrying portion, which defines a carrying surface for carrying an animal; a bracket apparatus, which includes: a first bracket, which is bonded to the carrying portion and arranged around the periphery of the carrying portion; a second bracket, which is connected to the first bracket and bonded to a bottom surface of the carrying portion with the first bracket, the bottom surface is a surface opposite to the carrying surface, and the second bracket extends from one side of the periphery of the carrying portion through the bottom surface to the other side of the periphery of the carrying portion; a third bracket, which has a shape corresponding to the first bracket and is connected to the second bracket, and the third bracket is used to fit with a base; and a restraining apparatus for restraining the animal on the carrying surface.

In an embodiment, the carrier further includes a fixing strap assembly, which is detachably connected to the carrier and an external fixing point.

In an embodiment, the carrier further includes a webbing support assembly that is detachably connected to the carrier and a vehicle safety belt.

In an embodiment, the carrier cooperates with the vehicle safety belt to be installed in a vehicle, and the vehicle safety belt includes a shoulder strap and an abdomen strap, where a portion of the shoulder strap extends below the first bracket and the second bracket, and the abdomen strap extends between the second bracket and the third bracket to form a plurality of supporting points.

The present disclosure further provides a carrier, where the carrier includes: a box body including a bottom and a peripheral wall connected to the bottom, where the bottom and the peripheral wall surround and define an accommodation space; and a bracket apparatus including: a first bracket bonded to the box body and arranged around the peripheral wall of the box body; and a second bracket connected to the first bracket, where the second bracket is bonded to the box body and extends from one side of the peripheral wall of the box body through the bottom of the box body to the other side of the peripheral wall of the box body.

In an embodiment, the carrier further includes a first shoulder belt connector, which is provided on the first bracket.

In an embodiment, the carrier further includes a shoulder belt for a user to wear, where the shoulder strap includes a belt body and a second shoulder belt connector provided on the belt body and used to be detachably connected to the first shoulder belt connector.

In an embodiment, the carrier further includes a first fixing rope connecting member, which is provided on the first bracket.

In an embodiment, the carrier further includes a fixing rope for cooperating with a vehicle seat, where the fixing rope includes a rope body and a second fixing rope connector provided on the rope body and used to be detachably connected to the first fixing rope connector.

The present disclosure further provides a carrier, the carrier includes: a box body, including a body and a bottom supporting member, where the body is detachably covered on the bottom supporting member, and a bracket apparatus (i.e., a bracket assembly) for fixing the carrier to a moving apparatus, where the box body is placed on the bracket apparatus via the bottom supporting member.

In an embodiment, the bracket apparatus provided at the bottom of the bottom supporting member may be fixed to the engaging portion of the fixing seat assembly installed on the vehicle or the locking mechanism of the seat plate of a wheeled moving apparatus.

In an embodiment, the bottom supporting member is provided with at least one connecting portion fitting with a fixing strap assembly to securing the carrier to a vehicle seat.

Although relative terms such as "above" and "below" are used in this description to describe the relative relationship of one component to another component in the drawings, these terms are used in this description only for convenience, such as describing the direction of the examples described in the accompanying drawings. It may be understood that if the apparatus identified in the drawings were to be turned upside down, the component described as being "above" would become the component described as being "below". Other relative terms, such as "top", "bottom", "left", "right", etc., also have similar meanings. When a structure is "on" another structure, it may mean that the structure is formed integrally on the other structure, or that the structure is "directly" disposed on the other structure, or that the structure is "indirectly" disposed on the other structure through another structure.

In this description, the terms "a/an", "one", "the", "said" and "at least one" are used to indicate the presence of one or more elements/components/etc.; the terms "comprising", "including" and "having" are intended to indicate open-ended inclusion and mean that there may be additional elements/components/etc. in addition to the listed elements/components/etc.; the terms "first", "second", "third", etc. are used merely as markers and not as quantitative limitations on objects thereof.

Unless otherwise limited, all terms used herein, including technical and scientific terms, have the same meaning as those commonly understood by those skilled in the art to which the present disclosure belongs. It should also be understood that terms should be interpreted as having a meaning consistent with their meaning in the context of the relevant art, and will not be interpreted as an idealized or overly formal sense unless explicitly limited herein.

It should be understood that, although the preferred embodiments are shown and described above, the present disclosure is not limited to the above specific embodiments, and various modifications and variations may be made by those skilled in the art without departing from the spirit and scope of the appended claims. Therefore, it should be noted that various modifications and variations cannot be considered to exceed the technical spirit and scope of the present disclosure.

## Claims

1. A carrier, comprising:
a box body, provided with a bottom and a peripheral wall connected to the bottom, wherein the bottom and the peripheral wall define an accommodation space;
a bracket apparatus, supporting the box body, wherein the bracket apparatus comprises a first bracket, wherein the first bracket is bonded to the box body and arranged around the peripheral wall of the box body; and
a strap assembly, comprising a strap body with at least two ends, wherein the at least two ends are detachably connected to the first bracket.

2. The carrier according to claim 1, further comprising:
a first connector, provided on the first bracket, wherein the first connector is detachably connected to a second connector provided correspondingly on the strap body.

3. The carrier according to claim 2,
wherein the strap assembly includes a shoulder belt for a user to wear, a strap body of the shoulder belt has two ends, and the two ends are respectively provided with one second connector; and
wherein the first bracket is provided with two first connectors, which are symmetrically arranged on two opposite short sides of the first bracket and are detachably connected to the second connectors arranged on the two ends, respectively.

4. The carrier according to claim 2,
wherein the strap assembly comprises a fixing rope for fitting with a vehicle seat, and two second connectors are provided on a strap body of the fixing rope; and
wherein the first bracket is provided with two first connectors, which are symmetrically provided on a long side of the first bracket and are detachably connected to the two second connectors of the fixing rope, respectively.

5. The carrier according to claim 4,
wherein the strap body of the fixing rope has two ends, each of which is provided with one second connector.

6. The carrier according to claim 4,
wherein the strap body of the fixing rope is in a Y-shape and has a first end and two second ends, the first end fits with the vehicle seat, and the two second ends are respectively provided with one second connector.

7. The carrier according to any one of claims 2 to 6, wherein one of the first connector and the second connector is a snap ring, and the other of the first connector and the second connector is a snap hook.

8. The carrier according to any one of claims 2 to 6,
wherein the bracket apparatus further comprises: at least two second brackets connected to the first bracket, wherein the at least two second brackets are separated from each other along a longitudinal axis direction of the box body, and the at least two second brackets are bonded to the box body and extend from one side of the peripheral wall of the box body along a transverse axis direction of the box body through the bottom of the box body to another side of the peripheral wall of the box body; and
wherein the first connector is provided at a position of the first bracket adjacent to the second bracket.

9. The carrier according to any one of claims 2 to 6,
wherein a positioning groove is provided on an outer side of the peripheral wall of the box body for accommodating and positioning the first connector to avoid the first connector from moving excessively; and/or
wherein a positioning protrusion is provided on the first bracket for avoiding the first connector from moving excessively.

10. The carrier according to claim 1, wherein at least two ends of the strap body are connected to the first bracket in a wrap-around manner.

11. A carrier, comprising:
a box body, defining an accommodation space;
a bracket apparatus, comprising a first bracket, wherein the first bracket is bonded to the box body and arranged around a peripheral wall of the box body; and
mating parts, symmetrically provided on two opposite sides of the carrier and arranged on the first bracket, for connecting with an adjusting strap assembly,
wherein the adjusting strap assembly comprises a connecting tether and a connecting member provided at one end of the connecting tether, the end of the connecting tether is connected to one of the mating parts via the connecting member, and the other end of the connecting tether is connected to a vehicle seat.

12. The carrier according to claim 11, wherein the mating parts are arranged on two short sides of the carrier, and at least one mating part is provided on each short side.

13. The carrier according to claim 11, wherein the mating parts are arranged on two long sides of the carrier, and at least one mating part is provided on each long side.

14. The carrier according to claim 13, wherein two mating parts are symmetrically provided on each of the long sides with respect to a center line of the long side.

15. The carrier according to claim 14,
wherein when the carrier is positioned with the short side against the vehicle seat, the adjusting strap assembly is connected between a mating part proximate the vehicle seat and the vehicle seat.

16. The carrier according to claim 14,
wherein when the carrier is positioned with the short side against the vehicle seat, one end of the adjusting strap assembly is connected to a mating part away from the vehicle seat, and the other end of the adjusting strap assembly passes between a handle located at the center line and the box body and is connected to the vehicle seat.

17. The carrier according to claim 13,
wherein the carrier comprises a handle, and the mating part is arranged below a pivot axis of the handle; and/or
wherein the mating part is arranged on a center line of the long side.

18. The carrier according to any one of claims 11 to 17, wherein the bracket apparatus further comprises: at least two second brackets connected to the first bracket and are separated from each other along a longitudinal axis direction of the box body, and the at least two second brackets are bonded to the box body and extend from one side of the peripheral wall of the box body along a transverse axis direction of the box body through the bottom of the box body to another side of the peripheral wall of the box body; and
wherein the mating part is provided at a position of the first bracket adjacent to the second bracket.

19. A carrier, comprising:
a box body, defining an accommodation space;
a bracket apparatus, at least partially surrounding and supporting the box body;
a fixing strap assembly comprising a strap body, a first connecting end and a second connecting end, wherein the strap body is connected between the first connecting end and the second connecting end,
when the carrier is placed on a vehicle seat, at least a portion of the strap body passes around a bottom of the box body from a side of the box body away from a backrest of the vehicle seat, and the first connecting end and the second connecting end are respectively connected to the vehicle seat to fix the carrier to the vehicle seat.

20. The carrier according to claim 19, further comprising:
at least one strap guiding mechanism, provided on the bracket apparatus and/or the box body, for the fixing strap assembly to pass through, so that at least one connecting point exists between the fixing strap assembly and the carrier.

21. The carrier according to claim 20,
wherein the bracket apparatus comprises a first bracket and a second bracket, the first bracket is bonded to the box body and arranged around a peripheral wall of the box body, the second bracket is connected to the first bracket and bonded to the box body, and the second bracket extends from one side of the peripheral wall of the box body along a transverse axis direction of the box body through the bottom of the box body to another side of the peripheral wall of the box body; and
wherein when the carrier is placed on the vehicle seat, the at least one strap guiding mechanism is provided on a side of the first bracket away from a backrest of the vehicle seat, and/or the at least one strap guiding mechanism is provided on a side of the second bracket away from the backrest of the vehicle seat.

22. The carrier according to claim 21,
wherein the at least one strap guiding mechanism comprises a fixing buckle, the fixing buckle is a C-shaped structure, and the fixing strap assembly passing through the fixing buckle is constrained in a space formed by the C-shaped structure.

23. The carrier according to claim 22,
wherein the fixing strap assembly has one first connecting end and at least two second connecting ends, a number of the fixing buckles is proportional to a number of the second connecting ends, the first connecting end is connected to the top of the vehicle seat, the strap body passes through the corresponding fixing buckles and passes around the bottom of the box body, and is connected to the vehicle seat via the at least two second connecting ends.

24. The carrier according to claim 23, wherein the strap body of the fixing strap assembly is in an inverted Y shape, and has one first connecting end and two second connecting ends.

25. The carrier according to claim 20, wherein the carrier further comprises a handle and/or a canopy, and the strap guiding mechanism is provided on the handle and/or the canopy.

26. The carrier according to claim 20 or 21,
wherein the bracket apparatus comprises a third bracket, the third bracket is provided at the bottom of the box body and is spaced apart from the box body, and the at least one strap guiding mechanism is provided on the third bracket.

27. The carrier according to claim 26,
wherein the third bracket is provided with a plurality of symmetrically distributed fixing sheets, the carrier comprises a plurality of the strap guiding mechanisms, and each strap guiding mechanism is correspondingly provided on one of the fixing sheets.

28. The carrier according to claim 26,
wherein the third bracket is provided with a plurality of symmetrically distributed fixing sheets, the carrier comprises a plurality of the strap guiding mechanisms, and two ends of each strap guiding mechanism are respectively provided on two opposite fixing sheets.

29. The carrier according to claim 26, wherein the third bracket is further provided with a locking seat, the bottom of the box body is provided with a locking groove, and the locking seat is inserted into the locking groove.

30. The carrier according to claim 26, wherein the fixing strap assembly comprises a restraining strap assembly and an extending component, the restraining strap assembly comprises at least one restraining strap and the first connecting end located at an end of the restraining strap, the restraining strap passes through the strap guiding mechanism, and the first connecting end is detachably connected to an ISOFIX socket of the vehicle seat.

31. The carrier according to claim 30, wherein a portion of the restraining strap is located on a side of the third bracket away from the box body, or a portion of the restraining strap is located between the third bracket and the box body.

32. The carrier according to claim 20, wherein the bracket apparatus comprises a third bracket, the third bracket is provided at the bottom of the box body, and
the strap guiding mechanism is provided on the third bracket and/or the box body.

33. The carrier according to claim 32, comprising two strap guiding mechanisms, wherein the two strap guiding mechanisms are respectively provided on two opposite sides of the third bracket, the third bracket is provided with two opposite fixing sheets, and each strap guiding mechanism is fixed to one fixing sheet.

34. The carrier according to claim 33, wherein each of the strap guiding mechanisms comprises a bottom shell and a top shell, the bottom shell and the top shell are fixedly connected, and the bottom shell is provided on the box body, and wherein the top shell has a receiving groove for receiving the fixing sheet, and the fixing sheet is inserted into the receiving groove of the top shell and fixed to the top shell.

35. The carrier according to claim 20, wherein the bracket apparatus comprises a canopy frame and a guiding member, the canopy frame supports a canopy covered above the box body, and an end of the canopy frame is pivotally connected to the guiding member, and the at least one strap guiding mechanism comprises a first strap guiding mechanism provided on the guiding member.

36. The carrier according to claim 35, wherein the fixing strap assembly comprises a shoulder strap and a waist strap connected to each other, and the first strap guiding mechanism and the guiding member jointly define at least one channel for the shoulder strap to pass through.

37. The carrier according to claim 36, wherein a third convex rib and a fourth convex rib are respectively provided on side walls opposite to each other in the channel, and the third convex rib and the fourth convex rib are alternately provided in an extending direction of the shoulder strap.

38. The carrier according to claim 36, wherein the bracket apparatus comprises a first bracket and two second brackets, the first bracket is arranged around a peripheral wall of the box body, the two second brackets are connected to the first bracket and are provided separately from each other along a longitudinal axis direction of the box body, and the waist strap is wrapped around one side of the two second brackets.

39. The carrier according to claim 20, wherein the strap guiding mechanism comprises a first strap guiding mechanism and a second strap guiding mechanism provided on the bracket apparatus, the fixing strap assembly comprises a shoulder strap and a waist strap connected to each other, and the shoulder strap passes through the first strap guiding mechanism, and/or the waist strap passes through the second strap guiding mechanism.

40. The carrier according to claim 20 or 39, wherein the bracket apparatus comprises a third bracket, the third bracket is provided at the bottom of the box body and is spaced apart from the box body, the at least one strap guiding mechanism comprises a second strap guiding mechanism provided on the third bracket, and the fixing strap assembly comprises a waist strap extending through the second strap guide mechanism.

41. A carrier, comprising:
a box body, comprising a body and a bottom supporting member, wherein the body is detachably covered on the bottom supporting member, the bottom supporting member is provided with at least one connecting portion that fits with a fixing strap assembly to secure the carrier to a vehicle seat, and wherein
the at least one connecting portion is provided at an outward circumference on two sides of the bottom supporting member.

42. The carrier according to claim 41, wherein the carrier further comprises:
a bracket apparatus, provided below the bottom supporting member, wherein the box body is disposed on the bracket apparatus via the bottom supporting member, and the bracket apparatus is capable of engaging with an engaging portion of a fixing seat assembly mounted to a vehicle.

43. The carrier according to claim 41, wherein
the bottom supporting member has a recess portion at the at least one connecting portion, and the at least one connecting portion has an engaging rod, and the engaging rod is located in the recess portion.

44. The carrier according to any one of claims 41 to 43,
wherein when the carrier is secured to the vehicle seat, one end of the fixing strap assembly is connected to the at least one connecting portion of the bottom supporting member from a side of the box body away from a backrest of the vehicle seat, and the other end of the fixing strap assembly passes through a handle provided on the top of the carrier and is connected to the vehicle seat.

45. The carrier according to claim 44,
wherein a bottom of the carrier is further provided with a fixing seat assembly, and the fixing seat assembly is secured to the vehicle seat; or
wherein the bottom of the carrier is further provided with a connecting assembly, one end of the connecting assembly is connected to the carrier, and the other end of the connecting assembly is connected to the vehicle seat.

46. A carrier, comprising:
a box body, comprising a body and a bottom supporting member, wherein the body is detachably covered on the bottom supporting member; and
at least one strap guiding mechanism, provided on at least one of the side, bottom and top of the carrier, for guiding a fixing strap assembly passing through the at least one strap guiding mechanism, so that the fixing strap assembly is bonded to the carrier at at least one position.

47. The carrier according to claim 46, wherein the at least one strap guiding mechanism comprises a plurality of second strap guiding mechanisms symmetrically provided at the bottom of the carrier, each of the second strap guiding mechanisms includes a shell, the shell defines a channel for the fixing strap assembly to pass through, and the channel has a first port and a second port.

48. The carrier according to claim 47, wherein the plurality of the second strap guiding mechanisms are symmetrically provided at a bottom edge of the carrier at a side away from a backrest of a vehicle seat; and/or the plurality of second strap guiding mechanisms comprise four second strap guiding mechanisms symmetrically arranged in pairs at the bottom of the carrier.

49. The carrier of claim 48, wherein the fixing strap assembly passes through the first port and the second port when the fixing strap assembly secures the carrier to the vehicle seat.

50. The carrier according to any one of claims 47 to 49, wherein the shell of the second strap guiding mechanism comprises a bottom shell and a top shell connected to the bottom shell, and the bottom shell and the top shell define the channel.

51. The carrier according to claim 50, wherein the channel further comprises a side introduction port connected to the first port and the second port, and the side introduction port comprises a guiding slope.

52. The carrier according to claim 50, wherein a first convex rib and a second convex rib are respectively provided on side walls opposite to each other in the channel, and the first convex rib and the second convex rib are alternately provided in an extending direction of the fixing strap assembly.

53. The carrier according to claim 50, wherein the second strap guiding mechanism further comprises a cam provided in the channel, and the cam has a working position and a disabled position,
wherein in the working position, the cam presses the fixing strap assembly against the side wall of the channel; and
wherein in the disabled position, the cam releases pressing on the fixing strap assembly, and the fixing strap assembly is able to move freely relative to the strap guiding mechanism.

54. The carrier according to any one of claims 46 to 49, wherein the at least one strap guiding mechanism comprises a first strap guiding mechanism provided on the side and/or the top of the carrier, and the first strap guiding mechanism is constructed as a C-shaped structure with an opening.

55. The carrier according to claim 54, wherein the fixing strap assembly is engaged in an accommodation space of the C-shaped structure to limit a relative movement of the fixing strap assembly and the carrier in the left-right direction of the vehicle seat.

56. The carrier according to claim 55,
wherein one end of the fixing strap assembly is connected to the vehicle seat above the carrier, and the other end of the fixing strap assembly is connected to the vehicle seat below the carrier, and
wherein when the carrier is placed on the vehicle seat, the fixing strap assembly passes through a handle provided on the top of the carrier, wraps around to a side of the carrier away from a backrest of the vehicle seat, and passes through the first strap guiding mechanism and/or a second strap guiding mechanism symmetrically provided at the bottom of the carrier.

57. A carrier, comprising:
a carrying portion defining a carrying surface; and
a bracket apparatus, provided on a bottom surface of the carrying portion to support the carrying portion, wherein the bottom surface is a surface opposite to the carrying surface;
wherein the carrier is secured to the vehicle seat via a fixing strap assembly, and the fixing strap assembly is detachably connected to the bracket apparatus from a side of the carrier away from a backrest of a vehicle seat.

58. The carrier according to claim 57, wherein the fixing strap assembly comprises a first tether and a second tether, and one end of each of the first tether and the second tether is detachably connected to the bracket apparatus from the side of the carrier away from the backrest of the vehicle seat.

59. The carrier according to claim 58, wherein the fixing strap assembly further comprises a connecting tether and a length adjuster, the respective other ends of the first tether and the second tether are connected to a same side of the length adjuster, one end of the connecting tether extends through the other side of the length adjuster to form an adjusting end, and the other end of the connecting tether is fixedly connected to the vehicle seat.

60. The carrier according to claim 58, wherein the fixing strap assembly further comprises a length adjuster, the respective other ends of the first tether and the second tether are connected to respective sides of the length adjuster, and either or both of the first tether or the second tether extend through the length adjuster with the respective other ends to form an adjusting end.

61. The carrier according to any one of claims 57 to 60, wherein the carrier is mounted to a fixing seat assembly by the bracket apparatus for being secured to the vehicle seat.

62. The carrier according to any one of claims 58 or 60, wherein the fixing strap assembly further comprises a supporting structure connected between the first tether and the second tether.

63. The carrier according to any one of claims 57 to 60, wherein the carrier further comprises a connecting assembly passing between a bottom surface of the carrying portion and the vehicle seat, and the connecting assembly is connected between the fixing strap assembly and the vehicle seat.

64. The carrier according to claim 63, wherein the fixing strap assembly and the connecting assembly are arranged separately from each other.

65. The carrier according to claim 64, wherein the connecting assembly comprises two connecting webbing straps, each of the two connecting webbing straps is provided with a first connecting member at one end as a connecting end, and each of the two connecting webbing straps is provided with a second connecting member at the other end as a fixing end,
wherein the fixing ends of the two connecting webbing straps are connected to the vehicle seat via their respective second connecting members, the two connecting webbing straps extend in a transverse direction underneath the bracket apparatus, and are connected to corresponding connecting portions of the bracket apparatus via their respective first connecting members at the connecting ends, and
wherein the first tether and the second tether of the fixing strap assembly are respectively connected to the corresponding connecting portions.

66. The carrier according to claim 63, wherein the fixing strap assembly and the connecting assembly form an integral structure.

67. The carrier according to claim 66, wherein the connecting assembly comprises two connecting webbing straps, each of the two connecting webbing straps is provided with a second connecting member at one end as a fixing end, and the other end of each of the two connecting webbing straps is fixedly connected to the first tether and the second tether of the fixing strap assembly, respectively,
wherein the fixing ends of the two connecting webbing straps are connected to the vehicle seat via their respective second connecting members, and the two connecting webbing straps extend in a transverse direction away from the seat backrest direction underneath the bracket apparatus and ends of the two connecting webbing straps connecting the first tether and the second tether extend through corresponding connecting portions; and
wherein the first tether and the second tether of the fixing strap assembly are respectively connected to the corresponding connecting portions.

68. The carrier according to claim 65 or 67, wherein the bracket apparatus comprises:
a first bracket, bonded to the carrying portion and is arranged around the periphery of the carrying portion; and
a second bracket, connected to the first bracket and bonded to the bottom surface of the carrying portion, wherein the second bracket extends from one side of the periphery of the carrying portion through the bottom surface to the other of the periphery of the carrying portion,
wherein the connecting portions are arranged on the second bracket.

69. The carrier according to claim 57, wherein the bracket apparatus includes:
a first bracket, bonded to the carrying portion and is arranged around the periphery of the carrying portion;
a second bracket, connected to the first bracket and bonded to the bottom surface of the carrying portion, wherein the second bracket extends from one side of the periphery of the carrying portion through the bottom surface to the other side of the periphery of the carrying portion; and
a third bracket, with a shape corresponding to the first bracket and is connected to the second bracket.

70. The carrier according to claim 69,
wherein the fixing strap assembly comprises a vehicle safety strap, wherein the carrier cooperates with the vehicle safety strap to be secured to the vehicle seat, wherein the vehicle safety strap comprises a shoulder strap and an abdomen strap, wherein a portion of the shoulder strap extends underneath the first bracket and the second bracket, and the abdomen strap extends between the second bracket and the third bracket and forms a plurality of supporting points.

71. The carrier according to claim 70, further comprising a webbing supporting assembly that is detachably connected to the carrier and the vehicle safety strap.

72. The carrier according to claim 71, wherein the webbing supporting assembly comprises a connecting webbing strap and a guiding clamp, two ends of the connecting webbing strap are connected to the bracket apparatus, extend through the guiding clamp and are turned by the guiding clamp, and the guiding clamp is clamped on the shoulder strap of the vehicle safety strap to adjust the tension of the connecting webbing strap.

73. A carrier, comprising:
a carrying portion;
a bracket apparatus, bonded to and supporting the carrying portion; and
at least one strap guiding mechanism, provided on the bracket apparatus and used to fit with a fixing strap assembly to secure the bracket apparatus to a vehicle seat.

74. The carrier according to claim 73, wherein the bracket apparatus comprises:
a first bracket in an annular structure;
a second bracket, with two ends connected to the first bracket respectively; and
a third bracket, provided substantially parallel to the first bracket and connected to the bottom of the second bracket,
wherein the strap guiding mechanism is provided on at least one of the first bracket, the second bracket and the third bracket.

75. The carrier according to claim 74, wherein
the first bracket is provided with a plurality of symmetrically distributed fixing sheets, the carrier comprises a plurality of the strap guiding mechanisms, and each strap guiding mechanism is correspondingly provided on one of the fixing sheets.

76. The carrier according to claim 74, wherein the first bracket is provided with a plurality of symmetrically distributed fixing sheets, the carrier comprises a plurality of the strap guiding mechanisms, and the two ends of each strap guiding mechanism are respectively provided on two opposite fixing sheets.

77. The carrier according to claim 75 or 76, wherein each of the fixing sheets is inclined toward a direction close to the third bracket.

78. The vehicle of claim 74, wherein the fixing strap assembly passes through the strap guiding mechanism, and is detachably connected to the bracket apparatus and the vehicle seat.

79. The carrier according to claim 78, wherein the fixing strap assembly comprises a restraining strap assembly and an extending component, the restraining strap assembly comprises at least one restraining strap and a first connecting end located at an end of the restraining strap, and the first connecting end is detachably connected to an ISOFIX socket of the vehicle seat.

80. The carrier according to claim 79, wherein the restraining strap assembly comprises two restraining straps and a shielding net located between the two restraining straps, wherein the fixing strap assembly comprises a second connecting end connected to the shielding net, and wherein the bracket apparatus is provided with a fixing ring, and the second connecting end is detachably connected to the fixing ring.

81. The carrier according to claim 80, wherein the shielding net is rectangular or trapezoidal.

82. The carrier according to claim 79, wherein the restraining strap assembly comprises two restraining straps, a shielding net located between the two restraining straps, and a supporting strip located between the two restraining straps, wherein the supporting strip is located on one side of the shielding net.

83. The carrier according to claim 82, wherein two ends of the supporting strip are respectively provided with a frame buckle with a middle cross bar for the restraining strap to pass through.

84. The carrier according to claim 82, wherein the shielding net comprises a storage portion located at an edge thereof, and the restraining strap and/or the supporting strip are movably extended through the storage portion.

85. The carrier according to claim 79, wherein the restraining strap assembly further comprises a first buckle connected to the both of the restraining straps, the extending component comprises an extending strap, a second buckle, and a third connecting end, two ends of the extending strap are respectively connected to the second buckle and the third connecting end, the second buckle is detachably connected to the first buckle, and the third connecting end is detachably connected to the vehicle seat.

86. The carrier according to claim 75, wherein the bracket apparatus further comprises a supporting plate provided between the first bracket and the third bracket, and the supporting plate constitutes the carrying portion.

87. The carrier of claim 86, wherein a portion of the fixing strap assembly is located between the third bracket and the supporting plate.

88. The carrier according to claim 87, wherein the third bracket comprises a blocking portion corresponding to the strap guiding mechanism, for preventing the portion of the fixing strap assembly from passing through an outer side of the second bracket.

89. The carrier according to claim 86, wherein a portion of the fixing strap assembly is located on a side of the third bracket away from the supporting plate.

90. The carrier according to claim 73, wherein the bracket apparatus comprises:
a first bracket in an annular structure;
a third bracket arranged substantially parallel to the first bracket; and
a supporting plate provided between the first bracket and the third bracket,
wherein the strap guiding mechanism is arranged on the third bracket and/or the supporting plate.

91. The carrier according to claim 90, wherein the strap guiding mechanism comprises a bottom shell and a top shell connected to the bottom shell, the bottom shell and the top shell jointly define a channel, and the channel has a first port and a second port for the fixing strap assembly to pass through.

92. The carrier according to claim 91, wherein the channel further has a side introduction port connected to the first port and the second port, and the side introduction port has a guiding slope.

93. The carrier according to claim 91, wherein a first convex rib and a second convex rib are respectively provided on side walls opposite to each other in the channel, and the first convex rib and the second convex rib are alternately provided in the extending direction of the fixing strap assembly.

94. The carrier according to claim 91, wherein the bottom shell is fixed to the supporting plate, and the top shell is fixed to the third bracket.

95. The carrier according to claim 94, wherein the third bracket is provided with two opposite fixing sheets, the carrier comprises two strap guiding mechanisms, and the top shell of each of the strap guiding mechanisms is fixed to one fixing sheet.

96. The carrier according to claim 94, wherein the strap guiding mechanism further comprises a positioning seat penetrating through the supporting plate, and the bottom shell is fixed to the positioning seat.

97. The carrier according to claim 90, wherein the fixing strap assembly passes through the strap guiding mechanism, the fixing strap assembly comprises a restraining strap assembly and an extending component, the restraining strap assembly comprises at least one restraining strap and a first connecting end located at an end of the restraining strap, and the first connecting end is detachably connected to an ISOFIX socket of the vehicle seat.

98. The carrier according to claim 97, wherein the restraining strap assembly comprises two restraining straps and a shielding net located between the two restraining straps, the fixing strap assembly comprises a reinforcing strap located on the shielding net and a second connecting end connected to the reinforcing strap, the bracket apparatus is provided with a fixing ring, and the second connecting end is detachably connected to the fixing ring.

99. A strap guiding mechanism,
wherein the strap guiding mechanism is provided on a carrier and is used to fit with a fixing strap assembly to secure the carrier to a vehicle seat.

100. The strap guiding mechanism according to claim 99,
wherein the strap guiding mechanism is provided on at least one of the bottom, side and top of the carrier and is constructed into a C-shaped structure with an opening, so that the fixing strap assembly is able to be engaged in a space formed by the C-shaped structure.

101. The strap guiding mechanism according to claim 99, wherein a shell of the strap guiding mechanism comprises a bottom shell and a top shell connected to the bottom shell, the bottom shell and the top shell jointly define a channel, and the channel has a first port and a second port for the fixing strap assembly to pass through.

102. The strap guiding mechanism according to claim 101, wherein the channel further has a side introduction port connected to the first port and the second port, and the side introduction port has a guiding slope.

103. The strap guiding mechanism according to claim 101, wherein a first convex rib and a second convex rib are respectively provided on side walls opposite to each other in the channel, and the first convex rib and the second convex rib are alternately provided in the extending direction of the fixing strap assembly.

104. The strap guiding mechanism according to any one of claims 101 to 103,
wherein the strap guiding mechanism is provided on a bracket apparatus of the carrier,
wherein the bracket apparatus is provided with a plurality of symmetrically distributed fixing sheets, and the bottom shell or the top shell of the strap guiding mechanism is fixedly connected to one of the fixing sheets.

105. The strap guiding mechanism according to any one of claims 101 to 103,
wherein the strap guiding mechanism is provided on a bracket apparatus of the carrier,
wherein the bracket apparatus is provided with a plurality of symmetrically distributed fixing sheets, and two ends of the strap guiding mechanism are respectively provided on two opposite fixing sheets.

106. The strap guiding mechanism according to any one of claims 101 to 103,
wherein the strap guiding mechanism is provided on a bracket apparatus of the carrier, and
wherein the bracket apparatus comprises a first bracket, a third bracket, and a supporting plate located between the first bracket and the third bracket, and the strap guiding mechanism is provided on the third bracket and/or the supporting plate.

107. The strap guiding mechanism according to claim 106, wherein the bottom shell is fixed to the supporting plate, and the top shell is fixed to the third bracket.

108. The strap guiding mechanism according to claim 99,
wherein the carrier comprises a box body, the box body is provided on a bracket apparatus of the carrier,
wherein the bracket apparatus comprises a canopy frame and a guiding member, an end of the canopy frame is pivotally connected to the guiding member, and the strap guiding mechanism is arranged on the guiding member and defines, in conjunction with the guiding member, at least one channel for the fixing strap assembly to pass through.

109. The strap guiding mechanism according to claim 108,
wherein a third convex rib and a fourth convex rib are respectively provided on side walls opposite to each other in the channel, and the third convex rib and the fourth convex rib are alternately provided in the extending direction of the fixing strap assembly.

110. The strap guiding mechanism according to claim 99,
wherein the strap guiding mechanism has a channel for the fixing strap assembly to pass through,
wherein the strap guiding mechanism further comprises a cam provided in the channel, the cam has a working position and a disabled position,
wherein in the working position, the cam presses the fixing strap assembly against a side wall of the channel; and
wherein in the disabled position, the cam releases pressing on the fixing strap assembly, and the fixing strap assembly is able to move freely relative to the strap guiding mechanism.

111. The strap guiding mechanism according to claim 110, wherein the strap guiding mechanism further comprises an adjusting button, wherein the adjusting button is connected to the cam to push the cam to rotate between the working position and the disabled position.

112. The strap guiding mechanism according to claim 111, wherein a shell of the strap guiding mechanism defines a mounting cavity adjacent to the channel, and the adjusting button is mounted in the mounting cavity.

113. The strap guiding mechanism according to any one of claims 110 to 112, wherein a reinforcing member is provided on the side wall of the channel, and when the cam is in the working position, the fixing strap assembly is adapted to be clamped between the reinforcing member and the cam.
